Europäisches Patentamt

European Patent Office

Office européen des brevets

(11) Publication number: **0 024 869**
**B1**

# EUROPEAN PATENT SPECIFICATION

(45) Date of publication of patent specification: **02.01.86**

(51) Int. Cl.⁴: **H 04 N 5/783**

(21) Application number: **80302857.0**

(22) Date of filing: **19.08.80**

(54) **Video signal recording and reproducing apparatus.**

(30) Priority: **21.08.79 JP 106946/79**
**30.04.80 JP 57373/80**

(43) Date of publication of application:
**11.03.81 Bulletin 81/10**

(45) Publication of the grant of the patent:
**02.01.86 Bulletin 86/01**

(84) Designated Contracting States:
**DE FR GB**

(56) References cited:
**AT-B- 357 206**
**DE-A-2 814 082**
**FR-A-2 328 343**
**GB-A-1 530 448**
**GB-A-2 009 562**
**GB-A-2 019 690**

(73) Proprietor: **Matsushita Electric Industrial Co.,
Ltd.**
**1006, Oaza Kadoma**
**Kadoma-shi Osaka-fu, 571 (JP)**

(72) Inventor: **Sekimoto, Kunio**
**7-5, Myokenhigashi-1-chome**
**Katano-shi (JP)**
Inventor: **Shibuya, Mitsugu**
**3-14, Miyukihigashimachi**
**Neyagawa-shi (JP)**

(74) Representative: **Newens, Leonard Eric et al
F.J. CLEVELAND & CO. 40/43 Chancery Lane
London WC2A 1JQ (GB)**

# 0 024 869

## Description

The present invention relates to a recording and reproducing apparatus for a PAL or SECAM system color television signal which enables long time recording, reduces interference of adjacent signal by a chrominance signal and allows correct color reproduction in special color reproduction mode such as still reproduction mode, slow motion reproduction mode, fast forward reproduction mode or reverse reproduction mode.

The recent trend of a home video tape recorder (VTR) is to high density recording. In a two-head type helical scan VTR, a recording system in which an azimuth angle is provided between two heads and no guard band is provided between adjacent tracks has been commonly used.

GB—A—1 530 448 discloses a PAL system color video signal reproducing system including two heads having no azimuth angle therebetween, a frequency modulated luminance signal and a carrier chrominance signal converted in a frequency converter to a frequency band lower than the luminance signal, the luminance and chrominance signals being mixed in an adder to produce a multiplex signal, luminance signals of the same kind being recorded on every track of a magnetic tape and when the heads are shifted across adjacent tracks at a special reproduction mode, discontinuity of the chrominance signals is detected and the carrier wave of one chrominance signal is inverted.

In the present invention, a video signal recording and reproducing apparatus includes two heads having an azimuth angle therebetween, in which a colour television signal is recorded and reproduced with a given pattern. However, with the apparatus of the present invention, the inversion of the carrier wave of the chrominance signals is not necessary at the reproduction mode. The chrominance signals are delayed at every one line with the same time difference in mutual reverse sequence during the recording and reproduction mode to obtain the continuity of the chrominance signals at the special reproduction mode.

Thus, according to the present invention there is provided a video signal recording and reproducing apparatus wherein a PAL or SECAM system color television signal (VTR) is recorded and reproduced sequentially on and from oblique tracks (e.g. I-A, II-A; I-B, II-B) on a recording medium by two heads (A, B) having an azimuth angle therebetween, said colour signal (VTR) comprising a carrier chrominance signal (R, B) and a brightness signal having separated therefrom a horizontal synchronising signal, the colour signal (VTR) being recorded in such a manner that horizontal synchronising signals on adjacent tracks (I-A, I-B) on said recording medium are not arranged side by side when said brightness signals to be recorded are, unlike the chrominance signals, not delayed by a predetermined time difference but are recorded in a time sequence at which the brightness signals are applied, characterised in that in order to obtain continuity of the horizontal synchronising signals and the chrominance signals during a special reproduction mode, the carrier chrominance signals to be recorded along each successive track are delayed by respective delay periods chosen in a repeating sequence from a predetermined delay period group so that the chrominance signals on at least every other track are arranged side by side, and the reproduced carrier chrominance signals derived from each successive track are delayed by respective delay periods chosen from said predetermined delay period group in the reverse rotational sequence to that of the recording operation.

The invention will now be described by way of example only with particular reference to the accompanying drawings wherein:

Fig. 1 shows a recorded pattern for a PAL/SECAM signal VTR where $a_H=1.5$;

Figs. 2, 3 and 4 show reproduced loci in still, fast forward and reverse reproduction modes, respectively, where $a_H=1.5$;

Fig. 5 shows a basic block diagram of signal processing for a VHS system PAL/SECAM signal VTR;

Fig. 6 shows a recorded pattern for a PAL/SECAM signal VTR where $a_H=0.75$;

Figs. 7, 8 and 9 show reproduced loci in still, fast forward and reverse reproduction modes, respectively, where $a_H=0.75$;

Figs. 10, 11 and 12 show sequences and envelope waveforms of horizontal synchronizing signals and chrominance signals for the cases of Figs. 7, 8 and 9, respectively;

Fig. 13 shows a recorded pattern for a PAL/SECAM signal VTR where $a_H=1.0$;

Fig. 14, 15 and 16 show reproduced loci in still, fast forward and reverse reproduction modes, respectively, where $a_H=1.0$;

Fig. 17 shows a block diagram of a first embodiment where $a_H=1.0$;

Fig. 18 shows waveforms in the circuit of Fig. 17 and a chrominance signal delay time in normal reproduction mode;

Fig. 19 shows a chrominance signal recorded pattern in accordance with the embodiment of Fig. 17;

Fig. 20 shows waveforms in the circuit of Fig. 17 and a chrominance signal delay time in the special reproduction mode;

Fig. 21 shows a block diagram of a second embodiment where $a_H=1.0$;

Fig. 22 shows waveforms in the circuit of Fig. 21;

Fig. 23 shows a recorded pattern of a chrominance signal in a third embodiment where $a_H=1.0$;

Fig. 24 and 25 show block diagrams for the first embodiment where $a_H=0.75$;

Fig. 26 shows a waveform of a switching control signal for the circuits of Figs. 24 and 25;

2

Fig. 27 shows waveforms in the circuits of Figs. 24 and 25 and delay times of a chrominance signal and a brightness signal in the recording mode and the normal reproduction mode;

Fig. 28 shows a recorded pattern of a chrominance signal in the first embodiment where $a_H=0.75$;

Figs. 29, 30 and 31 show waveforms in the circuits of Figs. 24 and 25 and delay times of a chrominance signal and a brightness signal in the special reproduction mode;

Fig. 32 shows a head arrangement in which $a_H=0.75$ and one head is offset by 0.75 H;

Fig. 33 shows a recorded pattern in which $a_H=0.75$ and one head is offset by 0.75 H;

Figs. 34 and 35 show block diagrams of the second embodiment where $a_H=0.75$, in which an original recorded pattern shown in Fig. 33 is used;

Fig. 36 shows waveforms of switching control signals for the circuits of Figs. 34 and 35;

Fig. 37 shows waveforms in the circuits of Figs. 34 and 35 and delay times of a chrominance signal and a brightness signal in the recording mode and the normal reproducing mode;

Fig. 38 shows a recorded pattern of a chrominance signal in the second embodiment where $a_H=0.75$;

Figs. 39, 40 and 41 show waveforms in the circuits of Figs. 34 and 35 and delay times of the chrominance signal and the brightness signal in the special reproduction mode;

Figs. 42 and 43 show a block diagram of the third embodiment where $a_H=0.75$;

Fig. 44 shows waveforms of switching control signals for the circuits of Figs. 42 and 43;

Fig. 45 shows waveforms in the circuits of Figs. 42 and 43 and delay times of the chrominance signal and the brightness signal in the recording modes and the normal reproduction mode;

Fig. 46 shows a recorded pattern of a brightness signal in the third embodiment where $a_H=0.75$;

Figs. 47 and 48 shows waveforms in the circuits of Figs. 42 and 43 and the delay times of the chrominance signal and the brightness signal in the special reproduction mode;

Figs. 49 and 50 show block diagrams of a fourth embodiment where $a_H=0.75$, in which the original recorded pattern shown in Fig. 33 is used;

Fig. 51 shows waveforms of switching control signals for the circuits of Figs. 49 and 50;

Fig. 52 shows waveforms for the circuits of Figs. 49 and 50 and the delay times of the chrominance signal and the brightness signal in the recording mode and the normal reproduction mode;

Fig. 53 shows a recorded pattern of a brightness signal in the fourth embodiment where $a_H=0.75$;

Figs. 54 and 55 waveforms in the circuits of Figs. 49 and 50 and the delay times of the chrominance signal and the brightness signal in the special reproduction mode;

Figs. 56 and 57 show block diagrams of a fifth embodiment where $a_H=0.75$;

Fig. 58 shows waveforms of the switching control signals for the circuits of Figs. 56 and 57;

Fig. 59 shows waveforms in the circuits of Figs. 56 and 57 and the delay times of the chrominance signal and the brightness signal in the recording mode and the normal reproduction mode;

Fig. 60 shows a recorded pattern of a chrominance signal in the fifth embodiment where $a_H=0.75$;

Figs. 61, 62 and 63 show waveforms of the circuits of Figs. 56 and 57 and the delay times of the chrominance signal and the brightness signal in the special reproduction mode;

Figs. 64 and 65 show block diagrams of a sixth embodiment where $a_H=0.75$;

Fig. 66 shows waveforms of the switching control signals for the circuits of Figs. 64 and 65;

Fig. 67 shows waveforms in the circuits of Figs. 64 and 65 and the delay times of the chrominance signal and the brightness signal in the recording mode and the normal reproduction mode;

Fig. 68 shows a recorded pattern of a brightness signal in the sixth embodiment where $a_H=0.75$; and

Figs. 69, 70 and 71 show waveforms in the circuits of Figs. 64 and 65 and the delay times of the chrominance signal and the brightness signal in the special reproduction mode.

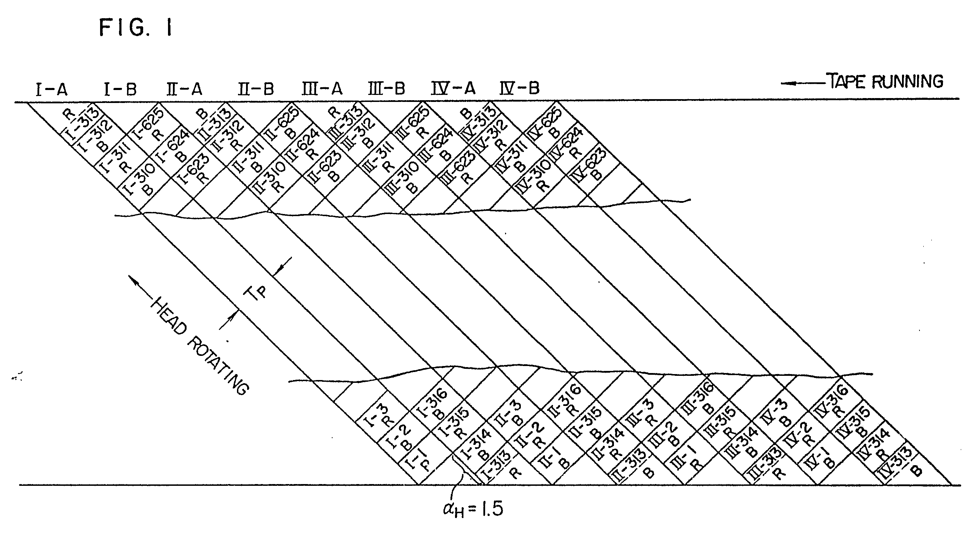

Fig. 1 shows a recorded pattern of a VHS system PAL/SECAM signal VTR. In Fig. 1, I-A, I-B, II-A, II-B,... represent record tracks, in which I-A, II-A, III-A,... show loci drawn by a head A while I-B, II-B, III-B,... show loci drawn by a head B with an azimuth angle of $\pm 6°$ (not shown) between the head A and the head B. I-1, I-2, I-3... represent line numbers with symbols R and B representing chrominance signals in the corresponding lines. For a PAL signal, phase of a R-Y signal is reversed for each line with R representing a positive R-Y signal and B representing a negative R-Y signal. For a SECAM signal, the R-Y signal and the B-Y signal are transmitted alternately for each line with R representing the transmission of the R-Y signal and B representing the B-Y signal. A symbol $a_H$ represents the amount of offset of a horizontal synchronizing signal between adjacent tracks. In the VHS system PAL/SECAM signal VTR, $a_H$ is set to 1.5. Under this condition, a track pitch $T_P$ is equal to 49 μm and a tape speed is equal to 23.4 mm/second.

In the VHS system PAL/SECAM signal VTR, the horizontal synchronizing signals of the adjacent tracks are arranged side by side and the adjacent chrominance signals are also arranged side by side. That is, R is next to R, and B is next to B.

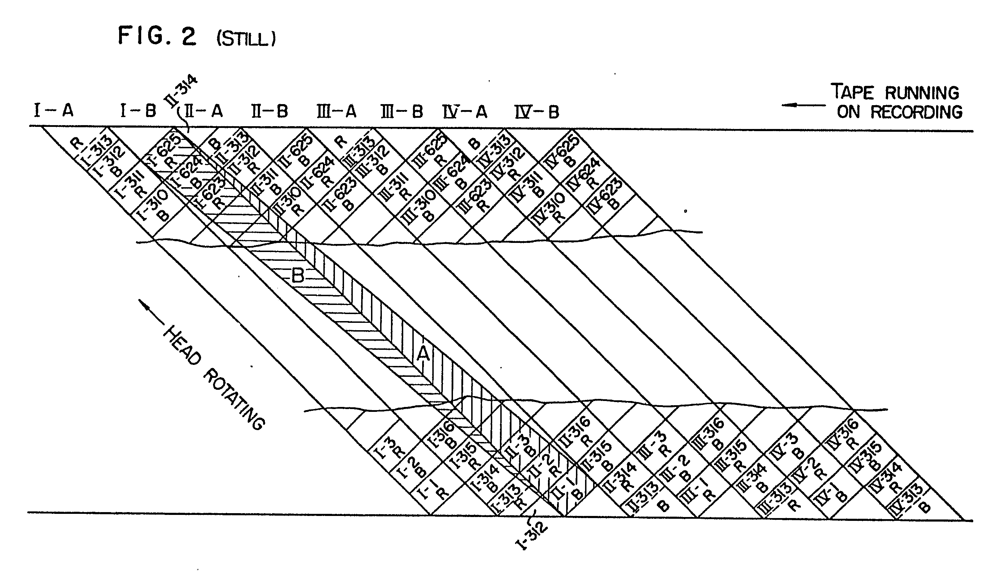

A special reproduction mode (still, slow motion, fast forward and reverse reproduction modes) in such a VTR is now explained. Figs. 2, 3 and 4 show loci of the heads in the still reproduction mode, fast forward reproduction mode and reverse reproduction mode, respectively, in which Ⓐ represents a reproduced locus by the head A and Ⓑ represents a reproduced locus by the head B. In Fig. 2, the heads A and B draw the same locus. Since the azimuth angle is provided between the head A and the head B as described above, the head A reproduces only the signal of the locus drawn by the head A and the head B reproduces only the signal of the locus drawn by the head B. Accordingly, in Figs. 2 to 4, the signals in the hatched areas are reproduced. In Fig. 2, the head A reproduces the signal in the hatched area Ⓐ and the head B

3

**0 024 869**

reproduces the signal in the hatched area ⑧. In the special reproduction mode, the recorded locus is jumped during a reproduction cycle by one head or the signal sequence is different from that of normal reproduction mode when the heads are switched from one to the other. Those conditions are classified as follows:

1) During one reproduction cycle by one head, the locus is jumped two recorded loci ahead (in the fast forward reproduction mode).

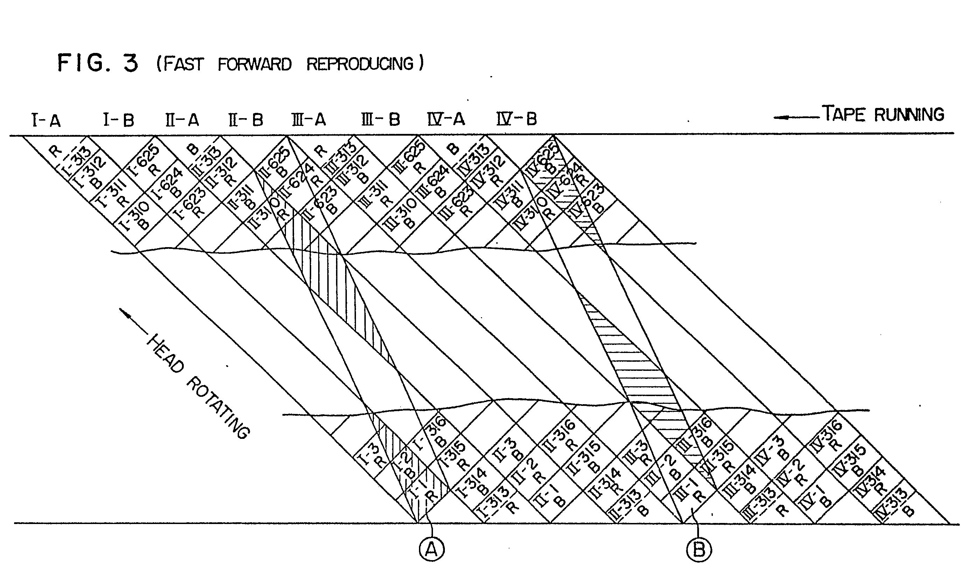

[In Fig. 3, the locus is jumped from the locus I-A to the locus II-A for the head A, and from the locus III-B to the locus IV-B for the head B.]

2) In the switching of the heads, the locus is jumped to one recorded locus ahead (in the still, slow motion, fast forward and reverse reproduction modes).

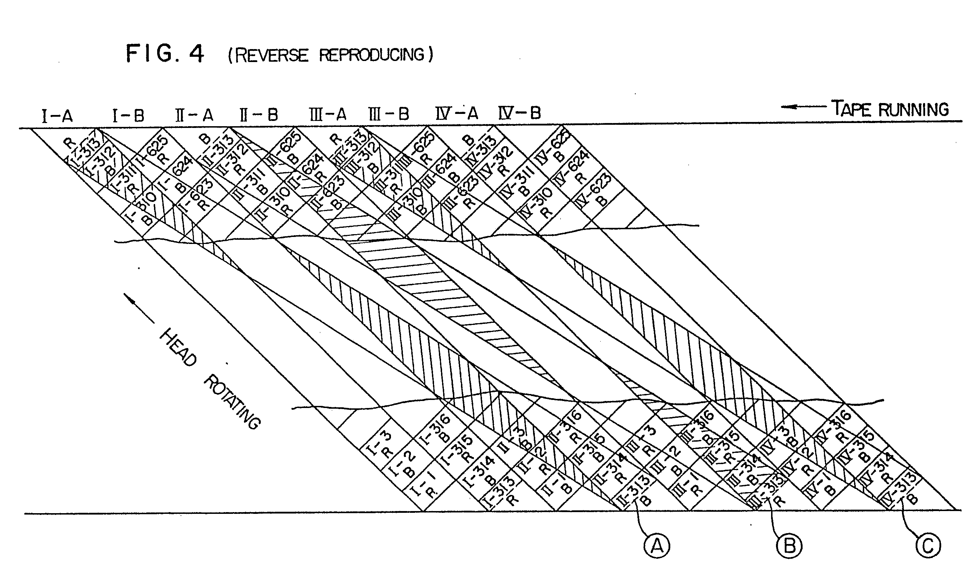

[In Fig. 2, the locus is jumped from the locus I-B for the head B to the locus II-A for the head A, and in Fig. 4 the locus is jumped from the locus III-A for the head A to the locus III-B for the head B.]

3) In the switching of the heads, the locus is jumped three recorded locus ahead (in the fast forward reproduction mode).

[In Fig. 3, the locus is jumped from the locus II-A for the head A to the locus III-B for the head B.]

4) In the switching of the heads, the locus is jumped one locus behind (in the still, slow and reverse reproduction modes).

[In Fig. 2, the locus is jumped from the locus II-A for the head A to the locus I-B for the head B, and in Fig. 4 the locus is jumped from the locus II-B for the head B to the locus II-A for the head A.]

5) During one reproduction cycle by one head, the locus is jumped two recorded loci behind (in the still, slow and reverse reproduction modes).

[In Fig. 4, the locus is jumped from the locus IV-A for the head A to the locus III-A, from the locus II-A to the locus I-A, and from the locus III-B for the head B to the locus II-B.]

In the above five cases, the continuity of the horizontal synchronizing signal and the continuity of the chrominance signal are important. If the continuity of the horizontal synchronizing signal is locked, a skew distortion appears on the image screen. The continuity of the chrominance signal is discussed below. In the PAL/SECAM signal, the chrominance signal is switched for each line. In the PAL system, the phase of the carrier wave for the R-Y signal is reversed for each line, and in the secam system the R-Y signal and the B-Y signal are alternately transmitted for each line. Accordingly, if the sequence of the chrominance signals is reversed in the middle or the beginning of a field, a chrominance discrimination circuit of a television receiver operates improperly or takes a long time for pull-in so that the color does not appear on the picture image or color phase is disturbed in the middle or top of the picture image.

The above five cases are discussed for a VTR for the recorded pattern shown in Fig. 1. Since one field is recorded in each track, in the recorded pattern of Fig. 1, the number $t_H$ of lines recorded in one track is equal to 312.5. In the cases 1) and 5), since the horizontal synchronizing signals and the chrominance signals are arranged side by side in the recorded pattern, the continuity of the horizontal synchronizing signal and the continuity of the chrominance signal are maintained. In the case 2), since the switching of the heads is effected in exactly the same manner as for the normal reproduction mode, the continuity of the horizontal synchronizing signal and the continuity of the chrominance signal are maintained. In the case 3), the signal reproduced in the switching of the heads is skipped by two tracks plus $2\alpha_H$ lines. In the jump from II-A to III-B in Fig. 3, the tracks II-B and III-A, and the lines II-312 and II-313 (1/2 line) of the track II-A and the line III-313 (1/2 line) and III-314 of the track III-B are skipped so that the line is jumped from the line II-311 to the line III-315. Accordingly, the total number of lines skipped is equal to $2t_H+2\alpha_H=628$ (where $\alpha_H=1.5$, $t_H=312.5$). Since this number is an even number, the continuity of the horizontal synchronizing signal and the continuity of the chrominance signal are maintained. In the case 4), in the switching of the heads, the signal reproduced is jumped one track behind and $2\alpha_H$ lines behind. In the jump from II-A to I-B in Fig. 2, it jumps from the line II-314 in the track II-A to the line I-312 in the track I-B. That is, it jumps back by $2t_H+2\alpha_H=628$ lines. In the jump from the track II-B to the track II-A in Fig. 4, it also jumps back by $2t_H+2\alpha_H=628$ lines. Since those numbers are even, the continuity of the horizontal synchronizing signal and the continuity of the chrominance signal are maintained.

Thus, in the VTR for the recorded pattern as shown in Fig. 1, the continuity of the horizontal synchronizing signal and the continuity of the chrominance signal are always maintained even in the special reproduction mode.

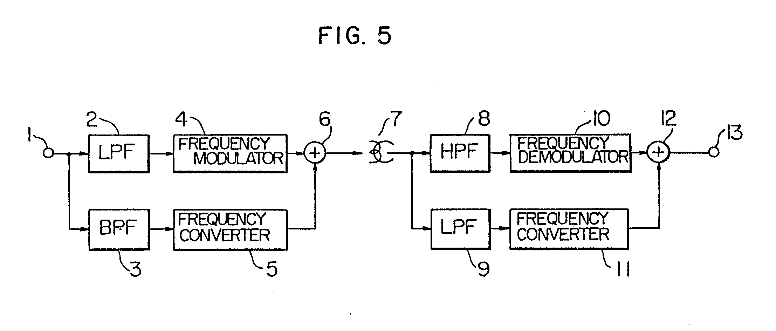

Referring to Fig. 5, a basic block diagram for the signal processing of the VHS system PAL/SECAM signal VTR is briefly explained. In Fig. 5, numeral 1 denotes a video signal input terminal, 2 a low-pass filter, 3 a band-pass filter, 4 a frequency modulator, 5 a frequency converter, 6 an adder, 7 a head, 8 a high-pass filter, 9 a low-pass filter, 10 a frequency demodulator, 11 a frequency converter, 12 an adder and 13 a video signal output terminal. A video signal applied to the input terminal 1 is fed to the low-pass filter 2 and the band-pass filter 3 where it is divided into a brightness signal and a carrier chrominance signal. The brightness signal is frequency modulated in the frequency modulator 4 and then fed to the adder 6. On the other hand, the carrier chrominance signal is converted to a low frequency signal in the frequency converter 5 and it is superimposed on the frequency modulated wave in the adder 6 for recording on a tape by the head 7. During the low frequency conversion, the signal is processed in accordance with the PAL system or the SECAM system. The signal reproduced by the head 7 is fed to the high-pass filter 8 and the low-pass filter 9 where it is separated to a frequency modulated wave of the brightness signal and a low

4

frequency converted carrier chrominance signal. The frequency modulated wave is fed to the frequency demodulator 10 where it is demodulated to produce a reproduced brightness signal, which is fed to the adder 12. On the other hand, the low frequency converted carrier chrominance signal is reconverted to the initial frequency signal by the frequency converter 11 and it is combined with the reproduced brightness signal in the adder 12 to reproduce a video signal at the output terminal 13. In the course of reconverting the carrier chrominance signal to the original frequency signal in the frequency converter 11, the signal is processed in accordance with the PAL system or the SECAM system.

The present invention provides a method for maintaining the continuities of the horizontal synchronizing signal and the chrominance signal in the special reproduction mode by increasing the density of the pattern shown in Fig. 1 or changing it to a different pattern.

As explained in conjunction with Figs. 2 to 4, there are five cases in which the discontinuity of the signal may occur in the special reproduction mode. The $a_H$ and the continuities of the horizontal synchronizing signal and the chrominance signal for a given pattern are explained for each of the above cases. In the case 1), in the switching of the track, the signal jumps $2t_H+2a_H$ lines ahead. In the case 5), it jumps $2t_H+2a_H$ lines behind. In the switching of the head, in the case 2), the signal jumps in the exactly same manner as the normal reproduction mode so that the continuities of the horizontal synchronizing signal and the chrominance signal are maintained for any pattern. In the case of 3), the signal jumps $2t_H+2a_H$ lines ahead, and in the case of 4) it jumps $2t_H+2a_H$ lines behind. Accordingly, the requirement for the continuity of the horizontal synchronizing signal under those conditions is that the number of lines skipped ahead or behind is an integer, that is $2t_H+2a_H$ is an integer. That is,

$$t_H+a_H=h/2 \text{ (where h is an integer)}$$

In the system in which one field is recorded in each track,

$$a_H=n/2 \text{ (where n is an integer)}$$

This means that the horizontal synchronizing signals of every other track are arranged side by side. The requirement for the continuity of the chrominance signal is that $2t_H+2a_H$ is an even number, that is, $t_H+a_H$ is an integer. That is,

$$t_H+a_H=h \text{ (where h is an integer)}$$

In the system in which one field is recorded in each track,

$$a_H=(2n+1)/2 \text{ (where n is an integer)}$$

This means that the chrominance signals of every other track are arranged side by side. When $t_H+a_H=(2h+1)/2$, the continuity of the horizontal synchronizing signal is maintained in the special reproduction mode although the continuity of the chrominance signal is not maintained, and the compensation for the discontinuity of the chrominance signal in the special reproduction mode is relatively easy to attain. When $t_H+a_H=(2h+1)/2$ and the one field per track recording system is used,

$$a_H=n \text{ (where n is an integer).}$$

Thus, in the one field per track recording system, if a recording density is increased over that of the recorded pattern shown in Fig. 1, a pattern which can maintain the continuities of the horizontal synchronizing signal and the chrominance signal in the special reproduction mode is obtained only when $a_H=0.5$. In the case of $a_H=0.5$, however, the tape speed is 7.8 mm/second and the track pitch $T_P$ is 16 μm, which extremely degrade the qualities of sound and picture. On the other hand, when $a_H=1.0$ (the tape speed is 15.6 mm/second and the track pitch $T_P$ is 32 μm), the requirement for the continuity of the horizontal synchronizing signal in the special reproduction mode is met but the requirement for the continuity of the chrominance signal is not met. This equally applies to the cases where $a_H$ is an integer.

The present invention provides a method for maintaining the continuities of the horizontal synchronizing signal and the chrominance signal in the special reproduction mode for any recorded pattern in which $t_H+a_H \neq h$. Specifically described below is a method for maintaining the continuity in the one field per track recording system for the pattern of $a_H=n$ (where n is an integer) including the case of $a_H=1.0$ and any pattern of $a_H \neq n/2$ including the case of $a_H=0.75$ (where the tape speed is reduced to one half) for high density recording. In the following description, the one field per track recording system is considered unless otherwise specified.

An example of the occurrence of the discontinuity of the horizontal synchronizing signal and the chrominance signal is now explained for the case of $a_H=0.75$.

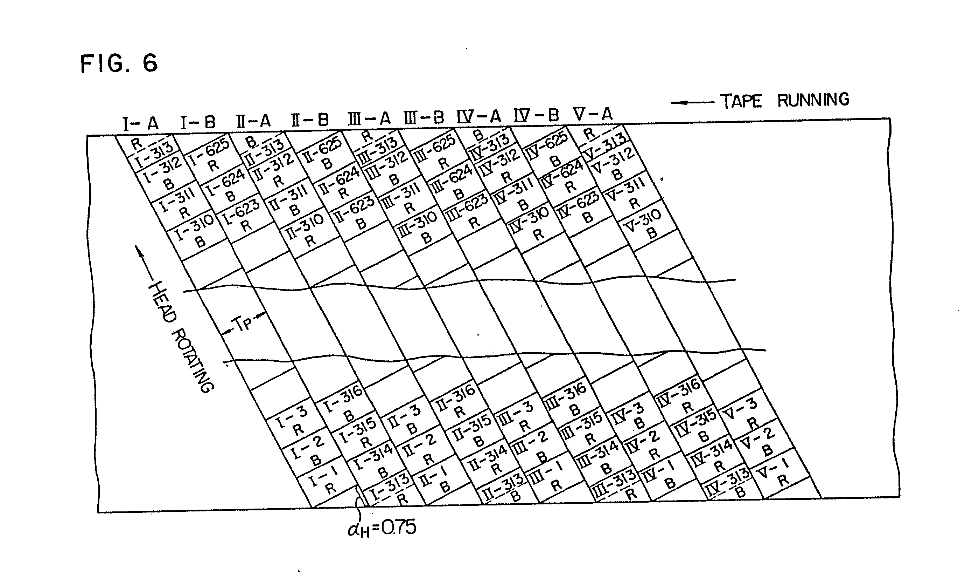

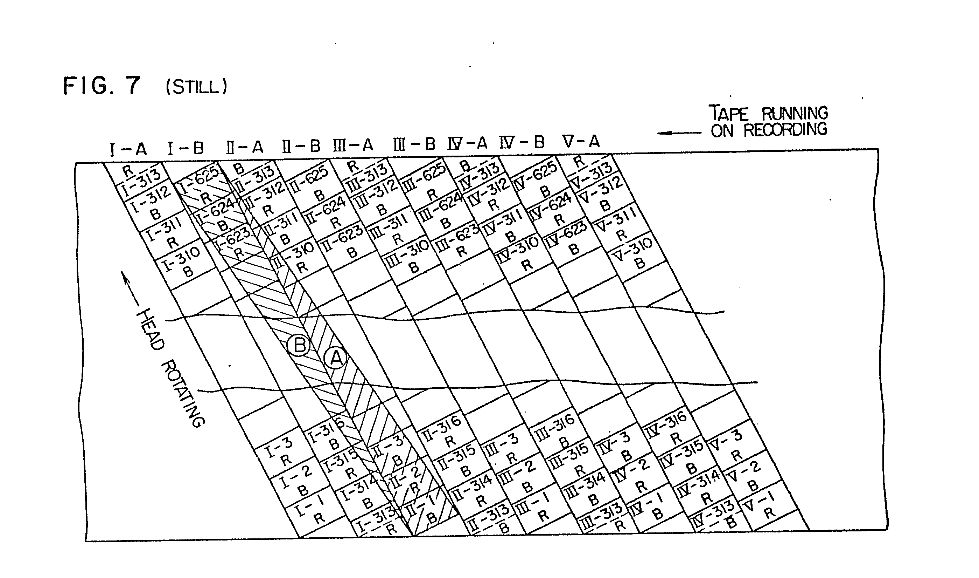

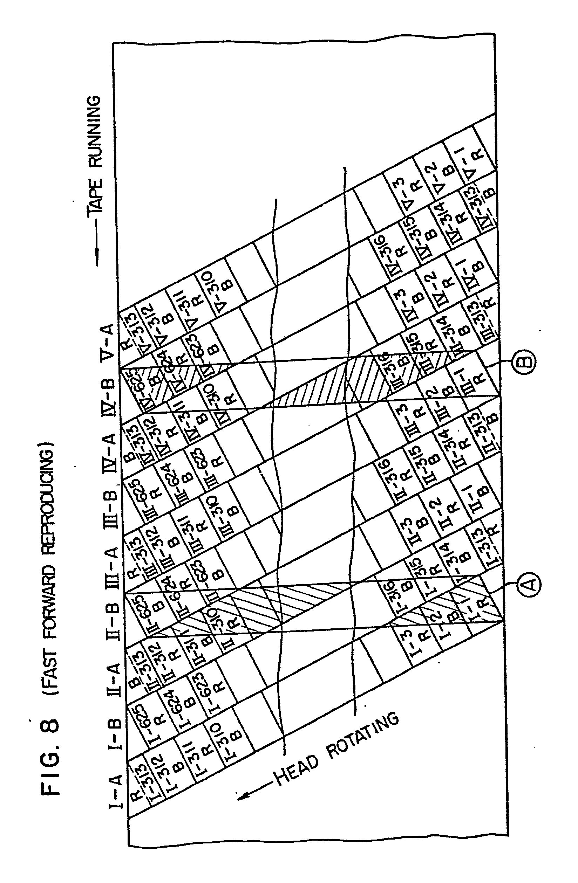

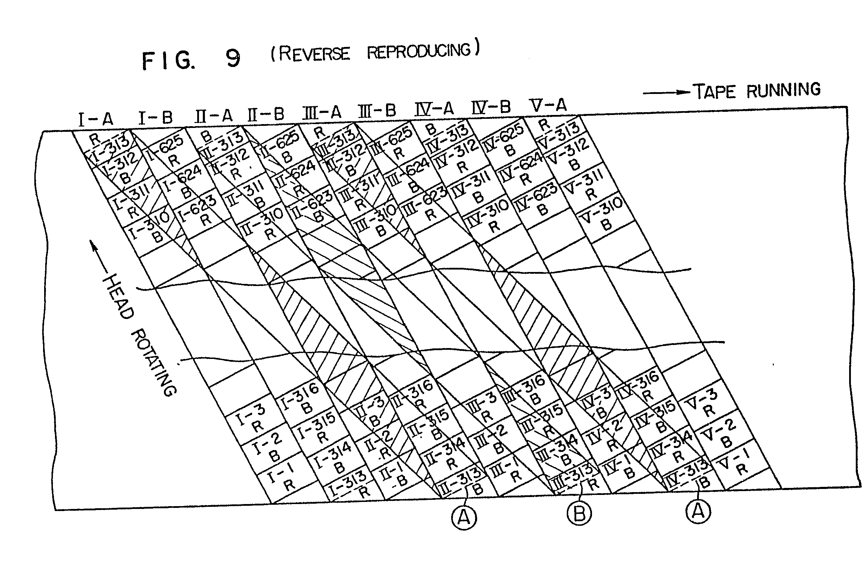

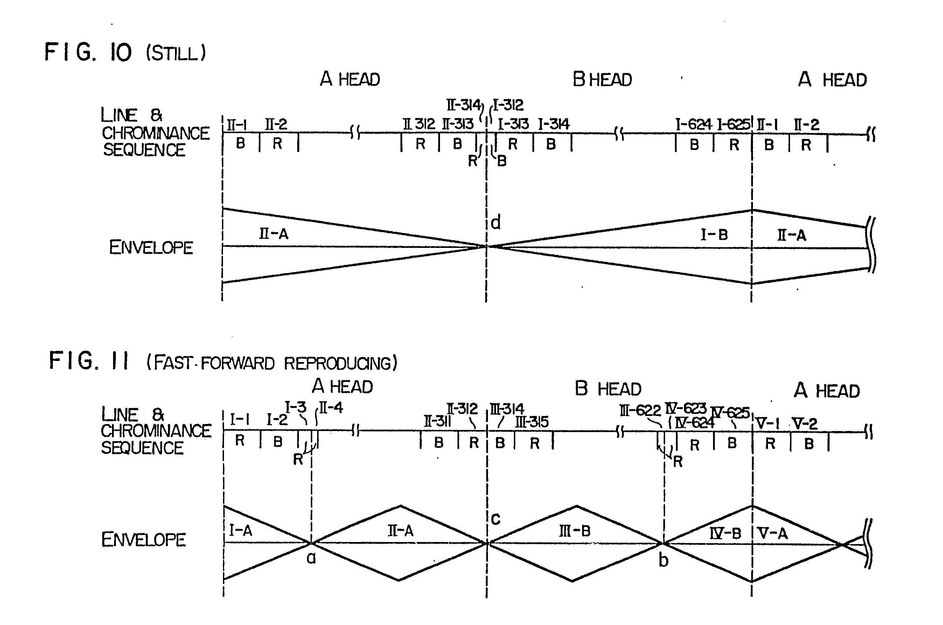

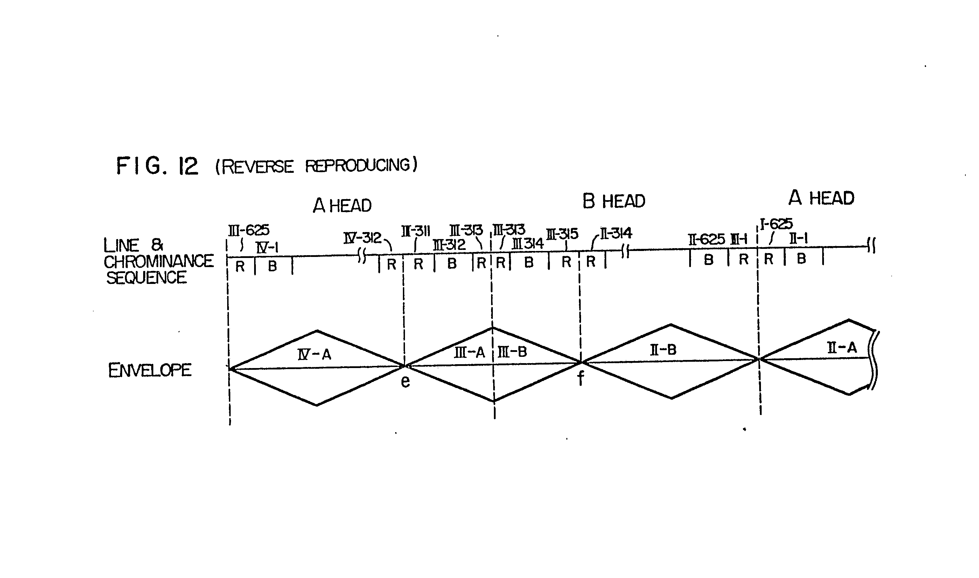

Fig. 6 shows a recorded pattern where $a_H=0.75$. In Fig. 6, the tracks, the lines and the chrominance signals are designated in the same manner as in Fig. 1. Figs. 7, 8 and 9 show the loci of the head in the still reproduction mode, the fast forward reproduction mode and the reverse reproduction mode, respectively,

5

for the recorded pattern shown in Fig. 6. Figs. 10, 11 and 12 show the sequences of the horizontal synchronizing signals and the chrominance signals, the reproduced tracks and the reproduced envelope waveforms, in the still reproduction mode, the fast forward reproduction mode and the reverse reproduction mode, respectively. Figs. 7, 8 and 9 correspond to Figs. 2, 3 and 4, respectively, where $a_H=1.5$ and the symbols designate in the same way. In the recorded pattern where $a_H \neq n/2$, the continuities of the horizontal synchronizing signal and the chrominance signal are not maintained in the special reproduction mode except the case 2). Those special reproduction modes are considered with reference to Figs. 7 to 12. The case of 1) of the special reproduction mode corresponds to the fast forward reproduction mode in Figs. 8 and 11 in which the head A moves from the hatched track I-A to the track II-A (at point $a$ in Fig. 11) and the head B moves from the track III-B to the track IV-B (at point $b$ in Fig. 11). In this case, since the horizontal synchronizing signals and the chrominance signals are not arranged side by side, respectively, in the tracks A and in the tracks B, the discontinuities occur. The number of lines skipped at the discontinuity point is equal to $2t_H+2a_H=626.5$ (where $a_H=0.75$ and $t_H=312.5$) as described above. At the point $a$ in Fig. 11, the skip occurs from the middle of the line I-3 (R) to the middle of the line II-4 (R), and at the point $b$ the skip occurs from the middle of the line III-622 (B) to the middle of the line IV-623 (B). The space between the horizontal synchronizing signals in the skip is equal to 0.5 H (where H is a unit of line period). As to the chrominance signals, they are spaced by 0.5 H at the point $a$ where the skip occurs from the line I-2 (B) to the line II-5 (B), and spaced by 0.5 H at the point $b$ where the skip occurs from the line III-621 (R) to the line IV-624 (R). In any case, the chrominance signal after the discontinuity point is in advance by 0.5 H (retarded by 1.5 H) with respect to the chrominance signal before the discontinuity signal, to compare with the case where the continuity is maintained. The case 3) corresponds to a switching point (point $c$ in Fig. 11) from the locus II-A of the head A to the locus III-B of the head B in Figs. 8 and 11. In this case, the number of lines skipped is 625.5 lines ($=2t_H+2a_H$, where $a_H=0.75$ and $t_H=312.5$) or those lines from the last one quarter of the line II-312 to the first one quarter of the line III-314. Thus, like the case 1) above, the discontinuity takes place. At the point $c$ where the skip occurs from the end of the line II-311 to the beginning of the line III-315, the horizontal synchronizing signals are spaced by 1.5 H and the chrominance signals are spaced by 1.5 H in the course of the skip from B to R. Again, like the case 1) above, the chrominance signal after the discontinuity point is advanced by 0.5 H (retarded by 1.5 H) with respect to the chrominance signal before the discontinuity point, to compare with the case where the continuity is maintained. The case 4) corresponds to the switching point (point $d$ in Fig. 10) from the locus II-A of the head A to the locus I-B of the head B in Figs. 7 and 10. In this case, the skip occurs from the one quarter point of the line II-314 back to the three quarter point of the line I-312, that is, the number of lines skipped back is 626.5 lines ($=2t_H+2a_H$, where $a_H=0.75$ and $t_H=312.5$). At the point $d$ where the skip occurs from the end of the line II-313 to the beginning of the line I-313, the horizontal synchronizing signals are spaced by 0.5 H and the chrominance signals are spaced by 0.5 H in the course of the skip from B to R. The chrominance signal after the discontinuity point is advanced by 1.5 H (retarded by 0.5 H) with respect to the chrominance signal before the discontinuity point, to compare with the case where the continuity is maintained. The case 5) above corresponds to the switch (at point $e$ in Fig. 12) from the locus IV-A of the head A to the locus III-A, the switch from the locus II-A to the locus I-A and the switch (at point $f$ in Fig. 12) from the locus III-B of the head B to the locus II-B, in Figs. 9 and 12. Like the case 4) above, the discontinuity occurs. At the point $e$ where the switch occurs from the end of the line IV-311 to the beginning of the line III-312, the horizontal synchronizing signals are spaced by 1.5 H and the chrominance signals are spaced by 1.5 H in the course of the switch from B to B. Again, like in the case 4) above, the chrominance signal after the discontinuity point is advanced by 1.5 H (retarded by 0.5 H) with respect to the chrominance signal after the discontinuity point, to compare with the case where the continuity is maintained. The same is true for the point $f$.

· The conditions at the discontinuity point discussed above may be generalized as follows. When the number of lines included in one track is given by $t_H$ ($t_H=312.5$ in the previous examples), $2(t_H+a_H)$ lines are skipped forward in the cases 1) and 3) of the special reproduction mode, and $2(t_H+a_H)$ lines are skipped backward in the cases 4) and 5). If the number $2(t_H+a_H)$ of lines skipped forward or backward is an integer, the horizontal synchronizing signal is continuous at that point, and if it is an even number the chrominance signal is also continuous. Accordingly, the cases 1) and 3) are equivalent to the case where the horizontal synchronizing signal is skipped by $[2(t_H+a_H)-m]$ lines (where m is an integer) at the track switching point and the chrominance signal is skipped by $[2(t_H+a_H)-2l]$ lines (where l is an integer). The case 4) is equivalent to the case where the horizontal synchronizing signal is skipped back by $[2(t_H+a_H)-m]$ lines and the chrominance signal is skipped back by $[2(t_H+a_H)-2l]$ lines. This means that in the case 1) and 3) the horizontal synchronizing signal after the discontinuity point is advanced by $[2(t_H+a_H)-m]$ lines with respect to the horizontal synchronizing signal before the discontinuity point and the chrominance signal after the discontinuity point is advanced by $[2(t_H+a_H)-2l]$ lines. For the cases 4) and 5), it means that the signals after the discontinuity point are retarded by $[2(t_H+a_H)-m]$ lines for the horizontal synchronizing signal and by $[2(t_H+a_H)-2l]$ lines for the chrominance signal, with respect to the signals before the discontinuity point. When this is applied to the case where $a_H=0.75$, $2(t_H+a_H)$ is equal to 626.5 and assuming that m=626 and 2l=626, the horizontal synchronizing signal is advanced by 0.5 H and the chrominance signal is advanced by 0.5 H after the discontinuity point in the cases 1) and 3), and the horizontal signal is retarded by 0.5 H and the chrominance signal is retarded by 0.5 H after the discontinuity point in the cases 4) and 5). This corresponds to the results obtained above.

In the pattern in which $a_H=1.0$, $2(t_H+a_H)$ is equal to 627 and assuming that m=627 and 2l=626, the horizontal synchronizing signal is advanced by zero H (that is, the continuity is not destroyed) and the chrominance signal is advanced by 1.0 H after the discontinuity point in the cases 1) and 3), and the horizontal synchronizing signal is retarded by zero H (that is, the discontinuity is not destroyed) and the chrominance signal is retarded by 1.0 H after the discontinuity point in the cases 4) and 5).

The present invention provides a method for maintaining the continuities of the horizontal synchronizing signal and the chrominance signal in the special reproduction mode for the pattern of any $a_H$. Several embodiments of the present invention will now be explained. First, a case where $a_H=1.0$ is explained.

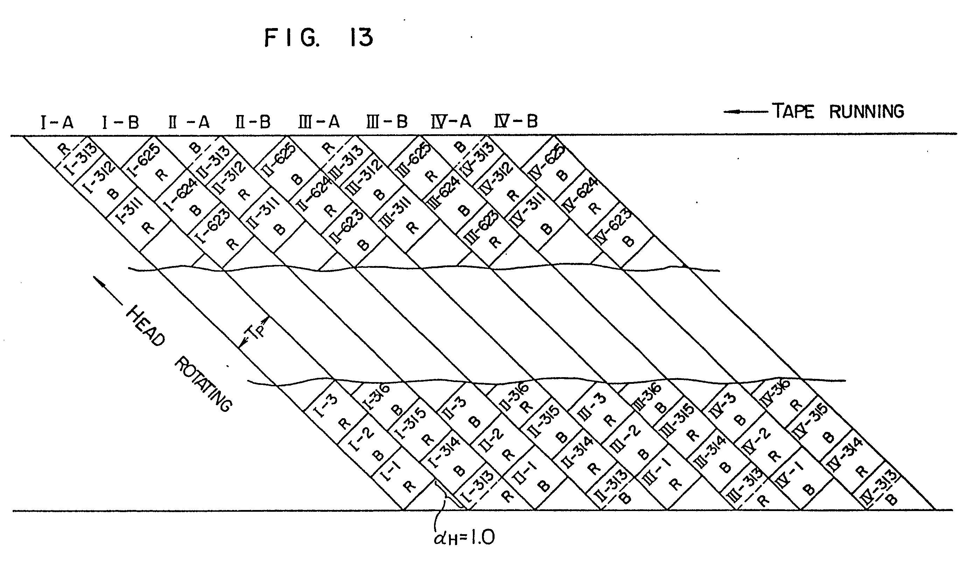

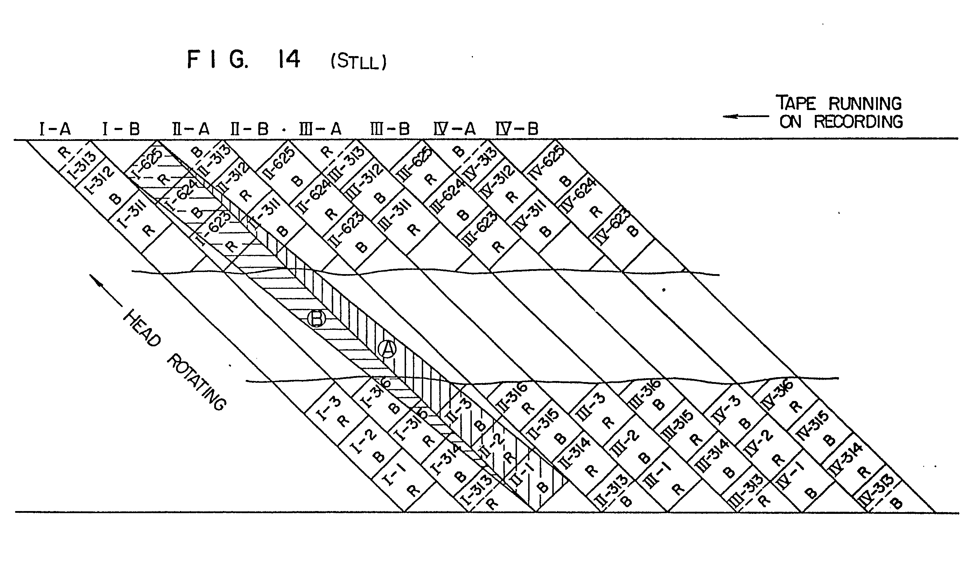

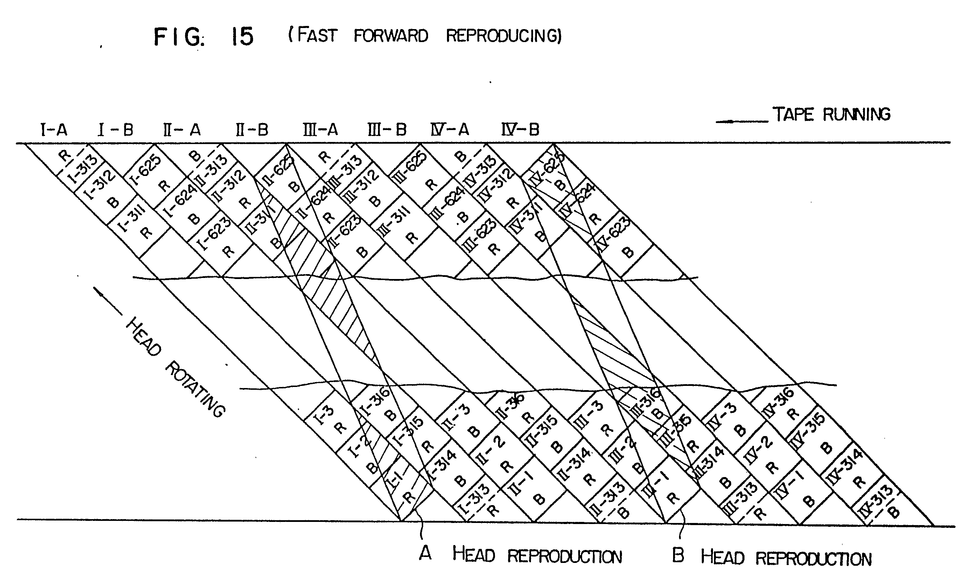

Fig. 13 shows an original recorded pattern in which $a_H=1.0$ and a brightness signal and a chrominance signal are recorded without time difference for every time period. In Fig. 13, the tracks, the lines and the chrominance signal are designated in the same manner as Fig. 1. Figs. 14 and 15 show head loci in the still reproduction mode and the fast forward reproduction mode for the pattern shown in Fig. 13. They correspond to Figs. 2 to 4 where $a_H=1.5$ and the same symbols are used. When $a_H=n$, the continuity of the horizontal synchronizing signal is always maintained in the special reproduction mode while the continuity of the chrominance signal is lost in the special reproduction mode except the case 2) above, as explained before (see Figs. 14—16).

As seen from the pattern shown in Fig. 13, the adjacent signals are not arranged side by side when $a_H=n$. Accordingly, a disturbance signal picked up from the adjacent track contains information different from a main signal (i.e. information of 0.5 line offset). Since the brightness signal is recorded after it has been frequency modulated with a relatively high frequency (frequency deviation of 3.8 MHz—4.8 MHz), an azimuth loss is large and it is not significantly affected even if the adjacent signal information is different from the main signal information, but the chrominance signal is recorded after it has been converted to a low frequency signal and hence the azimuth loss is relatively small. Accordingly, the chrominance signal is likely to be affected by the adjacent signal. Where the adjacent signals are arranged side by side as shown in the pattern of Fig. 1, the adjacent disturbance signal is substantially identical to the main signal and the affect thereof is small. In the SECAM system, the chrominance signal is a frequency modulated wave and hence if the frequency of the adjacent disturbance chrominance signal is substantially equal to the frequency of the main signal, the beat will be zero and the magnitude of the disturbance signal after the demodulation will be very small.

In one approach in accordance with the present invention, the above fact is taken into consideration to reduce the disturbance by the adjacent chrominance signal to a level in a conventional system while allowing high density recording with the normal color reproduction even in the special reproduction mode.

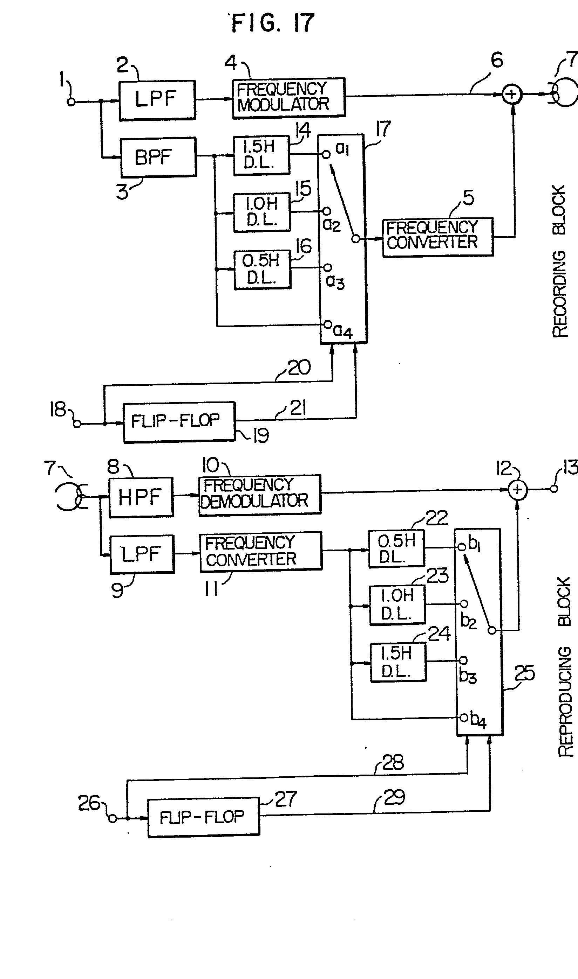

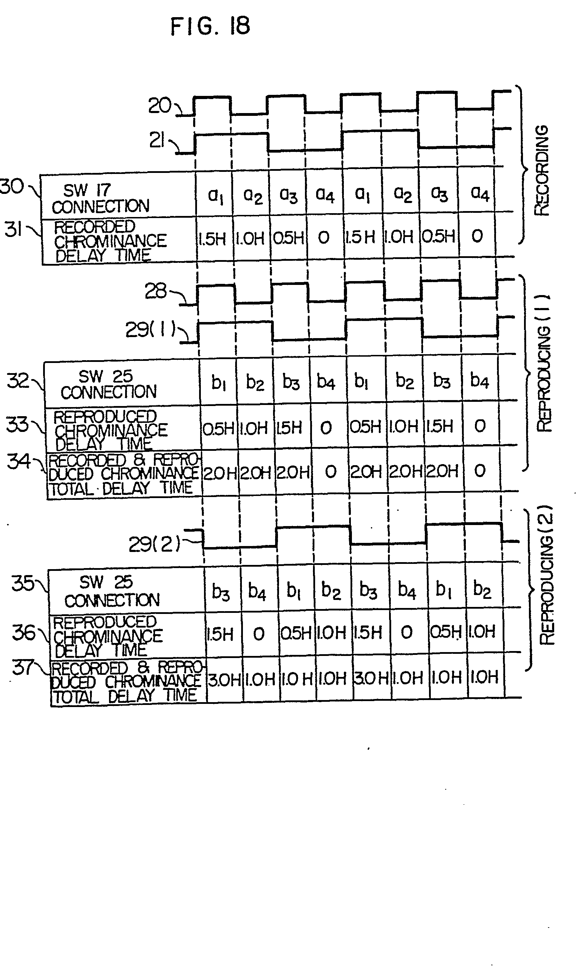

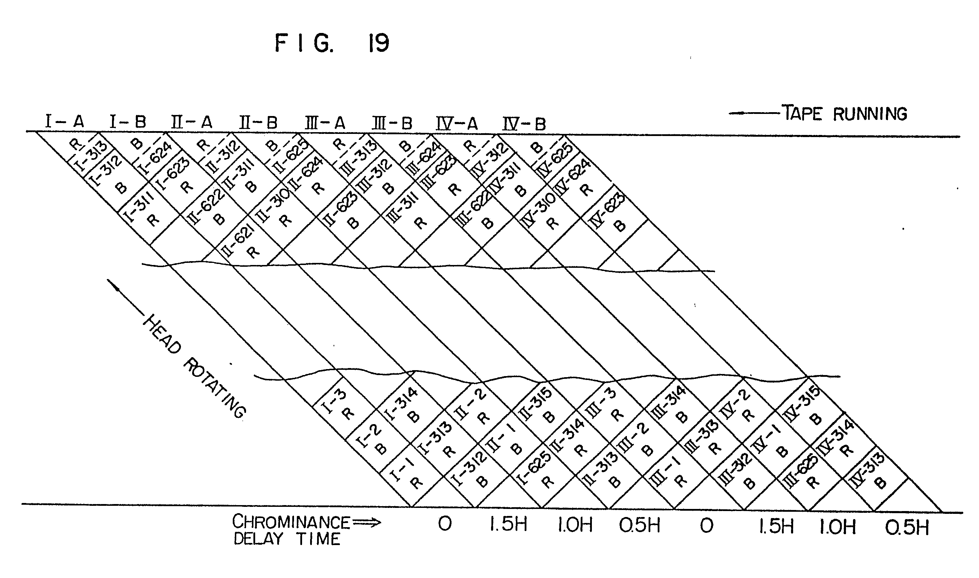

Fig. 17 shows a basic block diagram of a first embodiment of the present invention where $a_H=1.0$, Fig. 18 shows the waveforms in the circuit of Fig. 17 and the relationship of the chrominance signal, and Fig. 19 shows a recorded pattern ($a_H=1.0$) of the chrominance signal in accordance with the present invention. The present invention is now explained with reference to those figures. In Fig. 17, numerals 1 to 13 designate the identical elements to those shown in Fig. 5 and they function in the same way. Numerals 14 and 24 denote 1.5 H delay lines, 15 and 23 denote 1.0 H delay lines, 16 and 22 denote 0.5 H delay lines, 17 and 25 denote switching circuits (SW), 18 and 26 denote head selection signal input terminals, 19 and 27 denote flip-flops, 20 and 28 denote head selection signals, and 21 and 29 denote output signals from the flip-flops 19 and 27, respectively. The waveforms of the output signals are shown in Fig. 18 with the identical designation. The output signal 29 of the flip-flop 27 assumes one of two states 29(1) and 29(2) shown in Fig. 18 depending on a particular recording mode. The symbols in Fig. 19 are identical to those in Fig. 13 with the line members being used for the chrominance signal and the recorded pattern for the brightness signal being the same as that of Fig. 13.

In Fig. 17, the brightness signal is processed in the same manner as in Fig. 5. The output carrier chrominance signal from the band-pass filter 3 is supplied to a terminal $a_1$ of the switching circuit 17 through the 1.5 H delay line 14, to a terminal $a_2$ of the switching circuit 17 through the 1.0 H delay line 15, to a terminal $a_3$ of the switching circuit 17 through the 0.5 H delay line 16, and directly to a terminal $a_4$ of the switching circuit 17, respectively. The switching circuit 17 is controlled by the head selection signal 20 (Fig. 18) applied to the terminal 18 and the signal 21 (Fig. 18) which is derived by frequency dividing the signal 20 by the factor of two by the flip-flop 19. The switching circuit 17 selects the signal at: the terminal $a_1$ when the signal 20 is HIGH and the signal 21 is HIGH, the terminal $a_2$ when the signal 20 is LOW and the signal 21 is HIGH, the terminal $a_3$ when the signal 20 is HIGH and the signal 21 is LOW, and the terminal $a_4$ when the signal 20 is LOW and the signal 21 is LOW (See 30 in Fig. 18). Accordingly, the signals which are retarded by 1.5 H, 1.0 H, 0.5 H, 0, 1.5 H,... appear at the output of the switching circuit 17 as shown by 31 in Fig. 18. The output chrominance signal from the switching circuit 17 is fed to the frequency converter 5 and then it is recorded in the same manner as in Fig. 5. Assuming that the chrominance signals to be recorded in the tracks I-B, II-A, II-B, III-A, III-B,... are delayed by 1.5 H, 1.0 H, 0.5 H, 0, 1.5 H,..., respectively, the recorded pattern of the chrominance signals appears as shown in Fig. 19. In this manner, the chrominance signals in the recorded pattern are arranged side by side so that when they are reproduced the disturbance signal picked up from the adjacent track is substantially identical to the main signal and hence the affect by the disturbance signal is reduced. The delay time relationship between the tracks and the chrominance signals is not limited to that shown in Fig. 19 but any relationship is acceptable so long as the chrominance signals are delayed in the sequence of 1.5 H, 1.0 H, 0.5 H, 0, 1.5 H,....

The reproducing block is now explained. The low frequency converted reproduced carrier chrominance signal obtained from the output of the low-pass filter 9 is reconverted to the original frequency by the frequency converter 11 and fed to terminals $b_1$, $b_2$, $b_3$ and $b_4$ of the switching circuit 25 through the 0.5 H delay line 22, the 1.0 H delay line 23 and the 1.5 H delay line 24 and directly, respectively. The switching circuit 25 is controlled by the head selection signal 28 (Fig. 18) applied to the terminal 26 and the signal 29 (29(1) or 29(2) in Fig. 18) which is derived by frequency dividing the signal 28 by the factor of two by the flip-flop 27 and it functions in the same manner as the switching circuit 17 (28, 29(1) 32 or 28, 29(2), 35 in Fig. 18). The relationship between the control signals 20 and 21 for the switching circuit 17 in the recording mode and the control signals 28 and 29 for the switching circuit 25 in the reproduction mode is such that the signals 20 and 28 are always in phase with each other for the recorded and reproduced tracks. In Figs. 18 and 19, when the head B is used for recording and reproduction, I-B, II-B, III-B,... are HIGH level and when the head A is used for recording and reproduction, I-A, II-A, III-A... are LOW level. However, in the reproduction mode, the signals 21 and 29 are phase (29(1) in Fig. 18) or out of phase (29(2) in Fig. 18) with the signals in the recording mode. The connections of the switching circuit 25, the amounts of delay of the reproduced chrominance signal and the total amounts of delay of the chrominance signal in the recording and reproducing modes for the respective cases are shown in Fig. 18 by 32—34 (reproduction (1)) and 35—37 (reproduction (2)). In the case of the reproduction (1), the total delay of the chrominance signal in the recording and reproduction modes is the repetition of 2.0 H for three fields and zero for one field, as shown by 34 in Fig. 18. In the case of the reproduction (2), the total delay of the chrominance signal in the recording and reproduction modes is the repetition of 1.0 H for three fields and 3.0 H for one field. In any case, the difference of delay of the chrominance signal between the adjacent fields (tracks) in 2.0 H. Even when the heads are switched without changing the sequence of R and B of the reproduced chrominance signal, the sequence of R, B, R, B,... is maintained. As a result, the chrominance discrimination circuit of the television receiver operates properly to reproduce proper color image.

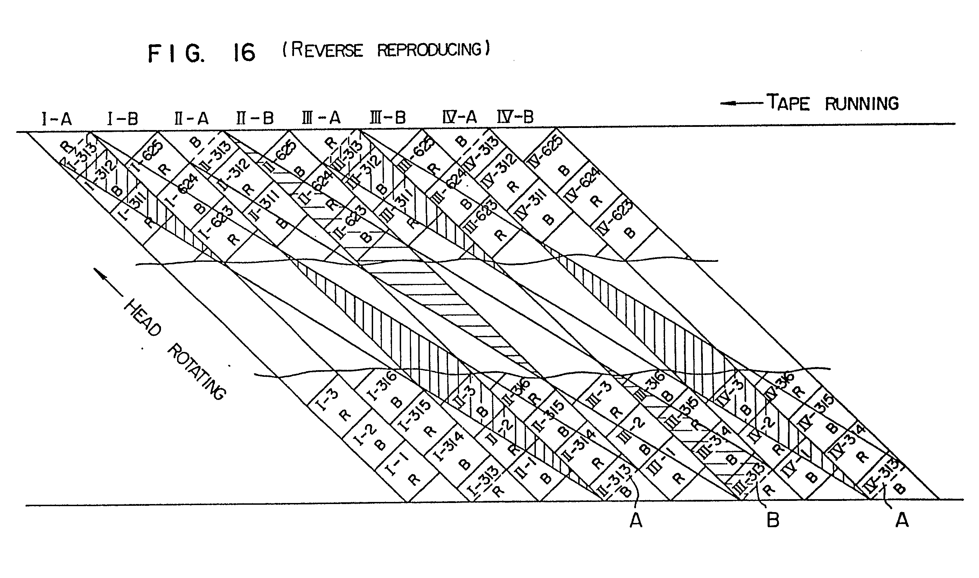

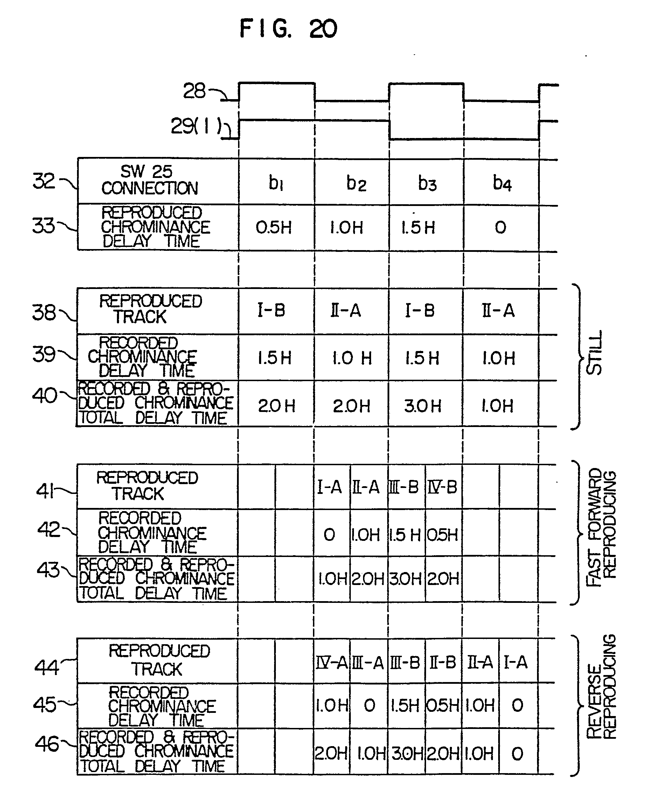

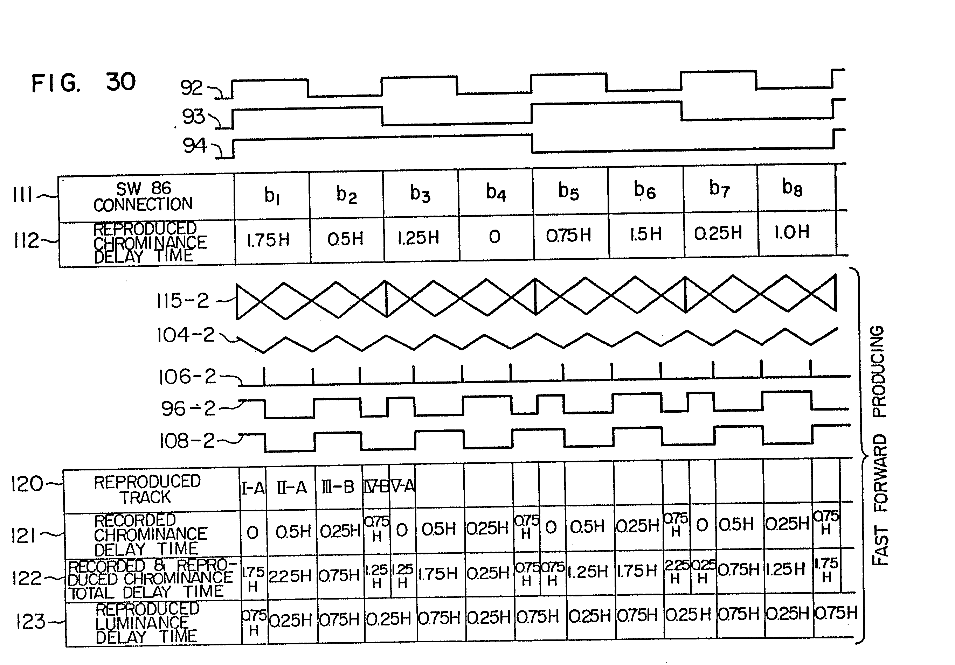

The special reproduction mode is now discussed. As explained before in connection with Figs. 2—4 and Figs. 7—9, there are five cases in which the discontinuity of the chrominance signal occurs in the special reproduction mode. The present invention is explained for those five cases. Fig. 20 shows the amounts of delay of the chrominance signals for the respective tracks when the recorded pattern of the chrominance signal as shown in Fig. 19 is reproduced in the special reproduction mode by the reproduction loci as shown in Figs. 14—16. The signals 28—33 represent the same ones in Fig. 18. Numerals 38—40 represent the reproduced track, the delay of the recorded chrominance signal and the total delay of the chrominance signal in the recording and reproduction modes for the still reproduction mode (Fig. 14), 41—43 represents those for the fast forward reproduction mode (Fig. 15) and 44—46 represent those for the reverse reproduction mode. The case 1) of the special reproduction mode corresponds to the switching from the track I-A to the track II-A in Fig. 15 and the switching from the track III-B to the track IV-B and the delay of the chrominance signal appears as shown by 43 in Fig. 20. In this case, since one head is used during one reproduction cycle, the switching of the delay of the chrominance signal does not occur during the reproduction. As seen from the recorded pattern shown in Fig. 19, the chrominance signals in the adjacent tracks are arranged side by side. Therefore, the continuity of the chrominance signal is maintained. In 43 of Fig. 20, the amount of delay changes by 1.0 H at the switching from I-A to II-A and switching from III-B to IV-B. Since the sequence of the chrominance signals is reversed when the original pattern as shown in Fig. 13 is reproduced, the sequence of the chrominance signals can be corrected properly by giving the change of 1.0 H to the original signal at the time of switching. The case 2) corresponds to the switching from I-B to II-A in Fig. 14 and the switching from III-A to III-B in Fig. 16, and the chrominance signal delays appear as shown by 40 and 46 in Fig. 20. In this case, the sequence of the chrominance signals can be maintained by the same switching of the chrominance signal delay as in the normal reproduction mode. The case 3) corresponds to the switching from II-A to III-B in Fig. 15 and the chrominance signal delay appears as shown by 43 in Fig. 20. In this case, the amount of delay of the chrominance signal changes by 1.0 H when the head is switched. Since the sequence of the chrominance signals is reversed when the original pattern (Fig. 13) is reproduced, the sequence can be corrected properly by giving the change of 1.0 H. The case 4) corresponds to the switching from II-A to I-B in Fig. 14 and the switching from II-B to II-A in Fig. 16 and the chrominance signal delays appear as shown by 40 and 46 in Fig. 20. Again, in this case, the amount of delay of the chrominance signal changes by 1.0 H when the head is switched. Since the sequence of the chrominance signals is reversed when the original pattern is reproduced, the sequence can be corrected by giving the change of 1.0 H. The case 5) corresponds to the switching from IV-A to III-A in Fig. 16, the switching from II-A to I-A and the switching from III-B to II-B, and the chrominance signal delay appears as shown by 46 in Fig. 20. Like in the case 1), the sequence of the reproduced chrominance signals can be corrected properly. While the signal 29 (1) is shown in Fig. 30 as the selection signal 29 for the switching circuit 25, the above is equally applicable to the signal 29 (2).

While the output of the frequency converter 11 is directly applied to the terminal $b_4$ of the reproduction switching circuit 25 in the embodiment of Fig. 17, it may be applied through a 2.0 H delay line. In this case, the delay of the reproduced chrominance signal when it is applied to the terminal $b_4$ in the reproduction in

**0 024 869**

Figs. 18 and 20 is 2.0 H and the total delay of the chrominance signal in the recording and reproduction modes accordingly increases by 2.0 H but the sequence of the chrominance signals is not affected.

Thus, in accordance with the present invention, the sequence of the chrominance signals can be maintained properly in any special reproduction mode so that the improper operation of the chrominance discrimination circuit of the television receiver is prevented and proper color image is reproduced.

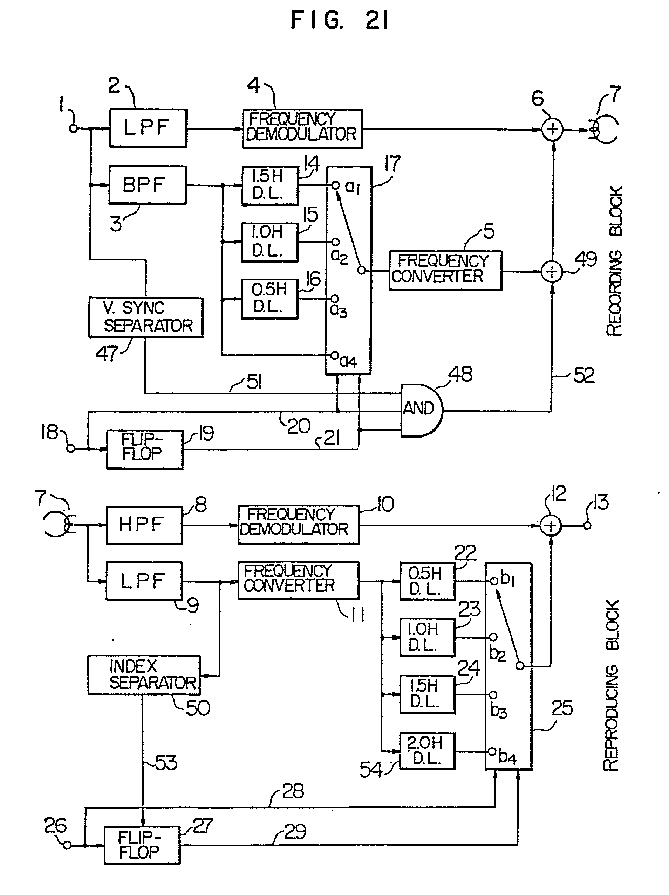

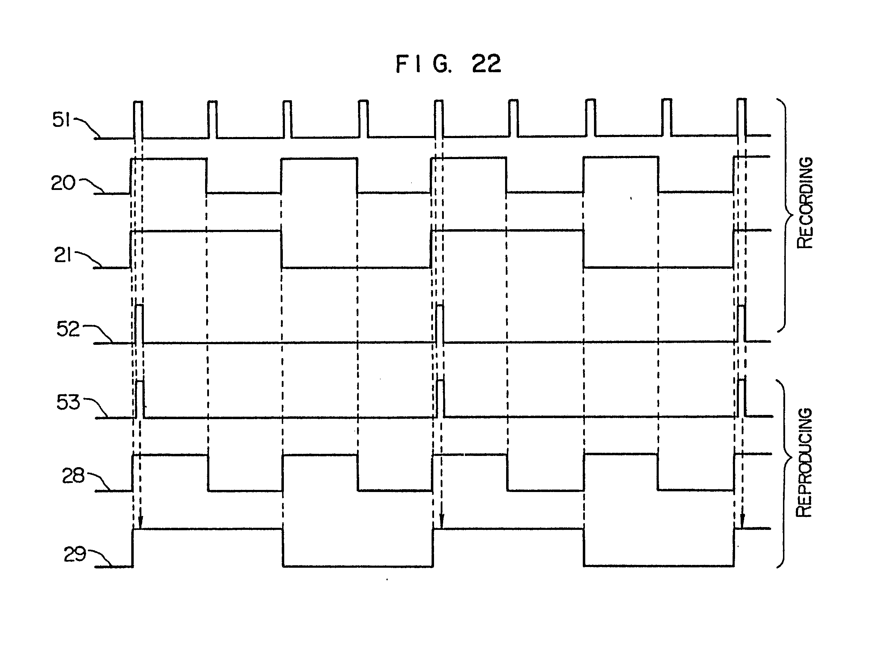

In the embodiment of Fig. 17, the control signal 29 for the reproduction switching circuit 25 is either in phase or out of phase with the signal in the recording mode, but it may be rendered in phase with the signal in the recording mode by using an index signal. Fig. 21 shows a basic block diagram of a second embodiment and Fig. 22 shows waveforms in the circuit of Fig. 21. In Fig. 21, numerals 1—29 represent the identical elements to those shown in Fig. 17. Numeral 47 denotes a vertical synchronizing signal separator, 48 denotes an AND circuit, 49 denotes an adder, 50 denotes an index separator and 54 denotes a 2H delay line. A vertical synchronizing signal 51 (Fig. 22) separated from an input video signal by the vertical synchronizing signal separator 47, the head selection signal 20 (Fig. 22) applied to the terminal 18 and the output signal 21 (Fig. 22) from the flip-flop 19 are fed to the AND circuit 48 to produce an index signal 52 (Fig. 22) at the output. The index signal 52 is superimposed on the low frequency converted chrominance signal in the adder 49 and the combined signal is recorded. The index signal is inserted in a vertical blanking of a track in which both the signals 20 and 21 are HIGH level, that is, a track in which the chrominance signal delay is 1.5 H. In the reproduction mode, the index signal 53 (Fig. 22) is separated from the output chrominance signal of the low-pass filter 9 by the index separator 50. The index signal is used to control the flip-flop 27 such that when the index signal is HIGH level the flip-flop output is HIGH level. As a result, the signal 29 assumes the phase as shown in Fig. 22 so that both the signal 28 (Fig. 22) and the signal 29 are in phase with the signals in the recording mode. Applied to the terminal $b_4$ of the switching circuit 25 is the output chrominance signal of the frequency converter 11 through the 2H delay line 54. Thus, the delay of the control signal for the switching circuit 25 and the chrominance signal delay in the reproduction mode are both 2.0 H in the reproduced chrominance signal delay (33-$b_4$ in Fig. 18) when it is applied to the terminal $b_4$ in the reproduction (1) of Fig. 18 and the total chrominance signal delay (34-$b_4$ in Fig. 18) in the recording and reproduction modes. Thus, in chrominance signal delay is always 2.0 H. In this case, since there is no difference of the chrominance signal delay between the fields unlike the case of Fig. 17, no flicker appears at the vertical boundary of colors and the quality of picture image is further improved. However, the chrominance signal retards by 2 H with respect to the brightness signal. In order to reduce the difference to 1.0 H or to zero, the reproduced brightness signal may be delayed by a delay element such as CCD or it may be modulated with a high frequency signal and then delayed by an ultrasonic delay line so that it is delayed by a time period which is an integer multiple of one line time. When the brightness signal is delayed by 1 H, the chrominance signal retards by 1 H with respect to the brightness signal, and when the brightness signal is delayed by 2 H the timings of the brightness signal and the chrominance signal are exactly equal and high quality of picture image can be reproduced.

While the explanation given above refers to the case where $a_H=1.0$ and the recorded chrominance signals are delayed in the repetition of 1.5 H, 1.0 H, 0.5 H, 0 and the reproduced chrominance signals are delayed in the repetition of 0.5 H, 1.0 H, 1.5 H, 0 (2.0 H), the same teaching is equally applicable to the case where $a_H=2n+1$ (where n is an integer). When $a_H=2n+1$, the recorded chrominance signals may be delayed such that the delay is reduced by 0.5 H for every track or they may be delayed in the time sequence which is 2 kH (where k is an integer) longer than the above sequence (the repetition sequence needs not be 0.5 H, 1.0 H,... but may be 1.8 H, 1.3 H, 0.8 H, 0.3 H or 1.8 H, 3.3 H, 0.8 H, 2.3 H and it needs not be the repetition of four tracks but may be the repetition of the tracks of a multiple of four), and the reproduced chrominance signals may be delayed such that the delay is increased by 0.5 H for every track in or they may be delayed in the time sequence which is 2 kH longer than the above sequence. If the reproduced brightness signal is not delayed, the total chrominance signal delay in the recording and reproduction modes for the normal reproduction must be an integer multiple of 1 H, and when the reproduced brightness signal is delayed, the difference between the total delay of the chrominance signal and the delay of the brightness signal need be an integer multiple of 1 H. For example, in the arrangement shown in Fig. 21, if the brightness signal is delayed by 1.5 H, the delay lines 22, 23, 24 and 54 are 0, 0.5 H, 1.0 H and 1.5 H delay lines, respectively so that the timings of the brightness signal and the chrominance signal in the reproduction mode coincide with each other.

When $a_H=2n$, the recorded chrominance signals may be recorded such that the delay is increased by 0.5 H for every track or they may be delayed in the time sequence which is 2 kH shorter than the above sequence (e.g. the sequence of 0, 0.5 H, 1.0 H, 1.5 H) and the reproduced chrominance signals may be delayed in the sequence which is reverse to that in the recording mode.

While the present invention has been described for the case where $a_H=n$, particularly $a_H=1.0$, the present invention is applicable to the pattern of any $a_H$. In this case, the recorded chrominance signals may be delayed such that the delay increases by $(a_H+0.5)H$ for every track or they may be delayed in the time sequence which is 2 kH shorter than the above sequence, and the reproduced chrominance signal may be delayed in the sequence which is reverse to that in the recording mode. When $a_H=1.0$, if the recorded chrominance signals are delayed such that the delay increases by $(a_H+0.5)H=1.5$ H for every track or delayed in the time sequence which is 2 kH shorter than the above sequence, they are delayed, for example, in the sequence of 1.5 H, 3.0 H−2 H=1.0 H (k=1), 4.5 H−4 H=0.5 H (k=2), 6.0 H−6 H=0 (k=3). This

9

co-responds to the explanation set forth above. When $a_H=2n+1$, then $a_H+0.5=2n+1.5$ and the delay is equal to that when $a_H=1.0$ (n=0). When $a_H=2n$, then $a_H+0.5=2n+0.5$ and the recorded chrominance signal may be delayed such that the delay increases by 0.5 H for every track, e.g. in the sequences of 0, 0.5 H, 1.0 H, 1.5 H.

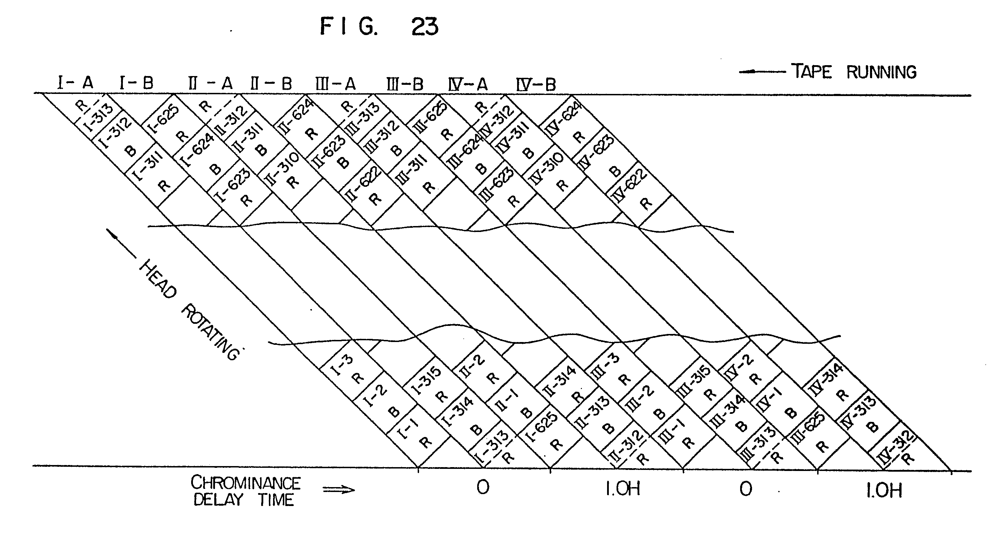

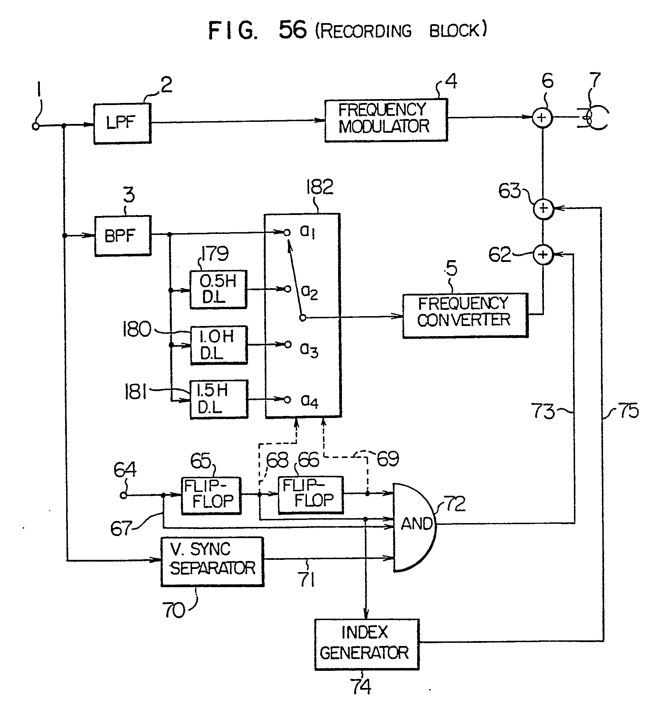

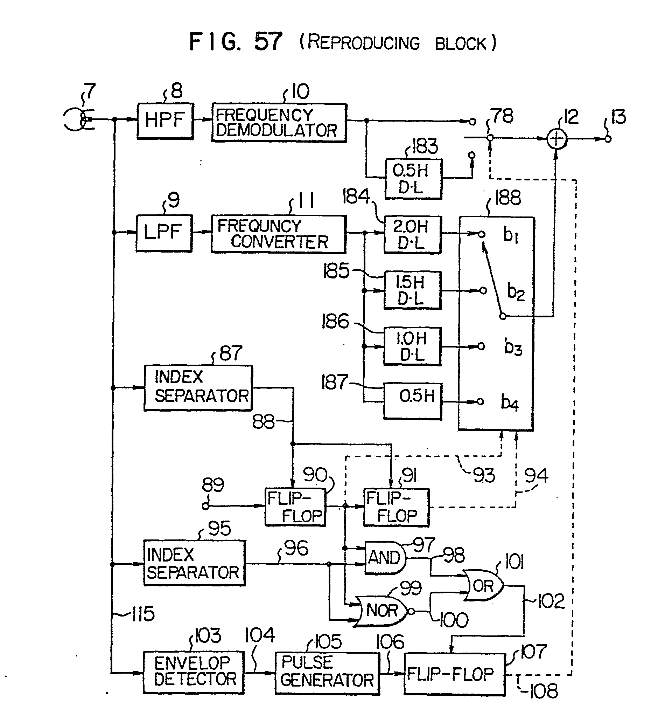

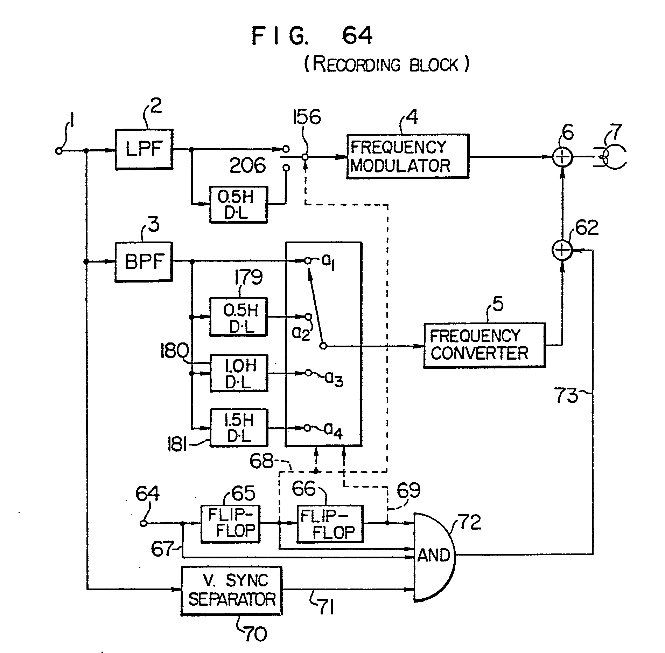

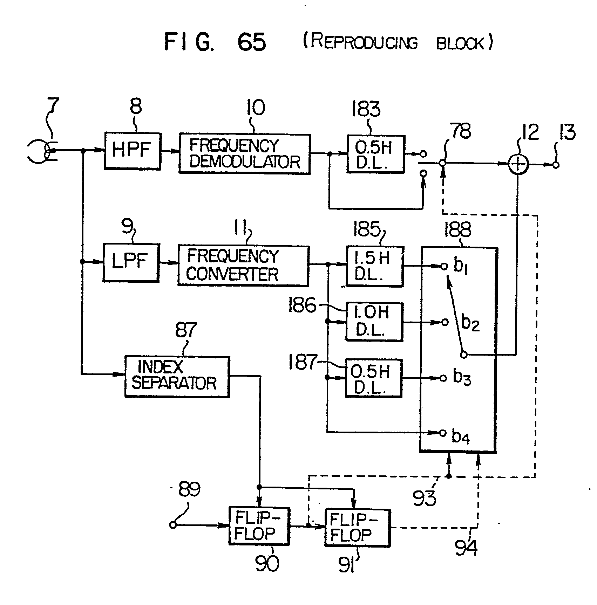

While all of the chrominance signals on the adjacent tracks are arranged side by side in the embodiment explained above, the continuity of the chrominance signal can be maintained by delaying the recorded chrominance signals sequentially such that the chrominance signals on at least every other track in the recorded pattern are arranged side by side and delaying the reproduced chrominance signal in the reverse sequence. Thus, a third embodiment for the case where $a_H=1.0$ may be constructed such that the chrominance signals are delayed in every other track in the sequence of 0, 1.0 H, 0, 1.0 H as shown in the recorded pattern of Fig. 23 and, in the normal reproduction mode, the reproduced chrominance signals are delayed in the reverse sequence. The construction and the continuity of the chrominance signal in the special reproduction mode are same as those of a fifth embodiment where $a_H=0.75$ (see Figs. 56 and 57) and a sixth embodiment (see Figs. 64 and 65).

This is applicable to any pattern of any $a_H$ ($a_H \neq (2n+1)/2$) except $a_H=1.0$. In this case, the chrominance signals may be delayed such that the delay increases $2a_H+1$ for every other track or they may be delayed in the time sequence which is 2 kH shorter than the above sequence. For example, when $a_H=1.0$, then $2a_H+1=3$ and the recorded chrominance signals are delayed such that the delay increases by 3 H for every other field or in the time sequence which is 2 kH shorter than the above sequence, and more particularly they are delayed in the sequence of 3 H−2 H=1 H (k=1), 6 H−6 H=0 (k=3), 9 H−8 H=1 H (k=4), 12 H−12 H=0 (k=6). This corresponds to the recorded pattern shown in the embodiment.

When $a_H=n$, the continuity of the brightness signal is maintained in the special reproduction mode. Accordingly, in the embodiment described above, the brightness signal delay is not switched periodically. It may be switched in a similar manner to the chrominance signal. In this case, the timings of the brightness signal and the chrominance signal are always equal.

A method for maintaining the continuities of the horizontal synchronizing signal and the chrominance signal in the special reproduction mode when $a_H=0.75$ is now explained.

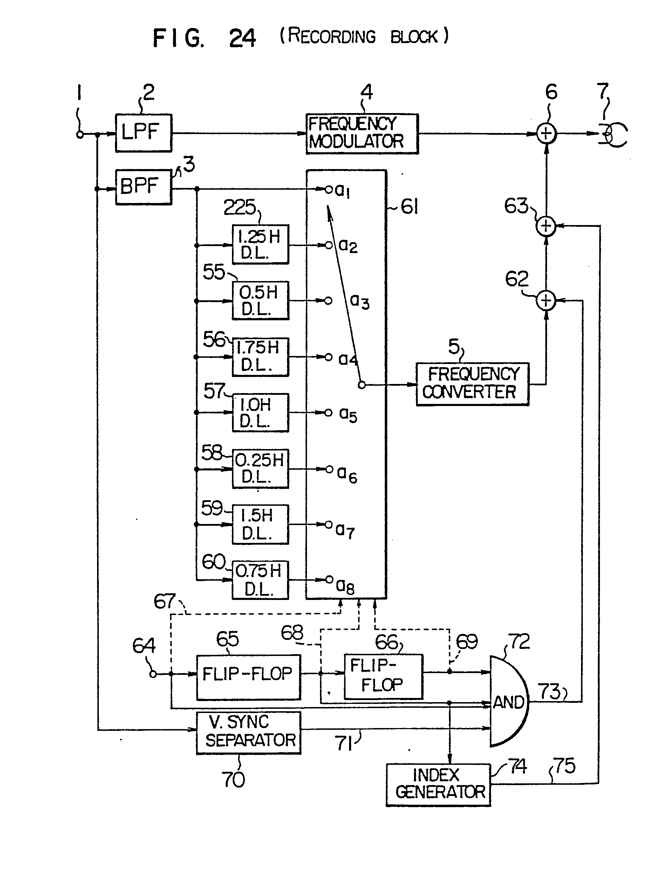

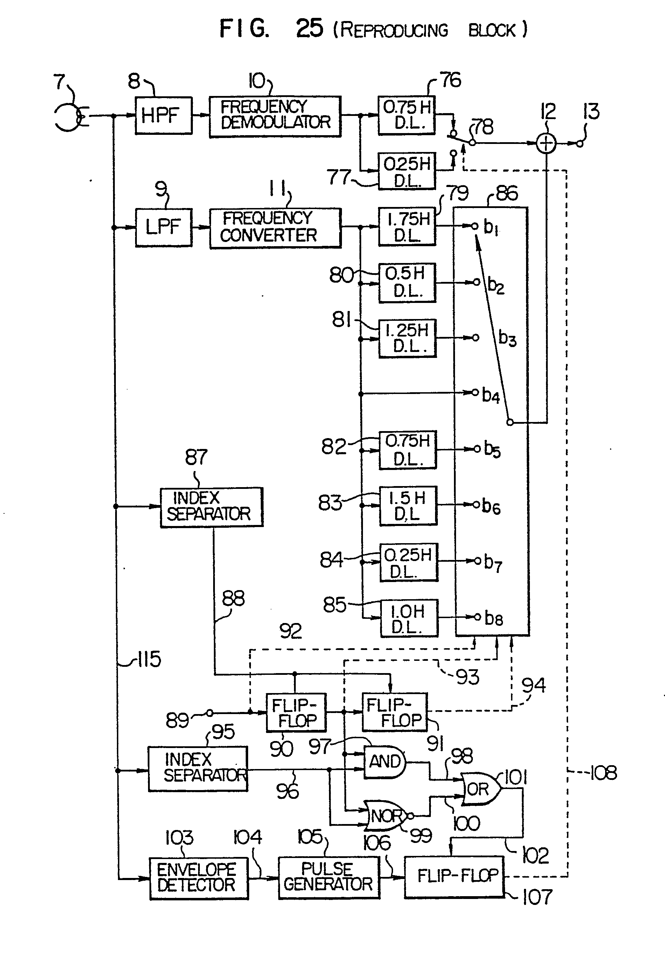

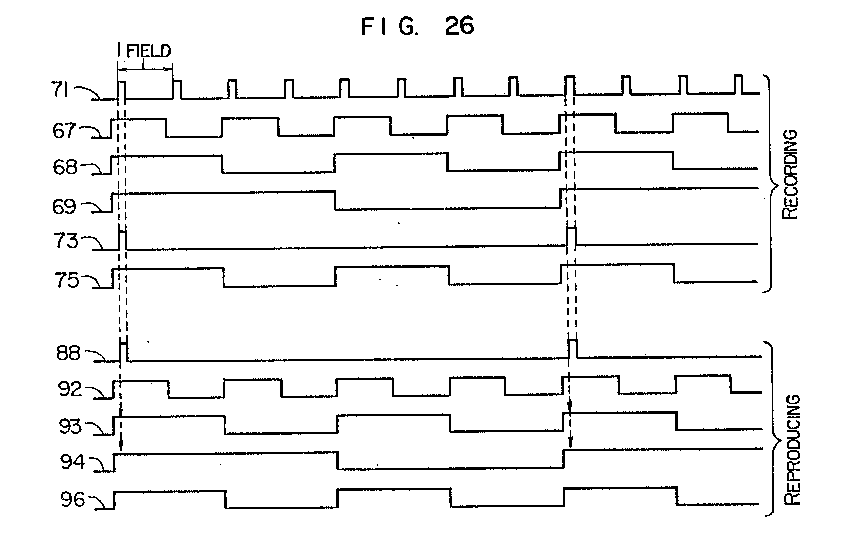

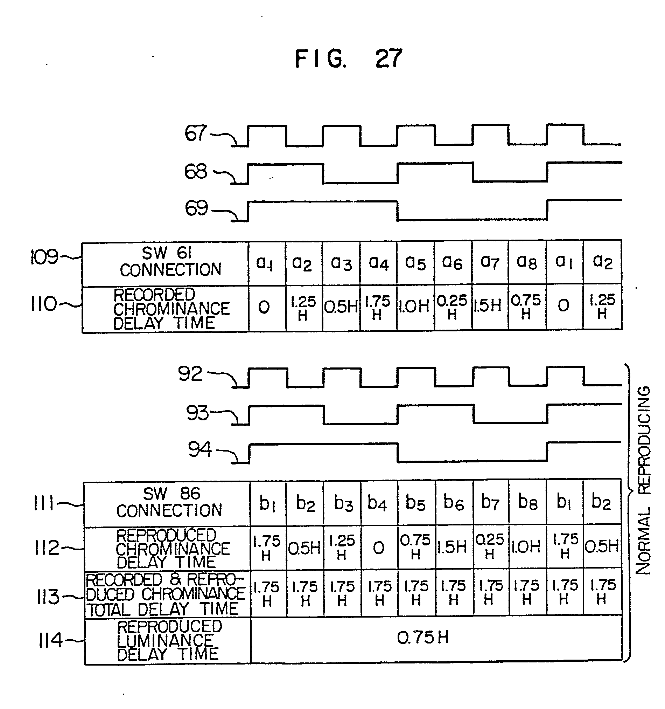

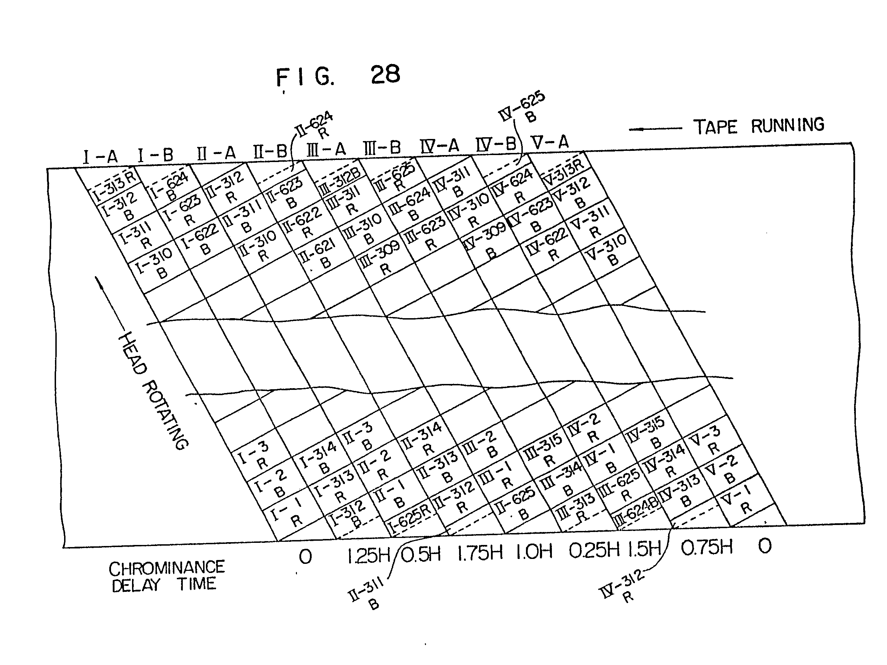

Figs. 24 and 25 show basic block diagram of a first embodiment for $a_H=0.75$, Fig. 26 shows switching control signals, Fig. 27 show waveforms in the circuits of Figs. 24 and 25 and the relationship between the brightness signal and the chrominance signal, and Fig. 28 shows a recorded pattern of the chrominance signal ($a_H=0.75$). The recorded pattern of the brightness signal is identical to that shown in Fig. 6. Referring to those figures, the present invention will be explained.

Fig. 24 shows a block diagram of a recording block in accordance with one embodiment of the present invention. Numerals 1—7 represent the same elements as those shown in Fig. 5 and they function in the same manner. Numerals 225, 55—60 denote 1.25 H, 0.5 H, 1.75 H, 1.0 H, 0.25 H, 1.5 H and 0.75 H delay lines, respectively, numeral 61 denotes a switching circuit, numerals 62 and 63 denote adders, numeral 64 denotes a head selection signal input terminal, numerals 65 and 66 denote flip-flops, numeral 67 denotes a head selection signal, numerals 68 and 69 denote output signals of the flip-flops 65 and 66, respectively, numeral 70 denotes a vertical synchronizing signal separator, numeral 71 denotes a vertical synchronizing signal, numeral 72 denotes an AND circuit, numeral 73 denotes a first index signal, numeral 74 denotes a second index signal generator and numeral 75 denotes a second index signal. The numerals of the waveforms shown in Figs. 26 and 27 corresponds to those numerals in Fig. 24. In Fig. 24, the brightness signal is fed through the low-pass filter 2 to the frequency modulator 4 where it is modulated and the output signal therefrom is combined with the chrominance signal by the adder 6. On the other hand, the output carrier chrominance signal from the band-pass filter 3 is applied to a terminal $a_1$ of the switching circuit 61 directly, to a terminal $a_2$ of the switching circuit 61 through the 1.25 H delay line 225, to a terminal $a_3$ of the switching circuit 61 through the 0.5 H delay line 55, to a terminal $a_4$ of the switching circuit 61 through the 1.75 H delay line 56, to a terminal $a_5$ of the switching circuit 61 through the 1.0 H delay line 57, to a terminal $a_6$ of the switching circuit 61 through the 0.25 H delay line 58, to a terminal $a_7$ of the switching circuit 61 through the 1.5 H delay line 59, and to a terminal $a_8$ of the switching circuit 61 through the 0.75 H delay line 60, respectively. The switching circuit 61 is controlled by the head selection signal 67 (Figs. 26 and 27) applied to the terminal 64, the signal 68 (Figs. 26 and 27) which is derived by frequency dividing the signal 67 by the factor of two by the flip-flop 65 and the signal 69 (Figs. 26 and 27) which is derived by frequency dividing the signal 68 by the factor of two by the flip-flop 66. The switching circuit 61 selects the signal at;

the terminal $a_1$ when the signal 67 is HIGH, the signal 68 is HIGH and the signal 69 is HIGH,
the terminal $a_2$ when the signal 67 is LOW, the signal 68 is HIGH and the signal 69 is HIGH,
the terminal $a_3$ when the signal 67 is HIGH, the signal 68 is LOW and the signal 69 is HIGH,
the terminal $a_4$ when the signal 67 is LOW, the signal 68 is LOW and the signal 69 is HIGH,
the terminal $a_5$ when the signal 67 is HIGH, the signal 68 is HIGH and the signal 69 is LOW,
the terminal $a_6$ when the signal 67 is LOW, the signal 68 is HIGH and the signal 69 is LOW,
the terminal $a_7$ when the signal 67 is HIGH, the signal 68 is LOW and the signal 69 is LOW, and
the terminal $a_8$ when the signal 67 is LOW, the signal 68 is LOW and the signal 69 is LOW. (See 109 in Fig. 27)

Accordingly, the chrominance signals which delay by 0, 1.25 H, 0.5 H, 1.75 H, 1.0 H, 0.25 H, 1.5 H, 0.75 H,

**0 024 869**

0, 1.25 H,... for every track (field) with respect to the input signals, as shown by 110 in Fig. 27 are produced at the output of the switching circuit 61.

The output chrominance signal from the switching circuit 61 is applied to the frequency converter 5 and the frequency-converted chrominance signal is applied to the adder 62, to which the first index signal 73 (Fig. 26) for determining a reference for the control signal is also applied. The first index signal 73 is derived from the AND circuit 72 to which the vertical synchronizing signal 71 (Fig. 26) from the vertical synchronizing signal separator 70, the head selection signal 67 (Figs. 26 and 27), the output signal 68 (Figs. 26 and 27) from the flip-flop 65 and the output signal 69 (Figs. 26 and 27) from the flip-flop 66 are applied. When all of the four signals are HIGH, the AND circuit 72 produces a signal of 8-field period. It corresponds to the zero delay time of the chrominance signal. The combined signal of the chrominance signal and the first index signal 73 from the adder 62 is then applied to the adder 63, to which the second index signal 75 for controlling the delay time switching of the reproduced brightness signal is also applied in order to keep the time difference between the reproduced carrier chrominance signal and the reproduced brightness signal in the special reproduction mode to be zero or an integer multiple of H. The second index signal 75 is produced by the index generator 74 which is controlled by the output signal 68 from the flip-flop 65. For example, it represents the HIGH level periods (0, 1.25 H, 1.0 H, 0.25 H delay periods of the chrominance signal) of the signal 68 as shown in Fig. 26. The signal 75 may be generated throughout the above period or in a portion of the above period at a frequency which does not overlap the frequency bands of the chrominance signal and the brightness signal, or it may be generated at any frequency throughout or in a portion of the horizontal synchronizing signal period in whole or a portion of the above period. For the sake of convenience the signal 75 is considered as a pulse signal in Fig. 15 and the subsequent figures and description. The actually recorded signal and the pulse signal can be easily converted from one to the other by the amplitude modulation/demodulation technique. The combined signal of the chrominance signal and the first and second index signals 73 and 75 from the adder 63 is applied to the adder 6 and then recorded in the same manner as in the case of Fig. 5. Assuming that the chrominance signals to be recorded on the tracks I-A, I-B, II-A, II-B, III-A, III-B, IV-A, IV-B,... are delayed by 0, 1.25 H, 0.5 H, 1.75 H, 1.0 H, 0.25 H, 1.5 H, 0.75 H,..., respectively, the recorded pattern of the chrominance signals appears as shown in Fig. 28 in which the adjacent tracks are all arranged side by side. The first index signals are inserted on the tracks I-A, V-A,... and the second index signals are inserted on the tracks [I-A, I-B], [III-A, III-B],... The relationship between the tracks and the chrominance signals need not be limited to that shown in Fig. 28, provided that the delay time switching corresponds to the reference.

A reproducing block is now explained. Fig. 25 shows the reproducing block of the first embodiment. The relationship between the switching control signals, the waveforms in the circuit and the chrominance signals is shown in Figs. 26 and 27. In Fig. 25, numerals 7—13 represent the same elements as shown in Fig. 5 and they function in the same manner. Numerals 76 and 77 denote 0.75 H and 0.25 H delay lines, respectively, numeral 78 denotes a switch, numerals 79—85 denote 1.75 H, 0.5 H, 1.25 H, 0.75 H, 1.5 H, 0.25 H and 1.0 H delay lines, respectively, numeral 86 denotes a switching circuit, numeral 87 denotes a first index separator, numeral 88 denotes a first index signal, numeral 89 denotes a head selection signal input terminal, numerals 90 and 91 denote flip-flops, numeral 92 denotes a head selection signal, numerals 93 and 94 denote output signals from the flip-flops 90 and 91, respectively, numeral 95 denotes a second index separator, numeral 96 denotes a second index signal, numeral 97 denotes an AND circuit, numeral 98 denotes an output signal from the AND circuit 97, numeral 99 denotes a NOR circuit, numeral 100 denotes an output signal from the NOR circuit 99, numeral 101 denotes an OR circuit, numeral 102 denotes an output signal from the OR circuit 101, numeral 103 denotes an envelope detector, numeral 104 denotes an output signal from the envelope detector 103, numeral 105 denotes a pulse generator, numeral 106 denotes an output signal from the pulse generator 105, numeral 107 denotes a flip-flop, and numeral 108 denotes a switching control signal. The numerals of the waveforms shown in Figs. 26 and 27 correspond to those numerals shown in Fig. 25. The reproduced brightness signal from the frequency demodulator 10 is applied to the 0.75 H delay line 76 and the 0.25 H delay line 77 and the outputs therefrom are applied to the switch 78. The switch 78 is controlled by the switching control signal 108 such that only the 0.75 H delayed signal is provided at the output of the switch 78 in the normal reproduction mode. The control signal 108 will be explained later in conjunction with the special reproduction mode of operation. The output signal from the switch 78 is combined with the reproduced chrominance signal by the adder 12. On the other hand, the low frequency converted reproduced chrominance signal separated by the low-pass filter 9 is reconverted to the original frequency chrominance signal by the frequency converter 11 and it is applied to input terminals $b_1$, $b_2$, $b_3$, $b_4$, $b_5$, $b_6$, $b_7$ and $b_8$ of the switching circuit 86 through the 1.75 H delay line 79, the 0.5 H delay line 80, the 1.25 H delay line 81, directly, the 0.75 H delay line 82, the 1.5 H delay line 83, the 0.25 H delay line 84 and the 1.0 H delay line 85, respectively. The switching circuit 86 is controlled by the head selection signal 92 (Figs. 26 and 27) applied to the head selection signal input terminal 89, the signal 93 (Figs. 26 and 27) which is derived by frequency dividing the signal 92 by the factor of two by the flip-flop 90 and the signal 94 (Figs. 26 and 27) which is derived by frequency dividing the signal 93 by the factor of two by the flip-flop 91. It functions in the same manner as the switching circuit 61. (See the relation of 92, 93, 94 and 111 in Fig. 27). Thus, as shown by 112 in Fig. 27, the reproduced chrominance signals which delay by 1.75 H, 0.5 H, 1.25 H, 0, 0.75 H, 1.5 H, 0.25 H, 1.0 H,... for every track with respect to the input signals to the respective delay lines are produced at the output of the switching circuit 86. As described above, since the delay is included in

11

each track in the recording mode, the total delay for the recording and reproduction modes is 1.75 H for each track, as shown by 113 in Fig. 27. This is because the control signal for the switching circuit 86 is controlled by the reproduced first index signal 88 (Fig. 26) so that the total delay times of the respective tracks are equal to each other. The relationship between those signals is shown in Fig. 26. The first index signal 88 is extracted from the reproduced signal from the video head by the first index separator 87 and it is applied to the reset terminals of the flip-flops 90 and 91, respectively. As the first index signal is applied, the output signals 93 and 94 of the flip-flops 90 and 91 assume HIGH level and the signals 93 and 94 are maintained by the head selection signal 92 until the next index signal is received. The first index signal 73 is generated only when the vertical synchronizing signal 71, the head selection signal 67 and the output signals 68 and 69 of the flip-flops 65 and 66, respectively, are all HIGH level in the recording mode. In the normal reproduction mode, the switching of the delay of the reproduced chrominance signal is controlled based on the separated reproduced first index signal 88. The chrominance signal from the switching circuit 86 is combined with the reproduced brightness signal by the adder 12 and the reproduced video signal is provided at the terminal 13. While the reproduced brightness signal is delayed by 0.75 H in the reproduction mode in the embodiment explained above, it may be delayed by 1.75 H or 1.75 H plus an integer multiple of H so that the time difference between the reproduced brightness signal and the reproduced chrominance signal is rendered zero or to be equal to an integer multiple of H. Alternatively, the brightness signal may be delayed in the recording mode and not delayed in the reproduction mode, or both of the above may be simultaneously implemented. In the embodiment explained above, the switching of the delay is controlled by the first index signal such that the total delay times of the chrominance signals in the recording and reproduction modes for the respective tracks are equal to each other. When the reproduced second index signal is used in place of the reproduced first index signal to control the flip-flop 90 (not to control the flip-flop 91), there may be a time difference of 2 H between the total delay times in the recording and reproduction modes but the continuity of the chrominance signal can be maintained and the time difference between the chrominance signal and the brightness signal is zero or an integer multiple of H so that proper chrominance signal and video signal can be reproduced.

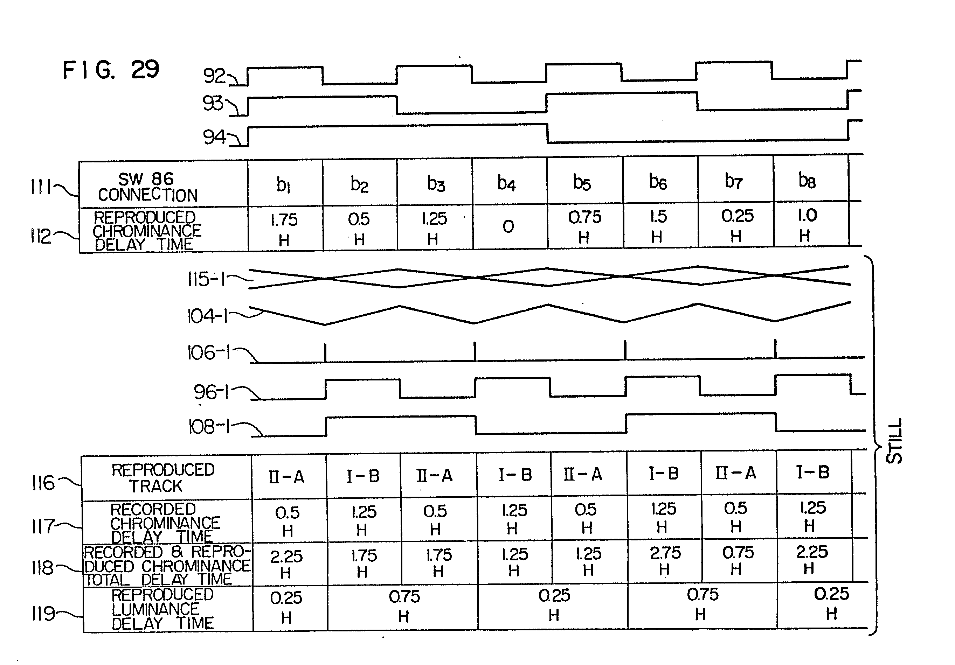

The special reproduction mode of operation is now explained. In the special reproduction mode, the control by the reproduced first index signal is not carried out and the output signals of the flip-flops 90 and 91 which are in synchronism with only the head selection signal are used as the switching control signal. As explained before in connection with Figs. 7—9, there are five cases in which the discontinuity of the chrominance signal occurs in the special reproduction mode. In the case of $a_H=0.75$ described above, the continuities of the horizontal synchronizing signal and the chrominance signal are lost as explained above. The embodiment of the present invention is now explained for those cases. Figs. 29, 30 and 31 show the relationships of the delay times of the brightness signals and the chrominance signals for the respective tracks when the recorded pattern of the brightness signal shown in Fig. 6 and the recorded pattern of the chrominance signal shown in Fig. 28 are reproduced in the special reproduction mode in accordance with the reproduction loci shown in Figs. 7—9. The waveforms 92, 93, 94, 111 and 112 are identical to those shown in Fig. 27, waveforms 115, 104, 106, 96 and 108 show the envelope waveforms, the envelope detector output signals, the pulse generator output signals, the second index signals and the switching control signals for the respective cases of the special reproduction mode. The waveforms 116—119, 120—123 and 124—127 show the reproduced tracks, the delay times of the recorded chrominance signals, the total delay times of the chrominance signal in the recording and reproduction modes and the delay times of the brightness signal in the reproduction mode, for the still reproduction mode, the fast forward reproduction mode, and the reverse reproduction mode, respectively. Before the delay relationship between the chrominance signal and the brightness signal in the special reproduction mode is explained, the function of the control signal 108 for the switch 78 which selects the delay for the brightness signal is first explained for the still reproduction mode of operation shown in Fig. 29. The second index signals 75 inserted at 2-field interval in the recording mode of operation (in the embodiment, they are inserted in 0, 1.25 H, 1.0 H, 0.25 H delay periods of the recorded chrominance signal) are separated by the second index separator 95 from the head output signal during the special reproduction mode of operation. In the embodiment of Fig. 29, the second index signal 96 is generated during the reproduction period for I-B. The generated second index signal 96 and the output signal 93 from the flip-flop 90 are applied to the AND circuit 97 and the NOR circuit 99 and the two output signals 98 and 100 therefrom are applied to the OR circuit 101 which produces the signal 102. The logical operation output 102 for the index signal 96 and the output signal 93 of the flip-flop 90 is; HIGH when the signal 96 is HIGH and the signal 93 is HIGH, LOW when the signal 96 is HIGH and the signal 93 is LOW, LOW when the signal 96 is LOW and the signal 93 is HIGH, and HIGH when the signal 96 is LOW and the signal 93 is LOW. On the other hand, the envelope 115 is detected by the envelope detector 103 which produces the signal 104, which is then applied to the pulse generator 105 which in turn produces the pulse at the falling portion of the envelope. The pulse 106 is applied to the flip-flop 107 which produces the switching control signal 108 having a period equal to the interval of the falling points of the envelope. The output signal 102 of the OR circuit 101 is applied to the flip-flop 107 as a control signal so that the switching control signal 108 assumes HIGH level when the signal 102 is HIGH. The switching operation of the switch 78 is controlled by the switching control signal 108. In the period in which the total delay time of the chrominance signal in the recording and reproduction modes is equal to an integer multiple of H plus 0.75 H (HIGH level period of the signal 108), the brightness signal is

# 0 024 869

delayed by 0.75 H, and in the period in which the total delay time is equal to an integer multiple of H plus 0.25 H (LOW level period of the signal 108) it is delayed by 0.25 H.

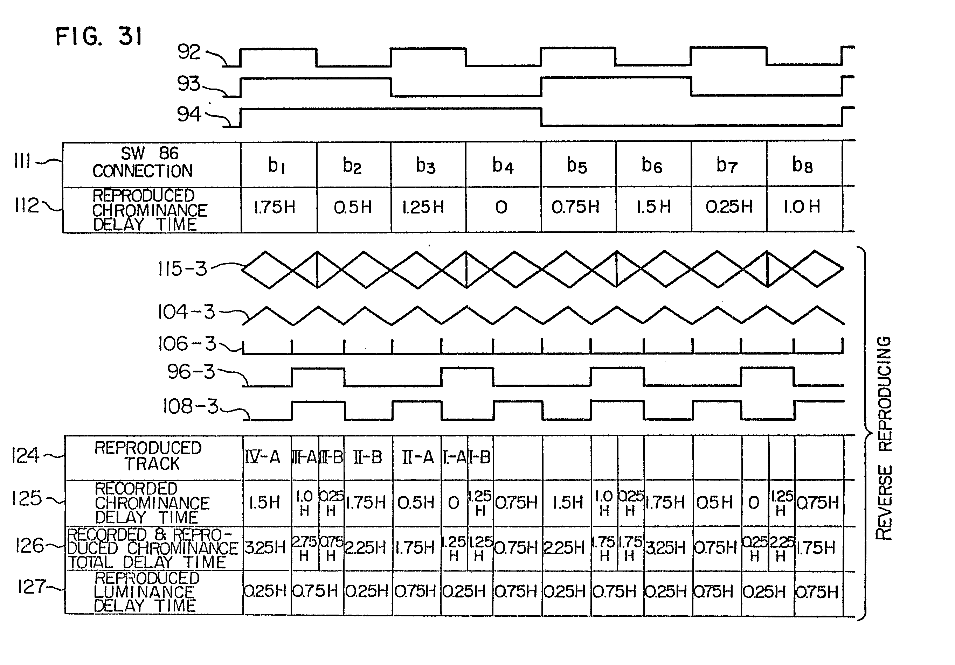

The case 1) of the special reproduction mode corresponds to the switching from the track I-A to the track II-A in Fig. 8 and the switching from the track III-B to the track IV-B, and the chrominance signal delay as shown by 122 in Fig. 30 appears. Since one head is used in one reproduction cycle in this case, the switching of the delay of the chrominance signal is not carried out in the course of reproduction. As seen from the recorded pattern shown in Fig. 28, the chrominance signals in every other track are arranged side by side so that the continuity of the chrominance signal is maintained. In 122 of Fig. 30, the amount of delay changes by 0.5 H at the switching from I-A to II-A and from III-B to IV-B. (That is, the chrominance signal after the switching retards by 0.5 H.) Since the chrominance signal after the discontinuity point is advanced by 0.5 H when the original pattern shown in Fig. 6 is reproduced, the sequence of the chrominance signals can be corrected properly by the 0.5 H delay. Like in the case of Fig. 29, the brightness signal is delayed by 0.75 H when the signal 108 is HIGH and by 0.25 H when the signal 108 is LOW. In this manner, the continuity of the horizontal synchronizing signal can be maintained by shifting the brightness signal by 0.5 H at the time of switching because it has been shifted by 0.5 H at the discontinuity point when the original pattern shown in Fig. 6 has been reproduced. The case 2) corresponds to the switching from I-B to II-A in Fig. 7 and the switching from III-A to III-B in Fig. 9, and the chrominance signal delays as shown by 118 in Fig. 29 and 126 in Fig. 31 appear. In this case, the switching of the chrominance signal delay is effected in the same manner as in the normal reproduction mode and the continuity of the chrominance signal is maintained. The delay of the brightness signal appears as shown by 119 in Fig. 29 and 127 in Fig. 31. The operation is same as that in the normal reproduction mode and the continuity of the horizontal synchronizing signal is maintained. The case 3) corresponds to the switching from II-A to III-B in Fig. 8, and the chrominance signal delays as shown by 122 in Fig. 30 appear. In this case, the chrominance signal after the switching of the head retards by 0.5 H. Since the chrominance signal is advanced by 0.5 H after the discontinuity point when the original pattern shown in Fig. 6 is reproduced, the sequence of the chrominance signal can be corrected properly by the 0.5 H delay. As to the brightness signal, by providing the delay difference of 0.5 H to the track II-A at the time of switching of the head as shown by 123 in Fig. 30, the continuity of the horizontal synchronizing signal can be maintained. The case 4) corresponds to the switching from II-A to I-B in Fig. 7 and the switching from II-B to II-A in Fig. 9 and the chrominance signal delay as shown by 118 in Fig. 29 and 126 in Fig. 31 appears. In this case, the chrominance signal delay changes by 1.5 H at the time of switching of the head. Since the chrominance signal is advanced by 1.5 H when the original pattern shown in Fig. 6 is reproduced, the sequence of the chrominance signals can be corrected properly by the 1.5 H delay. As to the brightness signal, by shifting the signal by 0.5 H at the time of switching of the head as shown by 119 and 127, the continuity of the horizontal synchronizing signal can be maintained. The case 5) corresponds to the switching from IV-A to III-A in Fig. 9, the switching from II-A to I-A and the switching from III-B to II-B, and the chrominance signal delay as shown by 126 in Fig. 31 appears. Like in the case 1) above, the continuity of the chrominance signal can be maintained in this case. As described above, according to the present invention, the continuities of the horizontal synchronizing signal and the chrominance signal can be maintained in any case of the special reproduction mode so that erroneous color discrimination in the television receiver is prevented and proper color image can be reproduced. In the first embodiment explained above, the total delay time of the chrominance signal is set to 1.75 H in the normal reproduction mode. In the reproduction mode, the chrominance signal may be delayed in a manner shown in Table 1 below so that the delay time difference between the brightness signal and the chrominance signal is made zero or to be equal to an integer multiple of H.

TABLE 1

| Field | Chrominance signal delay | Brightness signal delay |
|---|---|---|
| I-A | 2.0 H | |
| I-B | 0.75 H | |
| II-A | 1.5 H | 0 or a time period which is longer by an integer multiple of H |
| II-B | 0.25 H | |
| III-A | 1.0 H | |
| III-B | 1.75 H | |
| IV-A | 0.5 H | |
| IV-B | 1.25 H | |

13

In this case, the switching operation of the delay in the special reproduction mode is same as those explained above.

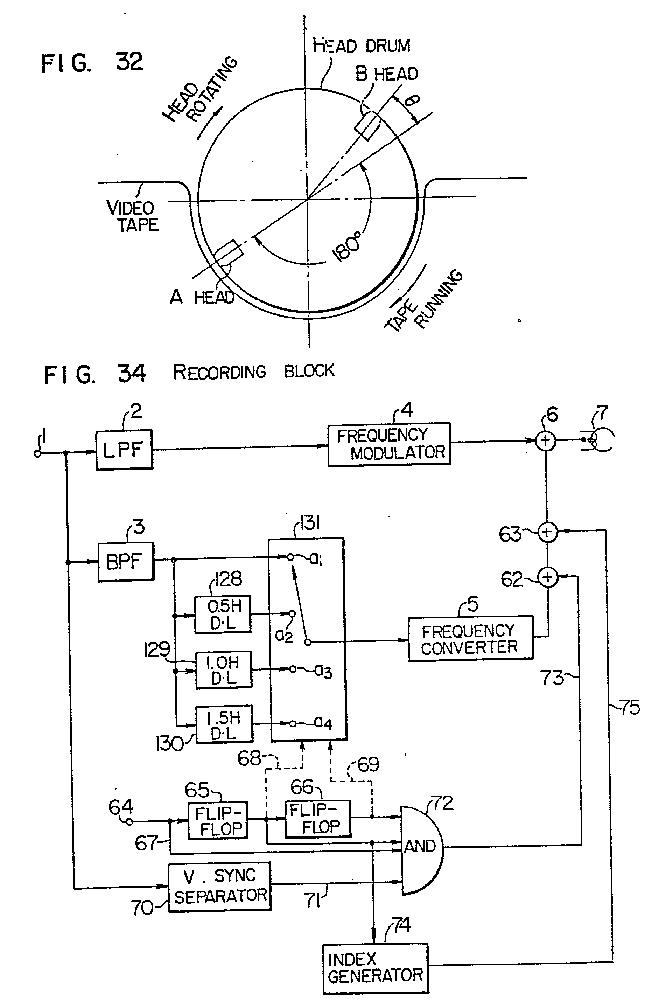

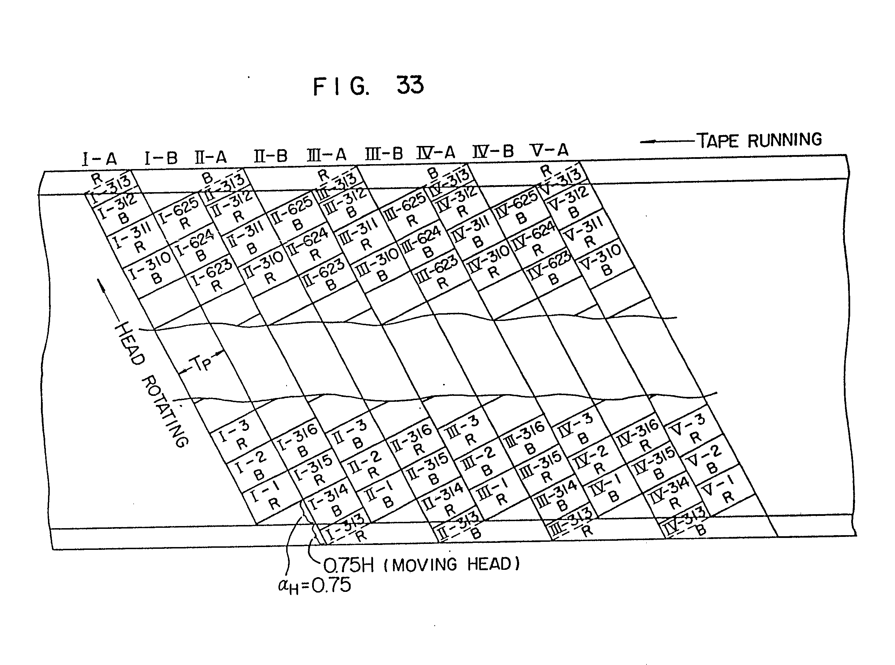

As an alternative, the head positioning angle may be offset from 180° by an angle corresponding to $[(a_H+1/2)-2i]H$ (where i is an integer). Fig. 33 shows a recorded pattern where $a_H=0.75$ and when the two heads are offset from 180° by $\theta=0.75\,H$ (i=1, $a_H+1/2-2i=-0.75$) as shown in Fig. 32.

In the pattern shown in Fig. 33, the brightness signals and the chrominance signals on the tracks I-A and I-B, II-A and II-B, III-A and III-B, and IV-A and IV-B are arranged side by side. Accordingly, the offset by the adjacent disturbance signal explained above is small. However, in the other adjacent tracks, the brightness signals and the chrominance signals are not arranged side by side and the chrominance signal is particularly easily affected by the adjacent disturbance signal. When the signals in every other track are not arranged side by side, the continuities of the horizontal synchronizing signal and the chrominance signal are lost in the special reproduction mode and the same conditions as those in the special reproduction mode shown in Figs. 7 to 12 occur except in the case 2). The second embodiment for the case where $a_H=0.75$ is now explained, in which the disturbance by the adjacent chrominance signal is reduced to a level in a conventional system even when the original pattern shown in Fig. 33 is used and high quality of image can be reproduced in the special reproduction mode.

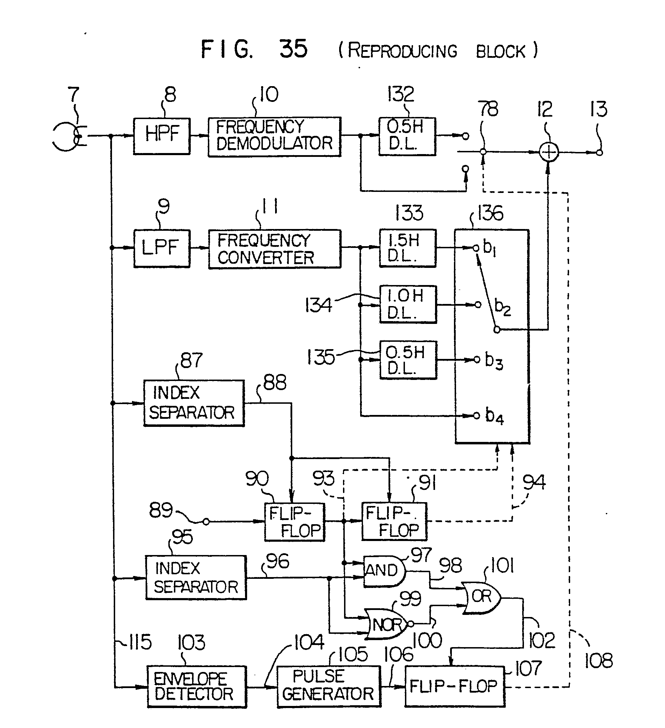

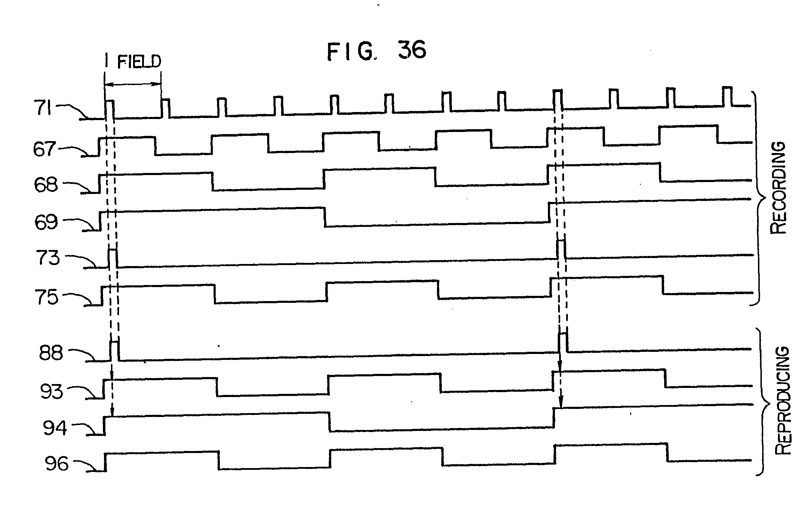

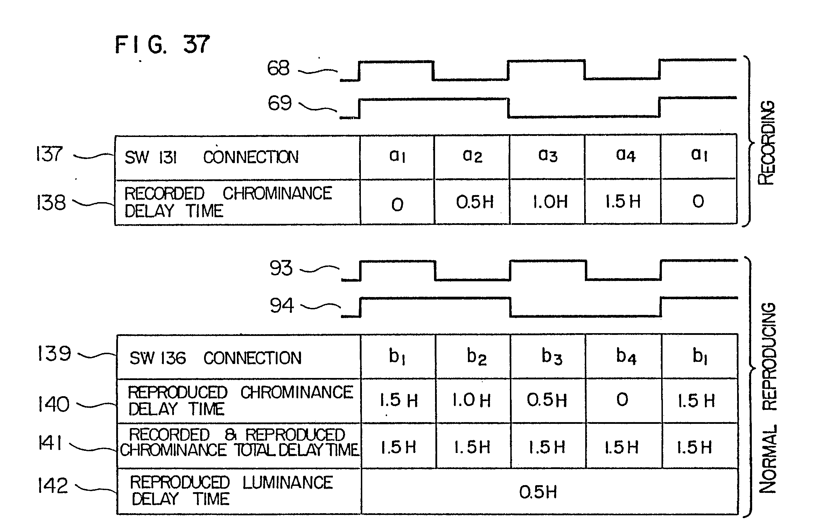

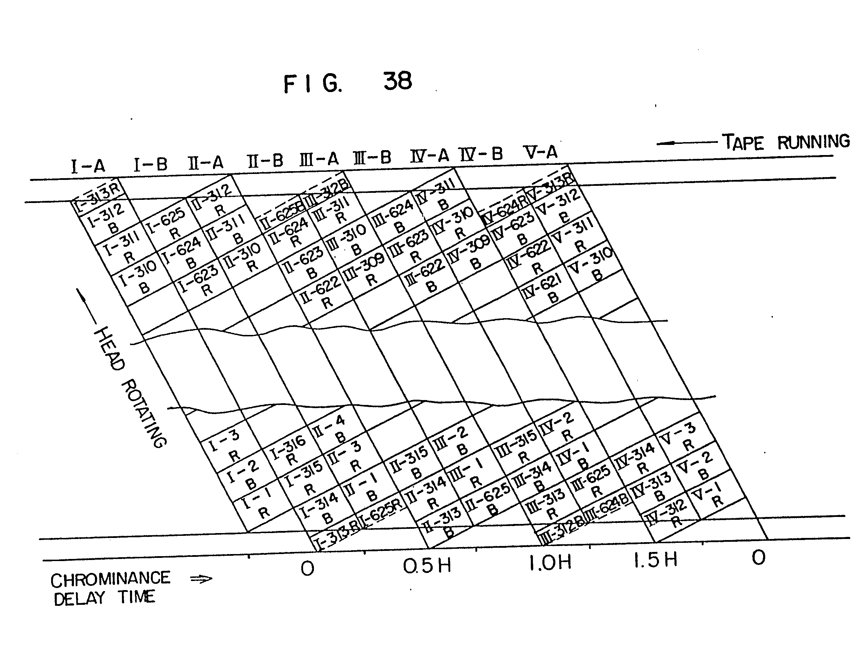

Figs. 34 and 35 show basic block diagrams of the second embodiment where $a_H=0.75$, Fig. 36 shows switching control signals, Fig. 37 shows waveforms in the circuits of Figs. 34 and 35 and the relationship between the brightness signal and the chrominance signal and Fig. 38 shows a recorded pattern of the chrominance signal in the second embodiment ($a_H=0.75$ and one of the heads is offset by an angle corresponding to 0.75 H). The recorded pattern of the brightness signal is same as that shown in Fig. 33. The blocks and the waveforms designated by the same numerals as in the first embodiment function in the same manner and the overall basic constructions and operations are similar. As explained above, in the original recorded pattern shown in Fig. 33, the brightness control signals and the chrominance signals in every other track (field) are arranged side by side. Accordingly, the chrominance signals in all tracks can be arranged side by side by switching the delay for every other track. The brightness signals are not rearranged. In the second embodiment, this portion is primarily explained and other portions are explained only briefly. Fig. 34 shows a block diagram of a recording block in the second embodiment, in which numerals 128 to 130 denote 0.5 H, 1.0 H and 1.5 H delay lines, respectively, and numeral 131 denotes a switching circuit. The numerals of the waveforms shown in Figs. 36 and 37 corresponds to the numerals shown in Fig. 34. The brightness signal from the low-pass filter 2 is frequency modulated by the frequency modulator 4, an output of which is applied to the adder 6. On the other hand, the chrominance signal from the band-pass filter 3 is applied to input terminals $a_1$, $a_2$, $a_3$ and $a_4$ of the switching circuit 131 directly and through the 0.5 H delay line 128, the 1.0 H delay line 129 and the 1.5 H delay line 130, respectively. The switching circuit 131 switches the delay and it is controlled by the control signals 68 and 69. As shown in Fig. 36, the control signals are produced in the same manner as in the first embodiment (Fig. 24). The switching circuit 131 selects the signal at; the terminal $a_1$ when the signal 68 is HIGH and the signal 69 is HIGH, the terminal $a_2$ when the signal 68 is LOW and the signal 69 is HIGH, the terminal $a_3$ when the signal 68 is HIGH and the signal 69 is LOW, and the terminal $a_4$ when the signal 68 is LOW and the signal 69 is LOW. (See 137 in Fig. 37.) Accordingly, the chrominance signals which are delayed by 0, 0.5 H, 1.0 H, 1.5 H,... for every second track, with respect to the input signals are produced at the output of the switching circuit 131, as shown by 138 in Fig. 37. The output signal from the switching circuit 131 is applied to the frequency converter 5 and the frequency converted chrominance signal is then applied to the adder 62, to which the first index signal 73 (Fig. 36) for defining the reference for the switching control signal is also applied, as is done in the first embodiment. The first index signal 73 is generated in the same manner as in the first embodiment and recorded at zero delay time of the chrominance signal. The combined signal of the chrominance signal and the first index signal 73 from the adder 62 is then applied to the adder 63 to which the second index signal 75 (the signal indicating the period of the 0 and 1.0 H delay of the chrominance signal in the illustrated embodiment) which is generated in the same manner as in the first embodiment, is applied. The combined signal of the chrominance signal and the first and second index signals 73 and 75 produced by the adder 63 is further applied to the adder 6 and then recorded in the same manner as in the first embodiment.

Assuming that the chrominance signals to be recorded on the tracks [I-A, I-B], [II-A, II-B], [III-A, III-B], [IV-A, IV-B]... are delayed by 0, 0.5 H, 1.0 H, 1.5 H..., the recorded pattern of the chrominance signal appears as shown in Fig. 38 in which all of the chrominance signals in the adjacent tracks are arranged side by side. The first index signals 73 are inserted in the tracks I-A, V-A,... and the second index signals 75 are inserted in the tracks [I-A, I-B], [III-A, III-B],.... The relationship between the tracks and the chrominance signals is not limited to that shown in Fig. 38, provided that the switching of the delay corresponds to the reference. The reproducing block is now explained. Fig. 35 shows a block diagram of the reproducing block of the second embodiment. The switching control signals, the waveforms in the circuit and the relationship between the chrominance signal and the brightness signal are shown in Figs. 36 and 37. In Fig. 35, a numeral 132 denotes a 0.5 H delay line, numerals 133—135 denote 1.5 H, 1.0 H and 0.5 H delay line, respectively, and numeral 136 denotes a switching circuit. The numerals of the waveforms shown in Figs. 36 and 37 correspond to those shown in Fig. 35. The reproduced brightness signal from the frequency demodulator 10 is applied to the switch 78 directly and through the 0.5 H delay line 132, respectively. The switch 78 is controlled by the switching control signal 108 so that in the normal reproduction mode a signal which is retarded by 0.5 H is produced at the output of the switch 78. The output signal from the switch 78 is combined with the reproduced chrominance signal by the adder 12. On the other hand, the chrominance signal converted to the original frequency by the frequency converter 11 is applied to input terminals $b_1$, $b_2$, $b_3$ and $b_4$ of the switching circuit 136 through the 1.5 H delay line 133, the 1.0 H delay line 134, the 0.5 H delay line 135 and directly, respectively. The switching circuit 136 is controlled by the control signals 93 and 94. The control signals are generated in the same manner as in the first embodiment (Fig. 25), as shown in Fig. 35.

The switching circuit 136 is controlled by the control signals 93 and 94 and functions in the same manner as the switching circuit 131 shown in Fig. 34. (The relationship between 93, 94 and 139 in Fig. 37 Thus, as shown by 140 in Fig. 37, the reproduced chrominance signals which are delayed by 1.5 H, 1.0 H, 0.5 H, 0,... for every second track with respect to the input signals to the respective delay lines are produced at the output of the switching circuit 136. Since the signals are delayed for every second track in the recording operation, the total delay times in the recording and reproduction modes are 1.5 H for all tracks, as shown by 141 in Fig. 37. In the normal reproduction mode, the switching control signals 93 and 94 are controlled by the reproduced first index signal 88 such that the total delay times for the respective track are made equal. The separation and control operations of the first index signal are same as those in the first embodiment. The chrominance signal from the switching circuit 136 is combined with the reproduced brightness signal by the adder 12 and the reproduced video signal is produced at the terminal 13. While the reproduced brightness signal is delayed by 0.5 H in the reproduction operation in the embodiment explained above, it may be delayed by 1.5 H or 1.5 H plus an integer multiple of H so that the time difference between the reproduced brightness signal and the reproduced chrominance signal is made zero or to be equal to an integer multiple of H. Alternatively, the signal may be delayed in the recording operation but not in the reproduction operation, or both of the above may be simultaneously implemented. In the embodiment explained above, the switching of the delay is controlled by the first index signal 88 such that the total delay times of the chrominance signal in the recording and reproduction operations for all tracks are equal to each other. When the second index signal 96 is used in place of the first index signal 88 to control the flip-flop 90 (and not to control the flip-flop 91), a time difference of 2 H may be produced between the total delay times but the continuity of the chrominance signal is maintained and the time difference between the chrominance signal and the brightness signal is made zero or to be equal to an integer multiple of H. Accordingly, the chrominance signal and the video signal can be properly reproduced.

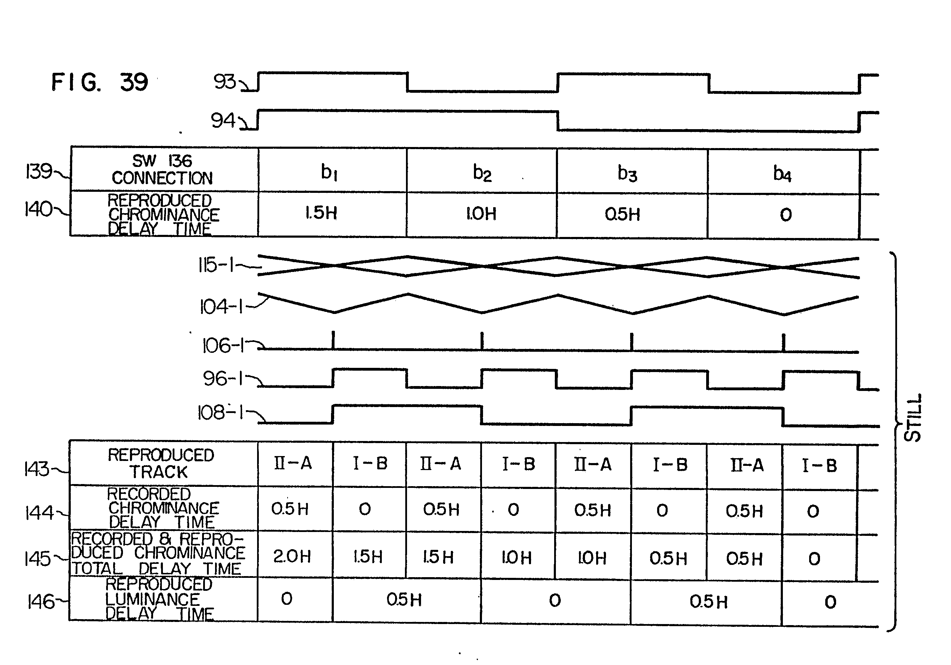

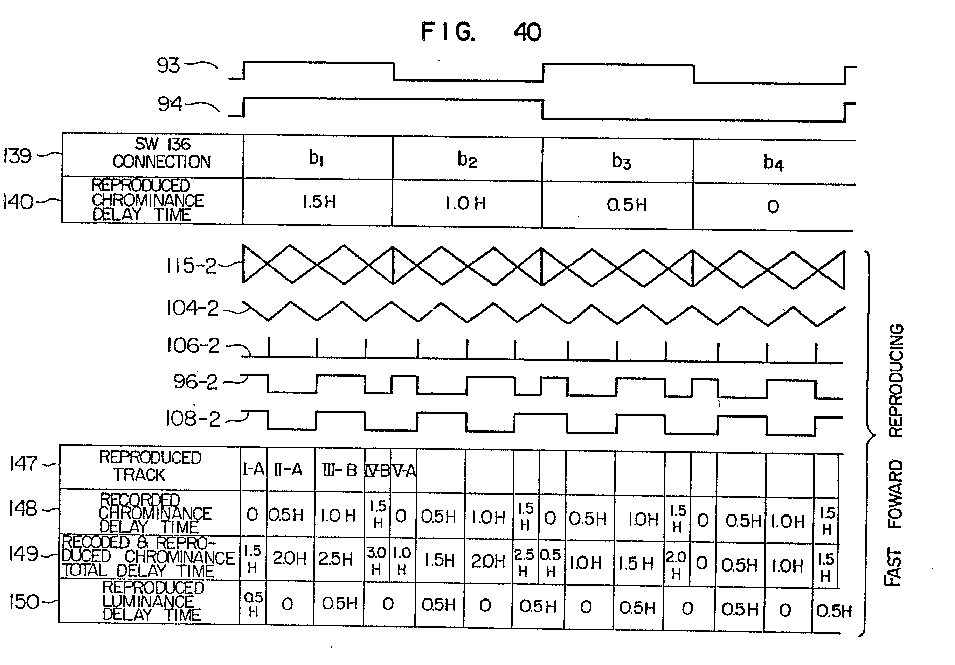

The special reproduction mode is now explained. In the special reproduction mode, the control of the switching control signal by the reproduced first index signal is not carried out as in the first embodiment. Figs. 39, 40 and 41 show the delays of the brightness signals and the chrominance signals for the respective tracks when the original recorded pattern of the brightness signal shown in Fig. 33 and the recorded pattern of the chrominance signal shown in Fig. 38 are reproduced in the special reproduction mode. The waveforms 93, 94, 139 and 140 are identical to those shown in Fig. 37, and numerals 115, 104, 106, 96 and 108 show the envelope waveforms, the output signals of the envelope detector, the output signals of the pulse generator, the second index signals and the switching control signals for the respective cases of the special reproduction mode. The waveforms 143—146, 147—150, and 151—154 show the reproduced tracks, the delay times of the chrominance signal in the recording operation, the total delay times of the chrominance signal in the recording and reproduction operations and the delay times of the brightness signal in the reproduction operation for the still reproduction mode, the fast forward reproduction mode and the reverse reproduction mode, respectively. The function of the control signal 108 for the switch 78 which switches the delay of the brightness signal is same as that in the first embodiment. In the period in which the total delay time of the chrominance signal in the recording and reproduction operations is equal to an integer multiple of H plus 0.5 H (the HIGH level period of the signal 108), the brightness signal is delayed by 0.5 H, and in the period in which the total delay is equal to an integer multiple of H (the LOW level period of the signal 108), the brightness signal is not delayed. The case 1) of the special reproduction mode corresponds to the switching from the track I-A to the track II-A and the switching from the track III-B to the track IV-B when the recorded patterns of Fig. 33 (brightness signal) and Fig. 38 (chrominance signal) are reproduced in the manner shown in Fig. 8. (While one of the heads is offset from 180° by an angle corresponding to 0.75 H, the continuity is same as that when the head is not offset). The chrominance signal delay as shown by 149 in Fig. 40 appears. Since one head is used in one reproduction cycle in this case, the delay time of the chrominance signal is not switched during the reproduction operation. Since the chrominance signals on every other track are arranged side by side, the continuity of the chrominance signal is maintained. The brightness signal as shown by 150 appears and the switching of delay time is effected such that 0.5 H delay is imparted when the signal 108 is HIGH and no delay is imparted when the signal 108 is LOW. In this manner, since the brightness signal has been shifted by 0.5 H after the discontinuity point when the original pattern shown in Fig. 33 was reproduced in the manner shown in Fig. 8, the continuity of the horizontal synchronizing signal can be maintained by shifting the signal by 0.5 H at the time of switching. The case 2) corresponds to the switching from I-B to II-A when the recorded pattern is reproduced in the manner shown in Fig. 7, and the switching from III-A to III-B when the recorded pattern is reproduced in the manner shown in Fig. 9, and the chrominance signal delays as shown by 145 in Fig. 39

15

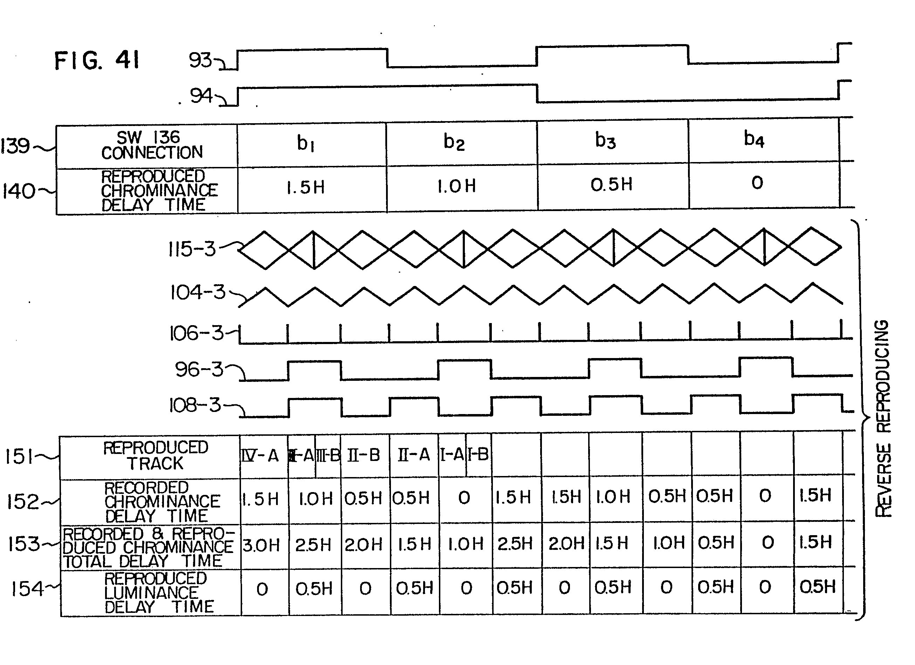

and 153 in Fig. 41 appear. In this case, the continuity of the chrominance signal can be maintained by the same switching of the chrominance signal delay as that in the normal reproduction mode. As to the brightness signal, the delays as shown by 146 in Fig. 39 and 154 in Fig. 41 appear. They are the same as those in the normal reproduction mode and hence the continuity of the horizontal synchronizing signal is maintained. The case 3) corresponds to the switching from II-A to III-B when the recorded pattern is reproduced in the manner shown in Fig. 8, and the chrominance signal delay as shown by 149 in Fig. 40 appears. In this case, the chrominance signal after the switching retards by 0.5 H. Since the chrominance signal is advanced by 0.5 H after the switching when the original pattern shown in Fig. 33 is reproduced in the manner shown in Fig. 8, the continuity of the chrominance signal can be properly corrected by the 0.5 H delay. As to the brightness signal, the continuity of the horizontal synchronizing signal can be maintained by imparting the time difference of 0.5 H to the track II-A at time of switching of the head as shown by 150 in Fig. 40. The case 4) corresponds to the switching from II-A to I-B when the pattern is reproduced as shown in Fig. 7 and the switching from II-B to II-A when the pattern is reproduced as shown in Fig. 9, and the chrominance signal delays as shown by 145 in Fig. 39 and 153 in Fig. 41 appear. In this case, the amount of delay changes by 1.5 H at the time of switching of the head. Since the chrominance signal is advanced by 1.5 H when the original pattern shown in Fig. 33 is reproduced in the manner shown in Figs. 7 and 9, the continuity can be properly corrected by imparting the 1.5 H delay at the time of switching. As to the brightness signal, the continuity of the horizontal synchronizing signal can be maintained by shifting the brightness signal by 0.5 H at the time of switching of the head. The case 5) corresponds to the switching from IV-A to III-A, the switching from II-A to I-A and the switching from III-B to II-B when the pattern is reproduced in the manner shown in Fig. 9, and the chrominance signal delay as shown by 153 in Fig. 41 appears. Like in the case 1), the continuity can be properly corrected in this case. The brightness signal appears as shown by 154 in Fig. 41 and the continuity of the horizontal synchronizing signal can be maintained.

As described above, the continuities of the chrominance signal and the horizontal synchronizing signal can be corrected in any case of the special reproduction mode when the recording and reproduction operations are carried out with one of the heads being offset. While the total delay time of the chrominance signal in the normal reproduction mode is set to 1.5 H in the second embodiment, the brightness signal and the chrominance signal may be delayed in the reproduction mode in accordance with Table 2 below so that the time difference between the brightness signal and the chrominance signal is made zero or equal to an integer multiple of H.

TABLE 2

| Field | Chrominance signal delay | Brightness signal delay |
|---|---|---|
| I-A<br>I-B | 2.0 H | 0 or a time period which is longer by an integer multiple of H |
| II-A<br>II-B | 1.5 H | |
| III-A<br>III-B | 1.0 H | |
| IV-A<br>IV-B | 0.5 H | |

While the present invention has been explained in conjunction with the first and second embodiments where $a_H=0.75$, the present invention is applicable to the pattern of any $a_H$ ($a_H \neq (2n+1)/2$) other than $a_H=0.75$, as explained above in connection with the embodiment of $a_H=1.0$. When the heads are positioned at the angle of 180° to each other, the recorded chrominance signal may be delayed such that the delay increases by $(a_H+1/2)H$ for every track or in the time sequence which is 2 kH shorter than the above sequence and the reproduced chrominance signal may be delayed in the reverse sequence. For example, when $a_H=0.75$ in the one field per track recording system, $a_H+1/2$ is equal to 1.25 and hence the recorded chrominance signal is delayed such that the delay increases by 1.25 H for every track or in the time sequence which is 2 kH shorter than the above sequence, that is, it is delayed in the sequence of 0, 1.25 H, 2.5 H−2 H=0.5 H (k=1), 3.75 H−2 H=1.75 H (k=1), 5.0 H−4 H=1.0 H (k=2), 6.25 H−6 H=0.25 H (k=3), 7.5 H−6 H=1.5 H (k=3), 8.75 H−8 H=0.75 H (k=4), 10 H−10 H=0 (k=5),.... This corresponds to the above embodiment. When the brightness signal is recorded in the manner shown in the first embodiment, the brightness signal advances by $[2(t_H+a_H)−m]H$ at the discontinuity point in the cases 1) and 3) of the special reproduction mode (i.e. in the fast forward reproduction mode), and retards by $[2(t_H+a_H)−m]H$ in the cases

16

4) and 5) (i.e. the still, slow motion and reverse reproduction modes), as explained above. In the one field per track recording system, $t_H$ is equal to 312.5 and

$$2(t_H+a_H)-m=2a_H+625-m=2a_H-k.$$

Therefore, in the cases 1) and 3), the brightness signal advances by $(2a_H-k)H$, and in the cases 4) and 5) it retards by $(2a_H-k)H$. Thus, in the special reproduction mode, the brightness signal is retarded by $(2a_H-k)H$ at the discontinuity point in the cases 1) and 3) and it is advanced by $(2a_H-k)H$ in the cases 4) and 5) in order to properly correct the continuity of the horizontal synchronizing signal. For example, when $a_H=0.75$, $2a_H$ is equal to 1.5 and the brightness signal is retarded or advanced by 1.5 H−1 H=0.5 H (k=1) (The 0.5 H retardation is equivalent to the 0.5 H advancement). This corresponds to the illustrated embodiment. When one of the heads is offset by an angle corresponding to $(a_H+1/2)H$ or $(a_H+1/2)H-ZiH$ and the resulting pattern is used, the recorded chrominance signal may be delayed such that the delay increases by $(2a_H+1)H$ for every other track or delayed in the time sequence which is 2 kH shorter than the above sequence, and the reproduced chrominance signal may be delayed in the reverse sequence. For example, when $a_H=0.75$ and the head offset is 0.75 H, $(2a_H+1)$ is equal to 2.5 and the recorded chrominance signal is delayed such that the delay increases by 2.5 H for every other track or in the time sequence which is 2 kH shorter than the above sequence. That is, it is delayed in the sequence of 0, 2.5 H−2.0 H=0.5 H (k=1), 5.0 H−4.0 H=1.0 H (k=2), 7.5 H−6.0 H=1.5 H (k=3), 10 H−10 H=0 (k=5),.... This corresponds to the illustrated embodiment. In the special reproduction mode of the brightness signal, the continuity of the horizontal synchronizing signal can be properly corrected by retarding or advancing the brightness signal by $(2a_H-k)H$ for every discontinuity point, as is done in the first embodiment. For example, when $a_H=0.75$, $2a_H$ is equal to 1.5 and the brightness signal is retarded or advanced by 1.5 H−1.0 H=0.5 H (k=1) for every discontinuity point. This corresponds to the illustrated embodiment.

In the first and second embodiments described above, the discontinuity in the special reproduction mode is compensated by arranging only the chrominance signals of the adjacent tracks side by side in the recording operation and imparting no processing to the brightness signals. The continuity in the special reproduction mode can be maintained by delaying the recorded brightness signals on the recorded pattern such that the horizontal synchronizing signals on at least every other track are arranged side by side and delaying the reproduced brightness signal in the reverse sequence. An embodiment which implements the above method for the case of $a_H=0.75$ is now explained.

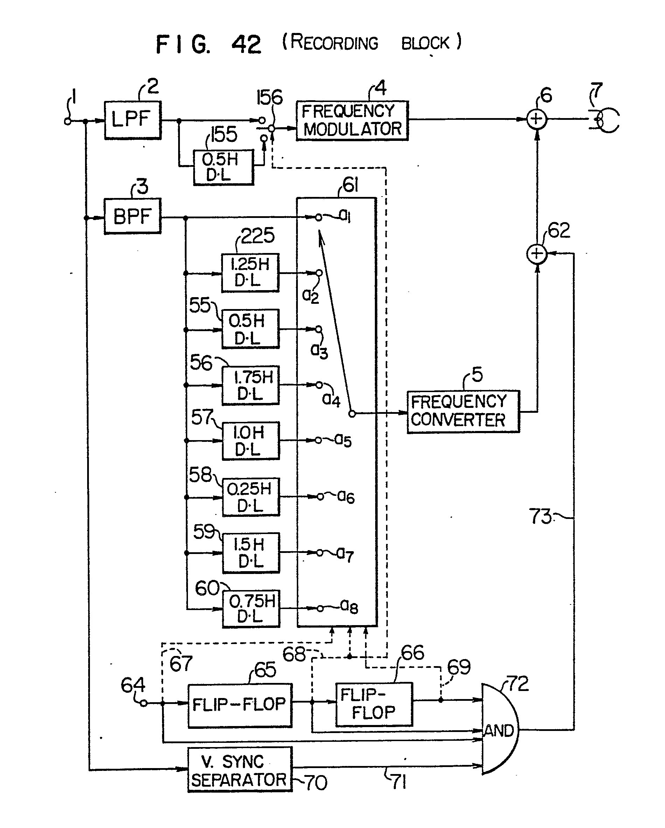

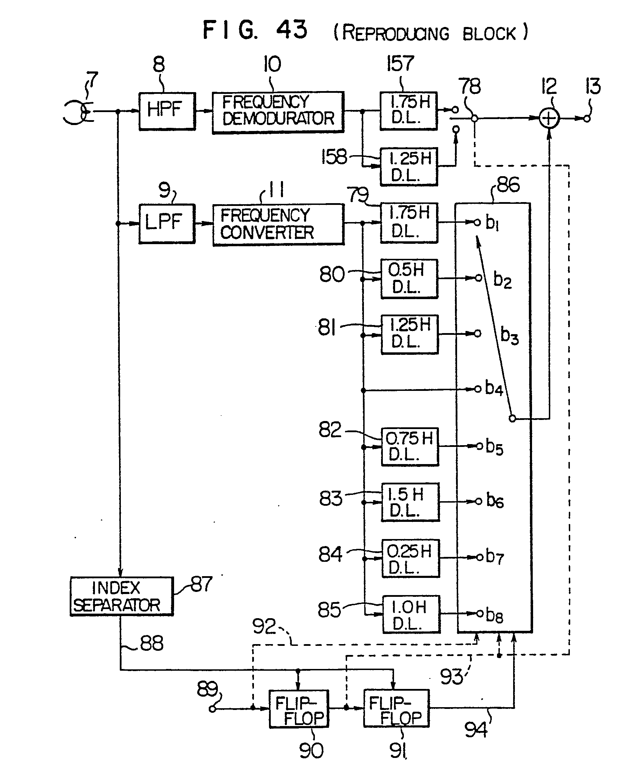

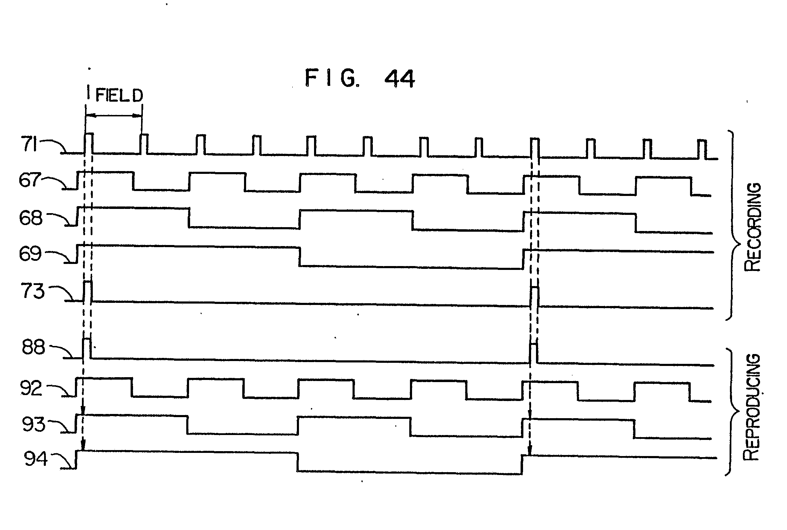

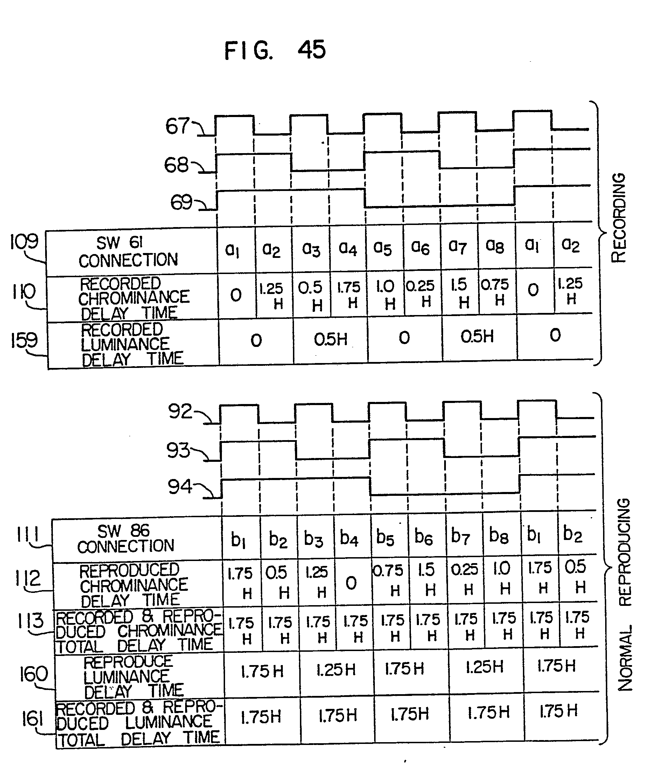

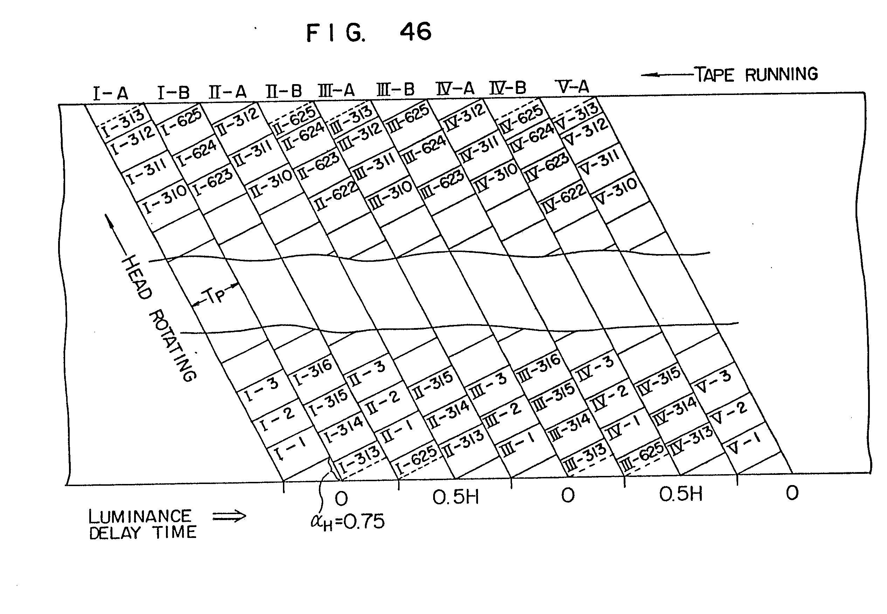

Figs. 42 and 43 show basic block diagrams of the third embodiment where $a_H=0.75$, Fig. 44 shows switching control signals, Fig. 45 shows waveforms in the circuits of Figs. 42 and 43 and the relationship between the brightness signal and the chrominance signal, and Fig. 46 shows a recorded pattern of the brightness signal in the third embodiment ($a_H=0.75$). The recorded pattern of the chrominance signal is identical to that shown in Fig. 28. Fig. 42 shows the block diagram of a recording block of the third embodiment, in which numerals 1—7, 225, 55—62 and 64—73 denote the same elements as those shown in the first embodiment of Fig. 24 and they function in the same manner. Therefore, they are not explained here. Numeral 155 denotes a 0.5 H delay line and numeral 156 denotes a switch. The numerals of the waveforms in Figs. 44 and 45 correspond to the numerals shown in Fig. 42. In Fig. 42, the delay function of the chrominance signal and the functions of the switching control signals and the index signal are the same as those in the first embodiment shown in Fig. 24. In the present embodiment, the second index signal is not needed.

The brightness signal from the low-pass filter 2 is applied to the switch 156 directly and through the 0.5 H delay line 155, respectively. The switch 156 is controlled by the control signal 68 so that the brightness signals which are delayed by 0, 0.5 H, 0, 0.5 H,... for every other track (field) is produced at the output. (The delay is 0 when the signal 68 is HIGH and 0.5 H when the signal 68 is LOW.) The signal selected by the switch 156 is modulated by the frequency modulator 4 and the frequency modulated signal is then applied to the adder 6. On the other hand, the chrominance signal from the frequency converter 5 is applied to the adder 62, to which the first index signal 73 (Fig. 44) for defining the reference to the switching control signal is also applied. The first index signal is generated in the same manner as in the first and second embodiments described above and it is recorded at the time periods in which the delay time of the brightness signal is zero and the delay time of the chrominance signal is zero. The combined signal of the chrominance signal and the first index signal is applied to the adder 6 and the output signal of the adder 6 is recorded in the same manner as in the first embodiment.

Assuming that the brightness signals to be recorded on the tracks [I-A, I-B], [II-A, II-B], [III-A, III-B], [IV-A, IV-B] are delayed by 0, 0.5 H, 0, 0.5 H,..., respectively, the recorded pattern of the brightness signal appears as shown in Fig. 46. The brightness signals on the adjacent tracks are offset by 0.75 H (or 0.25 H) from each other but the horizontal synchronizing signals on every other track are arranged side by side. The relationship between the tracks and the signals is not limited to that shown in Fig. 46 but the signals may be delayed in the sequence of 0, 0.5 H, 0, 0.5 H,... provided that there is a correspondence with the reference.

A reproducing block is now explained. Fig. 43 shows the block diagram of the reproducing block of the third embodiment, and Figs. 44 and 45 show switching control signals, the waveforms in the circuit of Fig. 43 and the relationship between the brightness signal and the chrominance signal. In Fig. 43, numerals 7—13 and 78—94 denote the same elements as those shown in the first embodiment of Fig. 25 and they

17

function in the same manner. Numeral 157 denotes a 1.75 H delay line and numeral 158 denotes a 1.25 H delay line. The numerals of the waveforms shown in Figs. 44 and 45 corresponds to the numerals shown in Fig. 43. In Fig. 43, the delay function of the chrominance signal and the function of the switching control signals are same as those in the first embodiment shown in Fig. 25. The reproduced brightness signal from the frequency demodulator 10 is applied to the switch 78 through the 1.75 H delay line 157 and the 1.25 H delay line 158, respectively. The switch 78 is controlled by the control signal 93 so that the brightness signals which are delayed by 1.75 H, 1.25 H, 1.75 H, 1.25 H,... for every other cycle are produced at the output. (When the signal 93 is HIGH, the delay is 1.75 H, and when the signal 93 is LOW the delay is 1.25 H). The control signal for the chrominance signal delay selection and the control signal for the brightness signal delay selection are controlled by the first reproduced index signal 88 which is separated in the first index separator 87, as in the first embodiment. Since the signal is delayed for every other track in the recording operation, the total delay time in the recording and reproduction operations is 1.75 H for each track as shown by 161 in Fig. 45. The brightness signal from the switch 78 is applied to the adder 12 where it is combined with the reproduced chrominance signal to produce the reproduced video signal at the terminal 13.

The special reproduction mode is now explained. In the special reproduction mode, the control by the first index signal is not effected but the head selection signal and the output signal of the flip-flop which is in synchronism with only the head selection signal are used to control the switch. As to the chrominance signal, the operation is exactly same as that of the first embodiment and hence it is not explained here. Only the brightness signal is explained.

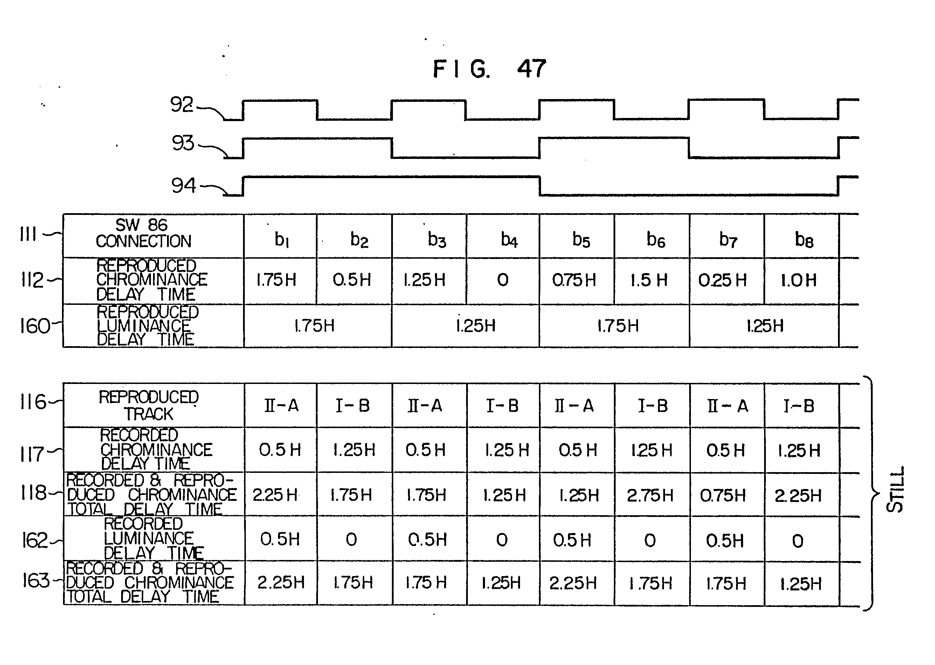

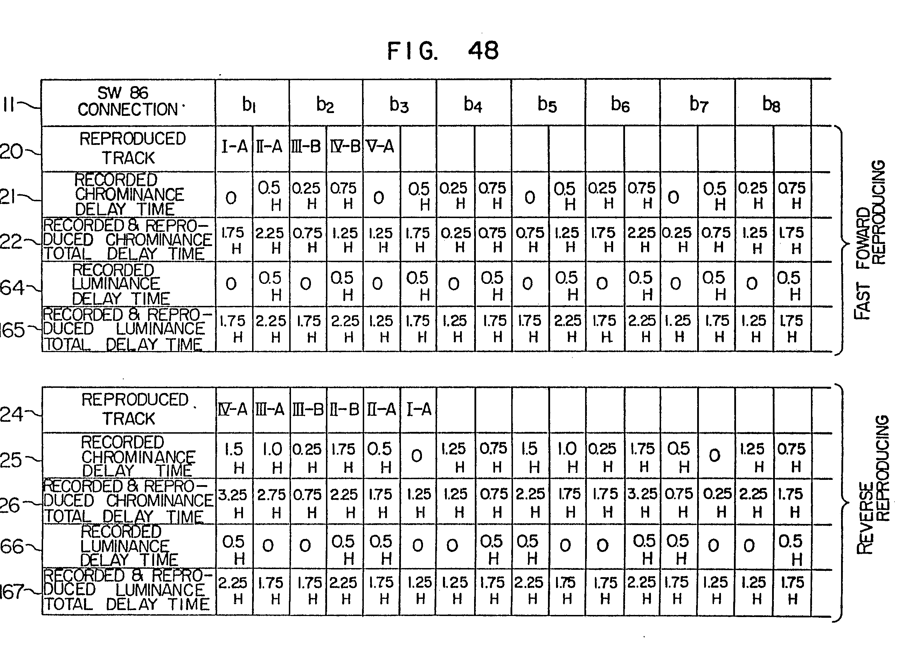

Figs. 47 and 48 show the delays of the brightness signals and the chrominance signals for the respective tracks when the recorded patterns of the chrominance signals and the brightness signals as shown in Figs. 28 and 46 are reproduced in the special reproduction mode in accordance with the reproduction loci as shown in Figs. 7—9. The waveforms 92—94, 111, 112 and 160 are same as those shown in Fig. 45. The waveforms 116, 117, 118, 162 and 163; 120, 121, 122, 164 and 165; and 124, 125, 126, 166 and 167 show the reproduced tracks, the recording delay times of the chrominance signal and the brightness signal, and the total delay times of the chrominance signal and the brightness signal in the recording and reproduction operations, in the still reproduction mode, the fast forward mode and the reverse reproduction mode, respectively. The case 1) above of the special reproduction mode corresponds to the switching from the track I-A to the track II-A in Fig. 8, and the switching from the track III-B to the track IV-B and the brightness signal delay appears as shown by 165 in Fig. 48. Since the delay of the brightness signal is not switched in the course of reproduction and the brightness signals in every other track are arranged side by side, the continuity of the horizontal synchronizing signal is maintained. The case 2) corresponds to the switching from I-B to II-A in Fig. 7 and the switching from III-A to III-B in Fig. 9, and the signal delays appear as shown by 163 in Fig. 47 and 167 in Fig. 48. The continuity of the horizontal synchronizing signal is maintained by the same delay time switching operation as that in the normal reproduction mode. The case 3) corresponds to the switching from II-A to III-B and the brightness signal delay as shown by 165 in Fig. 48 appears. The delay is not switched at the time of switching of the heads and the 0.5 H compensation is made at the head switching point to the original pattern shown in Fig. 8 and the continuity of the horizontal synchronizing signal is maintained. The case 4) corresponds to the switching from II-A to I-B in Fig. 7 and the switching form II-B to II-A and the brightness signal delays as shown by 163 in Fig. 47 and 167 in Fig. 48 appear. In this case, the delay changes by 0.5 H at the time of switching of the heads. Since the signal is advanced by 0.5 H when the original patterns shown in Figs. 7 and 9 are reproduced, the continuity is corrected properly by the 0.5 H delay at the time of switching. The case 5) corresponds to the switching from IV-A to III-A in Fig. 9, the switching from II-A to I-A and the switching from III-B to II-B and the brightness signal delay as shown by 167 in Fig. 48 appears. Again, the continuity can be properly corrected in this case like in the case 1). In this manner, the continuities of the chrominance signal and the brightness signal can be maintained in any case of the special reproduction mode so that the erroneous color discrimination in the television receiver is prevented and the proper color image is reproduced. In the embodiment explained above, the total delay time of the brightness signal and the chrominance signal is set to 1.75 H in the normal reproduction mode. The brightness signal and the chrominance signal may be delayed in the reproduction mode in accordance with Table 3 below such that the time difference between the brightness signal and the chrominance signal is mode zero or equal to an integer multiple of H.

# 0 024 869

TABLE 3

| Field | Chrominance signal delay | Brightness signal delay |
|---|---|---|
| I-A | 2.5 H | 0.5 H or longer than that by an integer multiple of H |
| I-B | 1.25 H | |
| II-A | 2.0 H | 0 or longer than that by an integer multiple of H |
| II-B | 0.75 H | |
| III-A | 1.5 H | 0.5 H or longer than that by an integer multiple of H |
| III-B | 2.25 H | |
| IV-A | 1.0 H | 0 or longer than that by an integer multiple of H |
| IV-B | 1.75 H | |

Many other modifications are possible.

In the embodiment explained above, the time difference between the brightness signal and the chrominance signal of the adjacent tracks in the normal reproduction mode is made zero or equal to an integer multiple of H. In the special reproduction mode, the total delay times of the brightness signal and the chrominance signal in the recording and reproduction operations may differ between the tracks or within the track and flicker may appear at the vertical boundary of colour. When the same delay time switching as done to the chrominance signal is effected to the brightness signal in the recording and reproduction operations, the total delay time of the both signals is constant in any reproduction mode and the reproduced image of matched timing can be produced.

A fourth embodiment which enables the reproduction of high quality image in the special reproduction mode for $a_H=0.75$ when the pattern shown in Fig. 33 which is recorded by the heads in which one of the heads is positioned at an angle which is offset from 180° by an angle corresponding to $[(a_H+1/2)-2i]H$ (where is an integer) as shown in Fig. 32, is used.

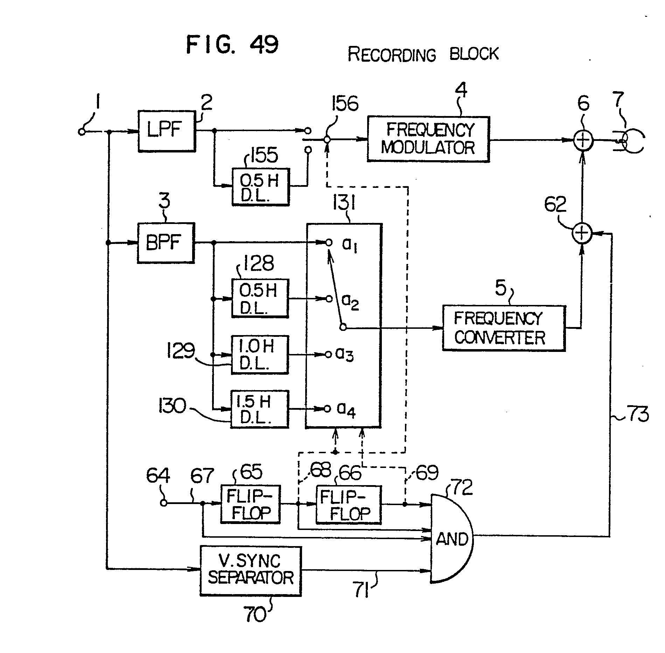

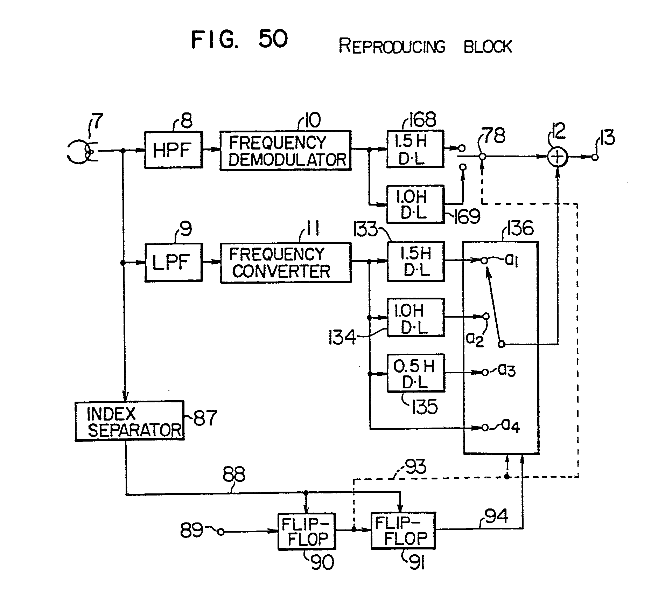

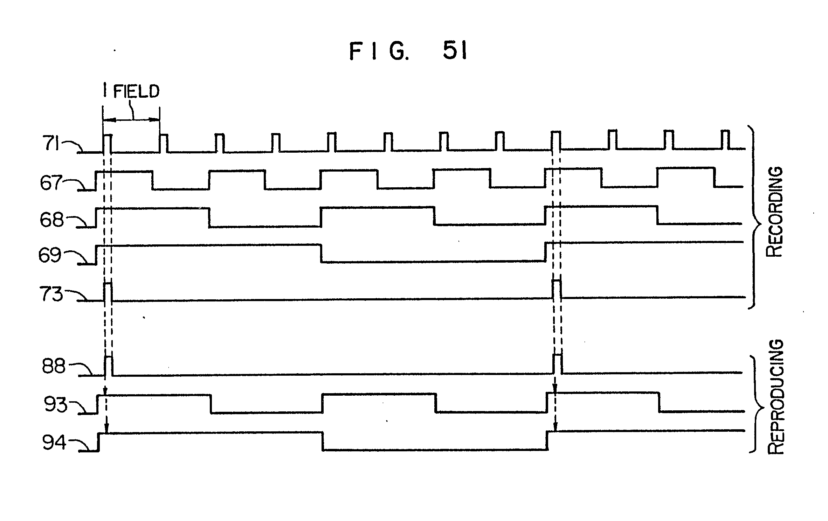

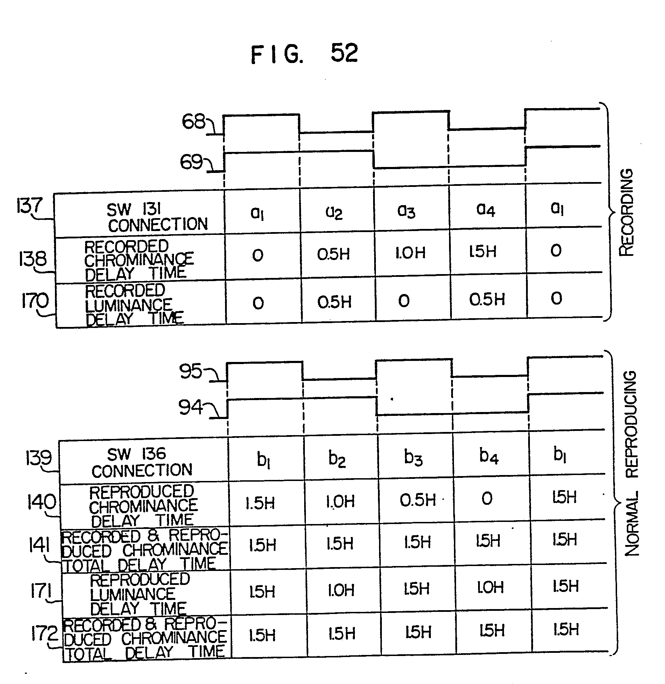

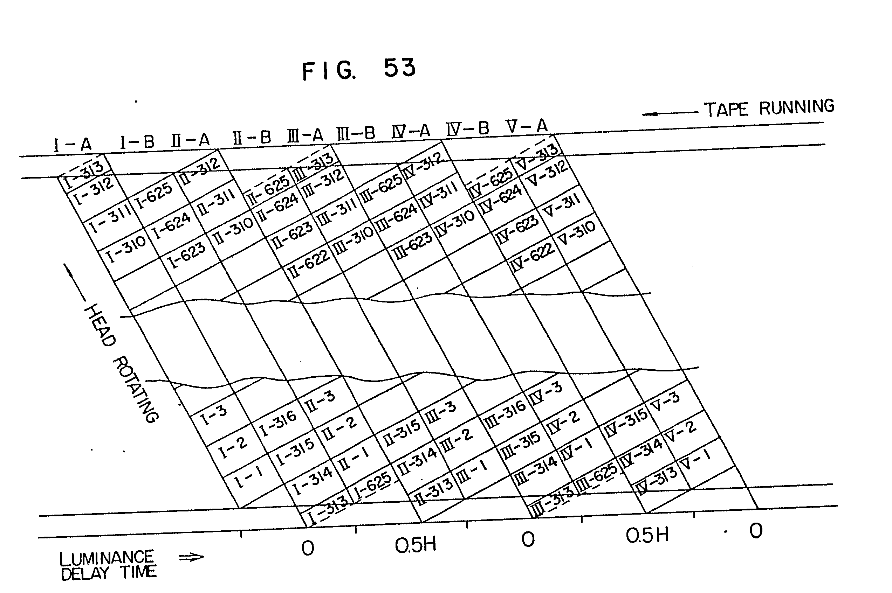

Figs. 49 and 50 show basic block diagrams of the fourth embodiment where $a_H=0.75$, Fig. 51 shows switching control signals, Fig. 52 shows waveforms in the circuits of Figs. 49 and 50 and the relationship between the brightness signal and the chrominance signal, and Fig. 53 shows a recorded pattern (where $a_H=0.75$ and one of the heads is offset by an angle corresponding to 0.75 H) of the brightness signal in the fourth embodiment. The recorded pattern of the chrominance signal is same as that in the second embodiment of Fig. 38. The numerals of the blocks and the waveforms which are identical to those shown in the second embodiment (Figs. 34 and 35) function in the same manner, and the overall basic configuration and operation are similar to those of the second embodiment. As explained above, in the original pattern shown in Fig. 33, the adjacent brightness signals and chrominance signals are arranged side by side at every second track (field). Accordingly, by switching the delay of those signals at every second track, the brightness signals and the chrominance signals on all tracks are arranged side by side. In the fourth embodiment, this portion will be primarily explained.

Fig. 49 shows a block diagram of a recording block of the fourth embodiment, in which numerals 1—7, 62, 64—73 designate the same elements as those shown in Fig. 34 and they function in the same manner. Therefore, they are not explained here. Numeral 155 denotes a 0.05 H delay line and numeral 156 denotes a switch. The numerals of the waveforms shown in Figs. 51 and 52 correspond to the numerals shown in Fig. 49. In Fig. 49, the delay function of the chrominance signal and the functions of the switching control signal and the first index signal are the same as those in the second embodiment shown in Fig. 34. In the present embodiment, the second index signal is not needed.

The brightness signal from the low-pass filter 2 is applied to the switch 156 directly and through the 0.5 H delay line 155, respectively. The switch 156 is controlled by the control signal 68 so that the brightness signals which are delayed by 0, 0.5 H, 0, 0.5 H,... for every other track (field) are produced at the output. (The delay is zero when the signal 68 is HIGH and 0.5 H when the signal 68 is LOW.) The signal selected by the switch 156 is modulated by the frequency modulator 4, an output signal of which is applied to the adder 6. On the other hand, the chrominance signal from the frequency converter 5 is applied to the adder 62, to which the first index signal 73 (Fig. 51) for defining the reference to the switching control signal is also applied. The first index signal is generated in the same manner as in the first embodiment and recorded at the periods in which the delay time of the brightness signal is zero and the delay time of the chrominance signal is zero. The combined signal of the chrominance signal and the first index signal is applied to the adder 6 and the output signal from the adder 6 is recorded in the same manner as in the first embodiment.

19

Assuming that the brightness signals to be recorded on the tracks [I-A, I-B], [II-A, II-B], [III-A, III-B], [IV-A, IV-B] are delayed in the sequence of 0, 0.5 H, 0, 0.5 H,..., the recorded pattern of the brightness signal appears as shown in Fig. 53 in which the horizontal synchronizing signals on all tracks are arranged side by side. The relationship between the tracks and the brightness signals is not limited to that shown in Fig. 53 but the brightness signals may be delayed in the sequence of 0, 0.5 H, 0, 0.5 H,..., provided that there is a correspondence of the reference and the signals are recorded at one frame unit. The reproducing block is now explained. Fig. 50 shows a block diagram of the reproducing block of the fourth embodiment, and Figs. 51 and 52 show the switching control signals, the waveforms in the circuit of Fig. 50 and the relationship between the brightness signal and the chrominance signal. In Fig. 50, numerals 7—13, 78, 87—91, 93, 94, 133—136 designate the same elements as those shown in the second embodiment of Fig. 35 and they function in the same manner. Numeral 168 denotes a 1.5 H delay line and numeral 169 denotes a 1.0 H delay line. The numerals of the waveforms shown in Figs. 51 and 52 correspond to the numerals shown in Fig. 50. In Fig. 50, the delay function of the chrominance signal and the function of the switching control signal are same as those in the second embodiment in Fig. 35. The reproduced brightness signal from the frequency demodulator 10 is applied to the switch 78 through the 1.5 H delay line 168 and the 1.0 H delay line 169. The switch 78 is controlled by the control signal 93 so that the brightness signals which are delayed by 1.5 H, 1.0 H, 1.5 H, 1.0 H,... at every second track are produced. (The delay is 1.5 H when the signal 93 is HIGH and 1.0 H when the signal 93 is LOW.) The control signal for the switching of the delay of the chrominance signal and the control signal for the switching of the delay of the chrominance signal are controlled by the first reproduced index signal 88 which is separated by the first index separator 87, as is done in the second embodiment. Since the signals are delayed at every second track in the recording operation, the total delay time in the recording and reproduction operations is equal to 1.5 H for every track as shown by 172 in Fig. 52. The brightness signal selected by the switch 78 is applied to the adder 12 where it is combined with the reproduced chrominance signal and the reproduced video signal is produced at the terminal 13.

The special reproduction mode is now explained. In the special reproduction mode, the control by the first index signal is not carried out and the head selection signal and the output signals of the flip-flops which are in synchronism with only the head selection signal are used to control the switching operation. The operation of the chrominance signal is the same as that in the first embodiment and hence it is not explained here. Accordingly, only the brightness signal is explained.

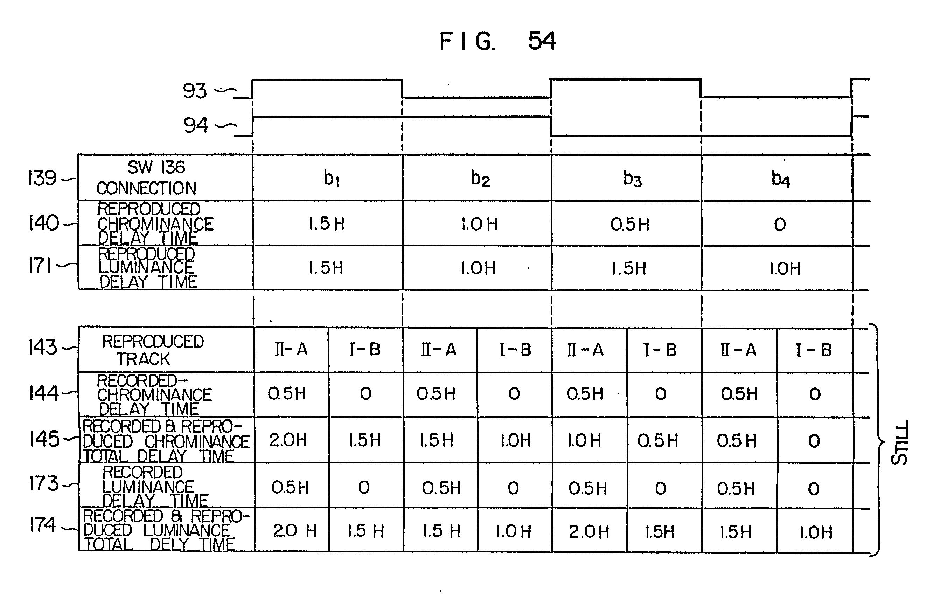

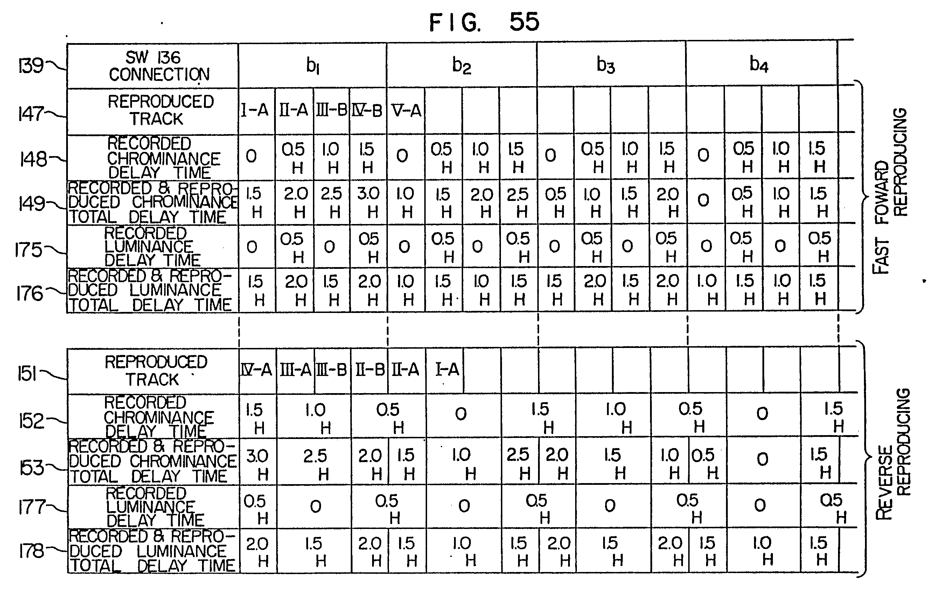

Figs. 54 and 55 show the delay times of the brightness signal and the chrominance signal of the respective tracks when the recorded patterns of the chrominance signal and the brightness signal as shown in Figs. 38 and 53 are recorded in the special reproduction mode in accordance with the reproduction loci as shown in Figs. 7—9. The waveforms 93, 94, 139, 140 and 171 are same as those shown in Fig. 52. The waveforms 143, 144, 145, 173 and 174; 147, 148, 149, 175 and 176; and 151, 152, 153, 177 and 178 denote the reproduced tracks, the recording delay times of the chrominance signals and the brightness signals and the total delay times of the chrominance signals and the brightness signals in the recording and reproduction operations, in the still reproduction mode, the fast forward reproduction mode and the reverse reproduction mode, respectively. The case 1) of the special reproduction mode corresponds to the switching from the track I-A to the track II-A and the switching from the track III-B to the track IV-B in the reproduction shown in Fig. 8, and the brightness signal delay appears as shown by 176 in Fig. 55. Since the delay of the brightness signal is not switched in the course of the reproduction and the brightness signals on every other track are arranged side by side, the continuity of the horizontal synchronizing signal is maintained. The case 2) corresponds to the switching from I-B to II-A in the reproduction shown in Fig. 7 and the switching from III-A to III-B in the reproduction shown in Fig. 9, and the brightness signal delay appears as shown by 174 in Fig. 54 and 178 in Fig. 55. The continuity of the horizontal synchronizing signal is maintained by the same switching operation as in the normal reproduction mode. The case 3) corresponds to the switching from II-A to III-B in the reproduction shown in Fig. 8, and the brightness signal delay as shown by 176 in Fig. 55 appears. The continuity of the horizontal synchronizing signal is maintained by compensating the brightness signal delay in the original pattern. The case 4) corresponds to the switching from II-A to I-B in the reproduction shown in Fig. 7 and the switching from II-B to II-A in the reproduction shown in Fig. 9, and the brightness signal delay as shown by 174 in Fig. 54 and 178 in Fig. 55 appears. The continuity of the horizontal synchronizing signal is maintained in the same manner as in the case 3). The case 5) corresponds to the switching from IV-A to III-A, the switching from II-A to I-A and the switching from III-B to II-B in the reproduction shown in Fig. 9 and the brightness signal delay as shown by 178 in Fig. 55 appears. In this case, the continuity of the horizontal synchronizing signal is maintained in the same manner as in the case 1).

Thus, when the recording and reproduction operations are carried out with one of the heads being offset, the continuities of the horizontal synchronizing signal and the brightness signal can be maintained in any case of the special reproduction mode. In the embodiment explained above, the brightness signal and the chrominance signal are delayed in the normal reproduction mode such that the total delay time is equal to 1.5 H. The signals may be delayed in accordance with Table 4 below so that the time difference between the brightness signal and the chrominance signal is made zero or equal to an integer multiple of H.

TABLE 4

| Field | Chrominance signal delay | Brightness signal delay |
|---|---|---|
| I-A | 2.0 H | 0 or longer than that by an integer multiple of H |
| I-B | | |
| II-A | 1.5 H | 0.5 H or longer than that by an integer multiple of H |
| II-B | | |
| III-A | 1.0 H | 0 or longer than that by an integer multiple of H |
| III-B | | |
| IV-A | 0.5 H | 0.5 H or longer than that by an integer multiple of H |
| IV-B | | |

Many other modifications are possible.

In the above embodiment, the total delay times of the brightness signals and the chrominance signals in the recording and reproduction operations may differ between the tracks and within the track in the special reproduction mode and flicker may appear at vertical boundary of colors. When the same delay time switching as is done for the chrominance signal is effected for the brightness signal in the recording and reproduction operations, the total delay time of the brightness signal and the chrominance signal is constant in any reproduction mode and the reproduced image has matched timing.

The third and fourth embodiments have been explained for the case when $a_H = 0.75$. The above teaching is applicable to a pattern of any $a_H$ ($a_H \neq (2n+1)/2$). The processing of the chrominance signal for any $a_H$ is exactly same as those explained in the first and second embodiments where $a_H = 1.0$ and the first and second embodiments where $a_H = 0.75$.

As to the brightness signal, it may be delayed in the same manner as the chrominance signal or it may be delayed such that the delay increases by $(a_H + 1/2)H$ for every track or delayed in the time sequence which is kH shorter than the above sequence, or it may be delayed such that the delay increases by $(2a_H + 1)H$ for every other track or delayed in the time sequence which is kH shorter than the above sequence. For example, when $a_H = 0.75$, $2a_H + 1$ is equal to 2.5 and the recorded brightness signal is delayed such that the delay increases by 2.5 H for every other track or delayed in the time sequence which is kH shorter than the above sequence. That is, the brightness signal is delayed in the sequence of 0, 2.5 H−2 H=0.5 H (k=2), 5.0 H−5.0 H=0 (k=5), 7.5 H−7 H=0.5 (k=7),... This corresponds to the illustrated embodiment.

In the first, second, third and fourth embodiments for $a_H = 0.75$, the delay time of the chrominance signal is switched at every track or every other track in the recording operation so that the chrominance signals on all adjacent tracks are arranged side by side. As described in the third embodiment for $a_H = 1.0$, in order to maintain the continuity of the signal in the special reproduction mode, the recorded signals may be delayed such that the signals on at least every other track are arranged side by side on the recorded pattern and the reproduced signals may be delayed in the reverse sequence (for both the horizontal synchronizing signal and the chrominance signal.) Accordingly, the present invention is now explained for a case where the chrominance signals on every other track are arranged side by side.

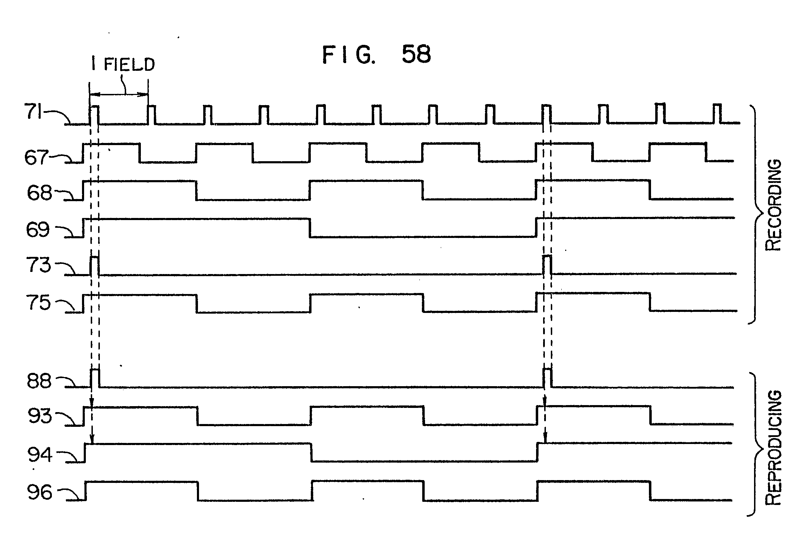

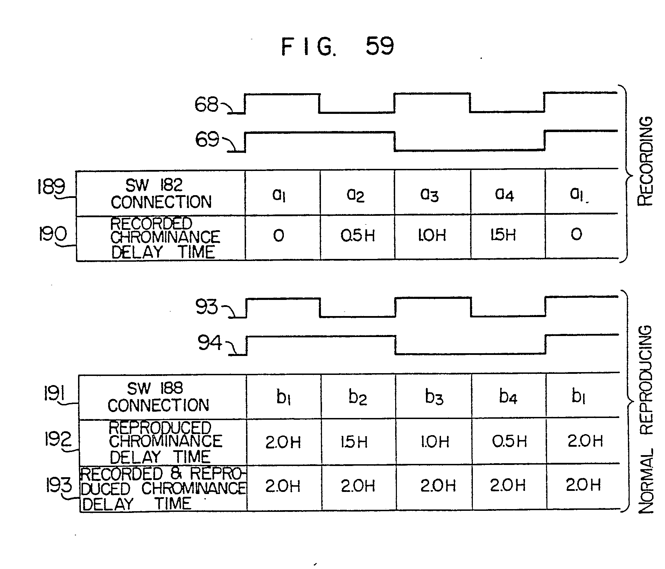

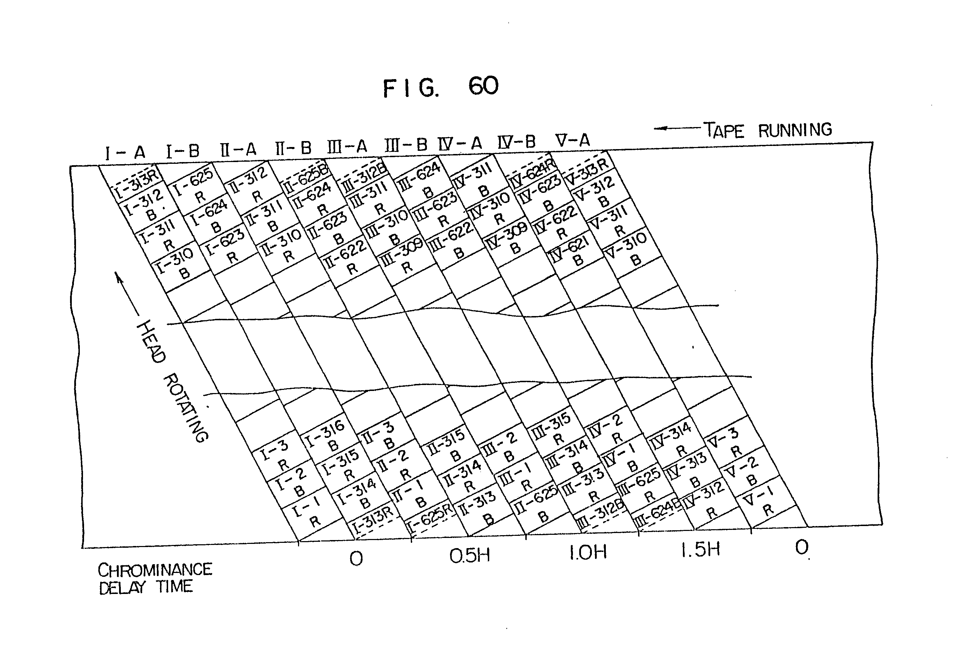

Figs. 56 and 57 show basic block diagrams of a fifth embodiment for $a_H = 0.75$, Fig. 58 shows waveforms of the delay line switching control signal, Fig. 59 shows waveforms in the circuits of Figs. 56 and 57 and the relationship of the chrominance signal, and Fig. 60 shows a recorded pattern of the chrominance signal ($a_H = 0.75$).

The recorded pattern of the brightness signal is the same as that shown in Fig. 6. Fig. 56 shows a block diagram of a recording block of a fifth embodiment of the present invention, in which numerals 1—7, and 62—75 designate the same elements as those in the first embodiment (Fig. 24) and the second embodiment (Fig. 34) and they function in the same way. Accordingly, they are not explained here. Numerals 179—181 denote 0.5 H, 1.0 H and 1.5 H delay lines, respectively and numeral 182 denotes a switching circuit. The numerals of the waveforms shown in Figs. 58 and 59 correspond to the numerals shown in Fig. 56. In Fig. 56, the delay function of the chrominance signal and the functions of the switching control signal and the first and second index signals are the same as those in the second embodiment of Fig. 34. The brightness signal from the low-pass-filter 2 is applied to the frequency modulator 4 and the output signal therefrom is combined with the chrominance signal in the adder 6. On the other hand, the carrier chrominance signal from the band-pass filter 3 is applied to terminals $a_1$, $a_2$, $a_3$ and $a_4$ of the switching circuit 182 directly and

21

# 0 024 869

through the 0.5 H delay line 179, the 1.0 H delay line 180 and the 1.5 H delay line 181, respectively. The switching circuit 182 is controlled by the switching control signal as is the case of the second embodiment so that the carrier chrominance signals which are delayed by 0, 0.5 H, 1.0 H, 1.5 H, 0, 0.5 H,... at every second track (field) are produced at the output of the switching circuit 182, as shown by 190 in Fig. 59. The chrominance signal is applied to the frequency converter 5 and the frequency converted signal is then applied to the adder 62, to which the first index signal 73 (Fig. 58) for defining the reference to the switching control signal is also applied as is done in the second embodiment. This corresponds to a case where the delay time of the chrominance signal is zero. The combined signal of the chrominance signal and the first index signal 73 produced in the adder 62 is then applied to the adder 63 to which the second index signal 75 for controlling the switching is also applied as is done in the second embodiment. The combined signal of the chrominance signal and the first and second index signals 73 and 75 produced in the adder 63 is then applied to the adder 6 and the output signal therefrom is recorded in the same manner as in the second embodiment. Assuming that the chrominance signals to be recorded on the tracks [I-A, I-B], [II-A, II-B], [III-A, III-B], [IV-A, IV-B],..., are delayed by 0, 0.5 H, 1.0 H, 1.5 H,..., respectively, the recorded pattern of the chrominance signals appears as shown in Fig. 60 in which there is a time difference of 0.75 H (or 0.25 H) between the adjacent tracks but the chrominance signals in every other track are arranged side by side. The first index signals are inserted in the tracks I-A, V-A,... and the second index signals are inserted in the tracks [I-A, I-B], [III-A, III-B],... The relationship between the tracks and the signals is not limited to that shown in Fig. 60 so long as the delay time switching corresponds to the reference.

A reproducing block is now explained. Fig. 57 shows a block diagram of the reproducing block of the fifth embodiment, and Figs. 58 and 59 show the waveforms of the switching control signals, of the circuit of Fig. 57 and the relationship to the chrominance signal. In Fig. 57, numerals 7—13, 78, 87—91, 93—108 and 115 denote the same elements as those shown in the first embodiment (Fig. 25) and the second embodiment (Fig. 35) and they function in the same manner. Numeral 183 denotes a 0.5 H delay line, numerals 184—187 denote 2.0 H, 1.5 H, 1.0 H and 0.5 H delay lines, respectively, and numeral 188 denotes a switching circuit. The numerals of the waveforms shown in Fig. 58, and 59 correspond to the numerals shown in Fig. 57. In Fig. 57, the delay function of the chrominance signal and the function of the switching control signals are the same as those in the second embodiment shown in Fig. 35. A portion of the reproduced brightness signal from the frequency demodulator 10 is directly applied to the switch 78 and another portion is applied to the switch 78 through a 0.5 H delay line 183. The switch 78 is controlled by the switching control signal 108. In the normal reproduction mode, the signal directly applied to the switch 78 is produced at the output of the switch 78. (The control signal 108 will be explained later in connection with the special reproduction mode.) The output signal of the switch 78 is combined with the reproduced chrominance signal by the adder 12. On the other hand, the reproduced chrominance signal which has been reconverted to the original frequency by the frequency converter 11 is applied to input terminals $b_1$, $b_2$, $b_3$ and $b_4$ of the switching circuit 188 through the 2.0 H delay line 184, the 1.5 H delay line 185, the 1.0 H delay line 186 and the 0.5 H delay line 187, respectively. The switching circuit 188 is controlled in the same manner as in the second embodiment. Accordingly, the reproduced signals which are delayed by 2.0 H, 1.5 H, 0.5 H, 2.0 H, 1.5 H..., for every second track with respect to the input signals to the respective delay lines are produced at the output of the switching circuit 188 as shown by 192 in Fig. 59. Since the delay is switched for every second track in the recording operation, the total delay time in the recording and reproduction operations in every track is equal to 2.0 H as shown by 193 in Fig. 59. The chrominance signal selected by the switching circuit 188 is combined with the reproduced brightness signal in the adder 12 and the combined signal is produced at the terminal 13 as a reproduced video signal. In the embodiment explained above, the reproduced brightness signal is not delayed in the reproduction operation. It may be delayed by a delay line having a delay time of 1.0 H or longer than that by an integer multiple of H so that the time difference between the reproduced brightness signal and the reproduced chrominance signal is made zero or equal to an integer multiple of H. Alternatively, the signals may be delayed in the recording operation but not delayed in the production operation, or both of the above may be implemented simultaneously. In the embodiment described above, the switching of the delay is controlled by the first index signal such that the total delay time of the chrominance signal in the recording and reproduction operations in every track is constant. The second index signal may be used in place of the first index signal to control the flip-flop 90 (and not control the flip-flop 91). In this case, there may be a time difference of 2 H between the total delay times in the recording and reproduction operations but the continuity of the chrominance signal is maintained and the time difference from the brightness signal is equal to zero or an integer multiple of H. Accordingly, proper chrominance signal and video signal can be reproduced.

The special reproduction mode is now explained. In the special reproduction mode, the control by the first reproduced index signal is not effected but the output signals of the flip-flops which are in synchronism with only the head selection signal are used as the switching control signals. The functions of the switching control signals for the brightness signal and the chrominance signal and the delay switching function are the same as those in the second embodiment and hence they are explained only briefly here.

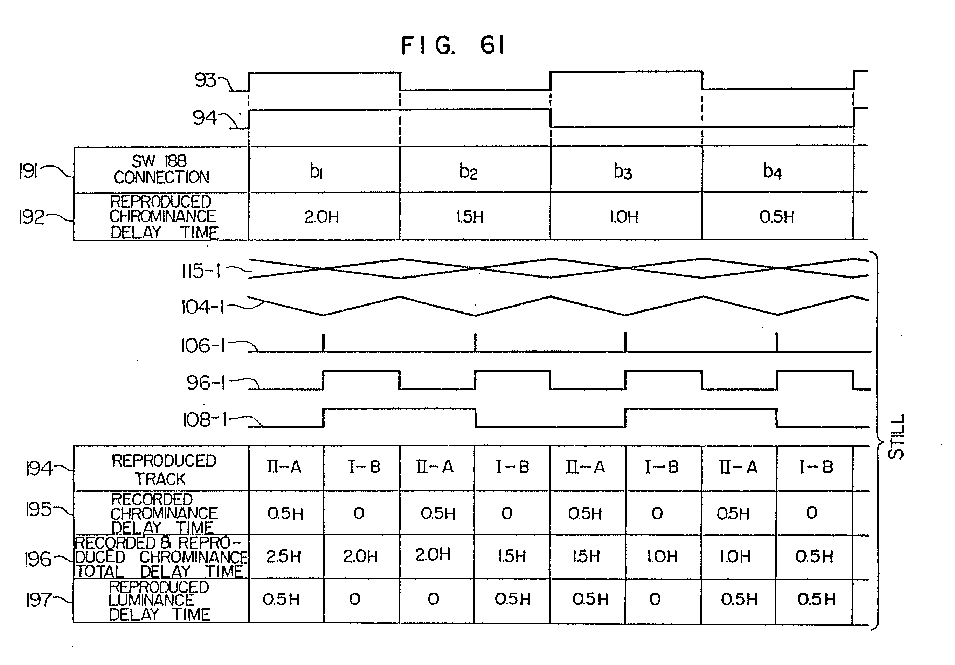

Figs. 61, 62 and 63 show the relationships between the brightness signals and the chrominance signals of the respective tracks when the recorded pattern of the brightness signal as shown in Fig. 6 and the recorded pattern of the chrominance signal as shown in Fig. 60 are reproduced in the special reproduction mode in accordance with the reproduction loci shown in Figs. 7—9. The waveforms 93, 94, 191 and 192 are

22

the same as those shown in Fig. 59, and the waveforms 115, 104, 106, 96 and 108 denote the envelope waveforms, the output signals of the envelope detector, the output signals of the pulse generator, the second index signals and the switching control signals, respectively, in the respective cases of the special reproduction mode. The waveforms 194—197, 198—201 and 202—205 show the reproduced tracks, the recording delay times of the chrominance signal, the total delay times of the chrominance signal in the recording and reproduction operations and the reproduction delay times of the brightness signal in the still reproduction mode, the fast forward reproduction mode and the reverse reproduction mode, respectively. The function of the switching control signal is the same as that in the second embodiment and the brightness signal which is delayed by zero is produced at the output of the switch 78 in the period in which the total delay time of the chrominance signal in the recording and reproduction operations is equal to an integer multiple of H (the signal 108 is HIGH) and the brightness signal which is delayed by 0.5 H is produced in the period in which the total delay time is shifted by 0.5 H from an integer multiple of H (the signal 108 is LOW).

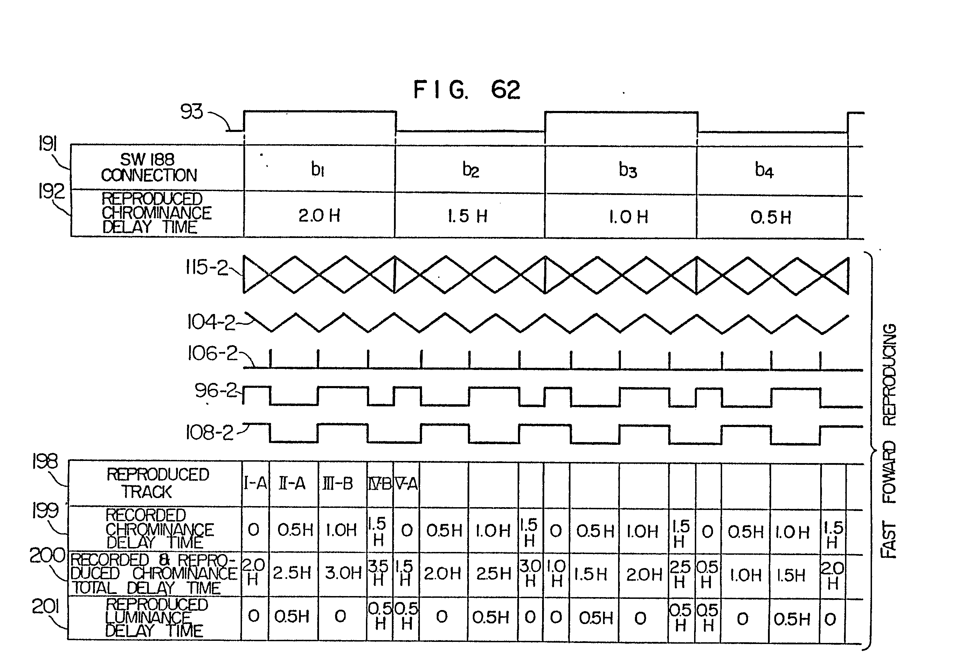

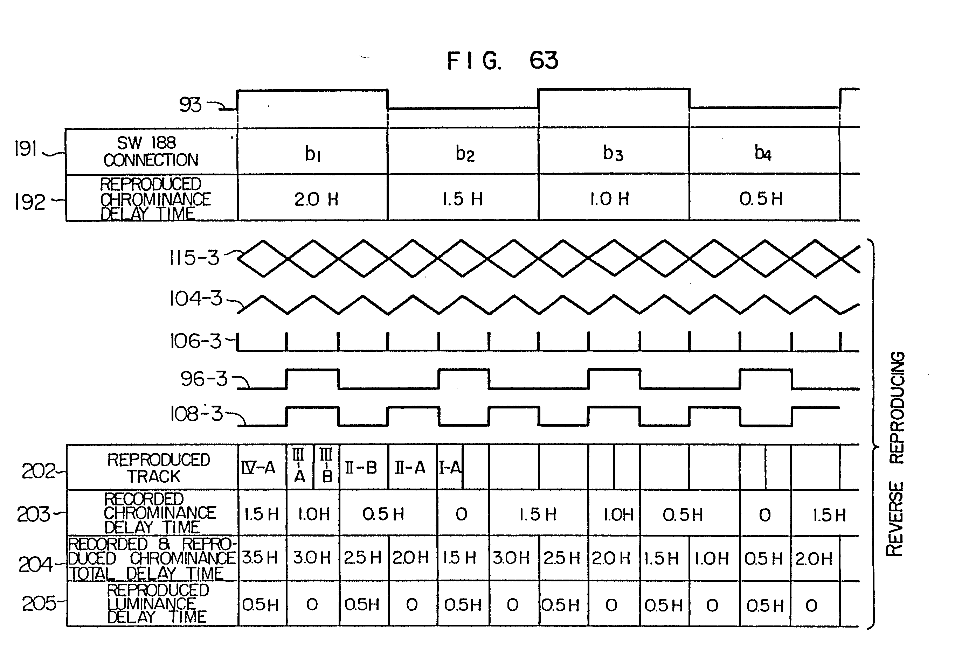

The case 1) of the special reproduction mode corresponds to the switching from the track I-A to the track II-A in Fig. 8 and the switching from the track III-B to the track IV-B, and the chrominance signal delay as shown by 200 in Fig. 62 appears. In this case, since one head is used during one reproduction cycle, the switching of the delay in the course of the reproduction of the chrominance signal does not occur. As seen from the recorded pattern shown in Fig. 60, since the chrominance signals on every other track are arranged side by side, the continuity of the chrominance signal is maintained. As shown by 200 in Fig. 62, the amount of delay of the chrominance signal changes by 0.5 H at the switching from I-A to II-A and from III-B to IV-B. (The chrominance signal after the switching point is retarded by 0.5 H). Since the chrominance signal is advanced by 0.5 H after the discontinuity point when the original pattern shown in Fig. 8 is reproduced, the sequence of the chrominance signal can be properly corrected by the 0.5 H delay at the time of switching. The brightness signal is not delayed when the signal 108 is HIGH and delayed by 0.5 H when the signal 108 is LOW. Thus, since the brightness signal is advanced by 0.5 H after the discontinuity point when the original pattern shown in Fig. 6 is reproduced, the continuity of the horizontal synchronizing signal can be maintained by the 0.5 H delay at the time of switching. The case 2) corresponds to the switching from I-B to II-A in Fig. 7 and the switching from III-A to III-B in Fig. 9 and the chrominance signal delay as shown by 196 in Fig. 61 and 204 in Fig. 63 appears. In this case, the continuity of the chrominance signal is maintained by the same switching of the delay of the chrominance signal as that in the normal reproduction mode. As for the brightness signal, the delay appears as shown by 197 and 205. It is the same as in the normal reproduction mode and the continuity of the horizontal synchronizing signal is maintained. The case 3) corresponds to the switching from II-A to III-B in Fig. 8 and the chrominance signal delay as shown by 200 in Fig. 62 appears. In this case, the total delay time of the chrominance signal in the recording and reproduction operations changes by 0.5 H at the time of switching of the head. (The chrominance signal after the switching point is retarded by 0.5 H). Since the signal is advanced by 0.5 H after the switching point when the original pattern shown in Fig. 8 is reproduced, the sequence of the chrominance signal can be properly corrected by the 0.5 H delay. As to the brightness signal, as shown by 201 it is delayed by 0.5 H with respect to the track II-A at the time of switching of the head so that the continuity of the horizontal synchronizing signal is maintained. The case 4) corresponds to the switching from II-A to I-B in Fig. 7 and the switching from II-B to II-A in Fig. 9, and the chrominance signal delay as shown by 196 in Fig. 61 and 204 in Fig. 63 appears. As shown by 196 in Fig. 61, the chrominance signal is not delayed at the time of switching of the head and it is delayed by 1.5 H in the recording operation with respect to the reproduction of the original pattern shown in Fig. 7 so that the continuity is maintained. In the case of 204 shown in Fig. 63, the signal is advanced by 1.5 H when the original pattern shown in Fig. 9 is reproduced and hence the continuity is properly corrected by the 1.5 H delay at the time of switching. As to the brightness signal, it is delayed by 0.5 H at the time of switching of the head as shown by 197 and 205 so that the continuity of the horizontal synchronizing signal is properly corrected. The case 5) corresponds to the switching from IV-A to III-A in Fig. 9, the switching from II-A to I-A and the switching from III-B to II-B, and the chrominance signal delay as shown by 204 in Fig. 63 appears. Like in the case 1), the continuity of the chrominance signal is maintained in this case. The brightness signal is delayed as shown by 205 and the continuity of the horizontal synchronizing signal can be maintained. In this manner, the continuity of the chrominance signal can be maintained in any case of the special reproduction mode. In the embodiment described above, the total delay time of the chrominance signal in the normal reproduction mode is set to 2.0 H. The signals may be delayed in accordance with Table 5 below in the production mode.

# 0 024 869

## TABLE 5

| Field | Chrominance signal delay | Brightness signal delay |
|---|---|---|
| I-A<br><br>I-B | 1.5 H | 0.5 H or longer than that by an integer multiple of H |
| II-A<br><br>II-B | 1.0 H | 0.5 H or longer than that by an integer multiple of H |
| III-A<br><br>III-B | 0.5 H | 0.5 H or longer than that by an integer multiple of H |
| IV-A<br><br>IV-B | 0 H | 0.5 H or longer than that by an integer multiple of H |

In this case, the switching of the delay of the brightness signal in the special reproduction mode is the same as that explained above.

The third embodiment where $a_H=1.0$ may be constructed in a similar manner to the fifth embodiment where $a_H=0.75$ and the continuity of the chrominance signal can be maintained in the special reproduction mode. In this case, the chrominance signal is delayed in the sequence of 0, 1.0 H, 0,... for every second track (the switching control signal 68 is used in the recording operation and the switching control signal 93 is used in the reproduction operation), and the switching of the delay of the brightness signal and the handling of the second index signal are not necessary. The first index signal may be an AND output of the head selection signal 67, the switching control signal 68 and the vertical synchronizing signal 71.

In the fifth embodiment described above, the signals are recorded such that only the chrominance signals on every other track are arranged side by side. A method for maintaining the continuity in the special reproduction mode in which the brightness signals, in addition to the chrominance signals, on every other track are arranged side by side is now explained.

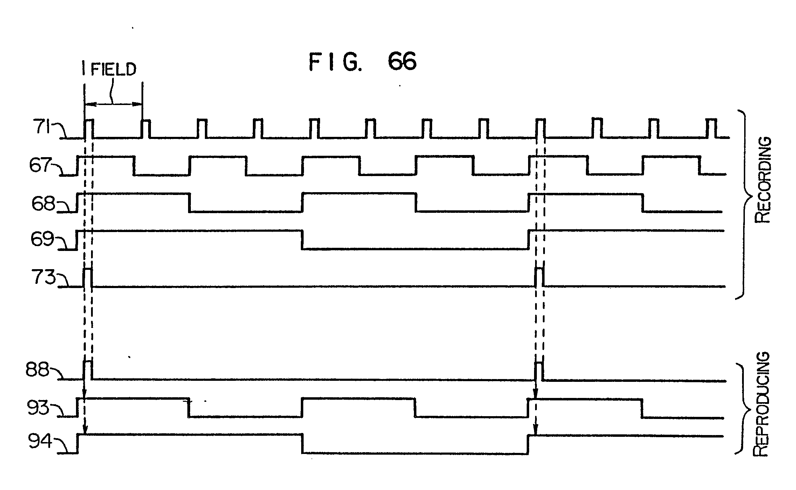

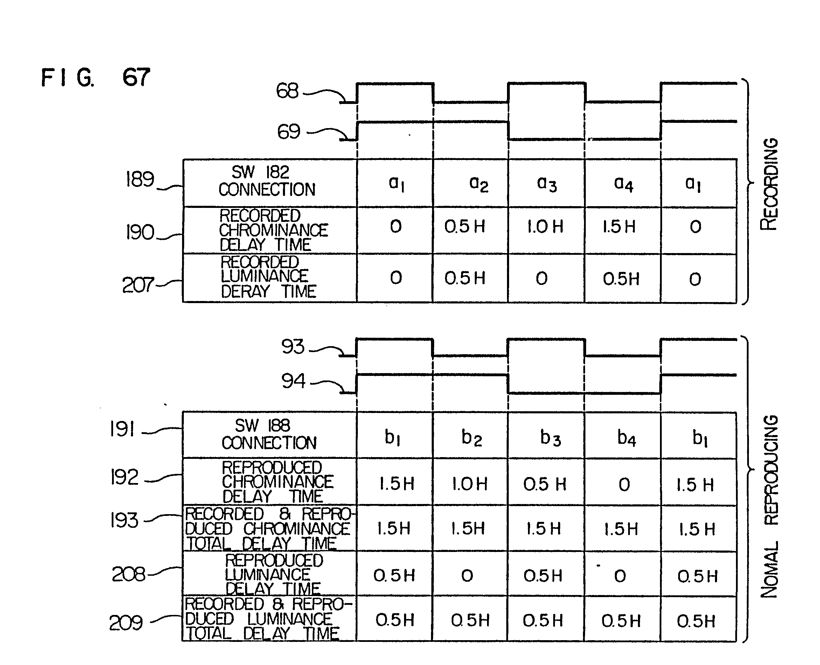

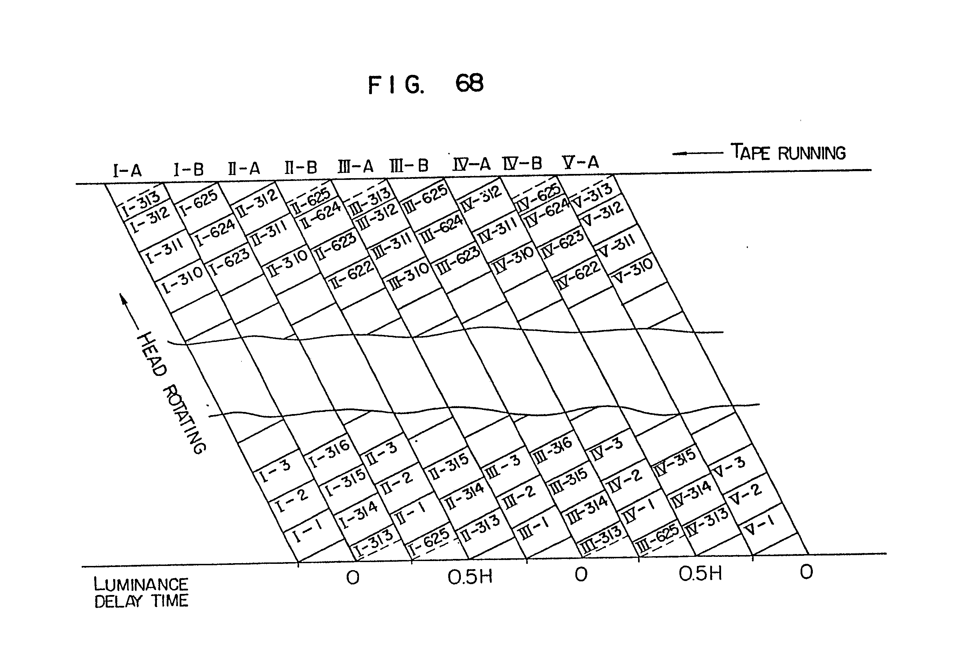

Figs. 64 and 65 show basic block diagrams of a sixth embodiment, Fig. 66 shows delay line switching control signals and Fig. 67 shows waveforms in the circuits of Figs. 64 and 65 and the relationship between the brightness signal and the chrominance signal. The recorded pattern of the chrominance signal is the same as that shown in Fig. 60, and the recorded pattern of the brightness signal is shown in Fig. 68. It is the same as that shown in the third embodiment of Fig. 48.

Fig. 64 shows the block diagram of the recording block of the sixth embodiment. The numerals 1—7, 62, 64—73 and 179—182 denote the same elements as those shown in the fifth embodiment of Fig. 56 and their basic functions are the same. Therefore, they are explained here only briefly.

Numeral 206 denotes a 0.5 H delay line and numeral 156 denotes a switch. The brightness signal from the low-pass filter 2 is applied to the switch 156 directly and through the 0.5 H delay line 206, respectively. The switch 156 is controlled by the switching control signal 73 so that the brightness signals which are delayed by 0, 0.5 H, 0, 0.5 H,... for every other track are produced at the output of the switch 156. The output from the switch 156 is applied to the frequency modulator 4 the output of which is applied to the adder 6. On the other hand, the chrominance signal from the band-pass filter 3 is selectively delayed in the same manner as is done in the fifth embodiment and the selected signal is applied through the frequency converter 5 to the adder 62 where it is combined with the first index signal 73. The combined chrominance signal is applied to the adder 6 where it is combined with the brightness signal and the combined signal is recorded. The first index signal 73 is constructed in the same manner as in the fifth embodiment and it is recorded in the period in which the delay time of the brightness signal is zero and the delay time of the chrominance signal is zero. Assuming that the brightness signals to be recorded on the tracks [I-A, I-B], [II-A, II-B], [III-A, III-B], [IV-A, IV-B],... are delayed in the sequence of 0, 0.5 H, 0, 0.5 H,..., the recorded pattern of the brightness signal appears as shown in Fig. 68, in which the horizontal synchronizing signals on every other track are arranged side by side. The relationship between the tracks and the signals is not limited to that shown in Fig. 68 but the signals may be delayed in the sequence of 0, 0.5 H, 0, 0.5 H,... so long as the correspondence to the reference is maintained and the signals are delayed by one frame unit.

A reproducing block is now explained. Fig. 65 shows a block diagram of the reproducing block of the sixth embodiment, and Figs. 66 and 67 show the switching control signals, the waveforms in the circuit of Fig. 65 and the relationship between the brightness signal and the chrominance signal. The numerals which are identical to those shown in the fifth embodiment of Fig. 57 represent the same elements and they function in the same manner.

24

The reproduced brightness signal from the frequency demodulator 10 is applied to the switch 78 directly and through the 0.5 H delay line, respectively, for switching the delay time. On the other hand, the chrominance signal from the frequency converter 11 is applied to input terminals $b_1$, $b_2$, $b_3$ and $b_4$ of the switching circuit 188 through the 1.5 H delay line 185, the 1.0 H delay line 186 and the 0.5 H delay line 187 and directly, respectively. The switch 78 is controlled by the switching control signal 93 and the switching circuit 188 is controlled by the control signals 93 and 94. The control signals are constructed in the same manner as in the fifth embodiment (Fig. 57) as shown in Fig. 66. Thus, the reproduced chrominance signals which are delayed by 1.5 H, 1.0 H, 0.5 H, 0,... for every other track are produced at the output of the switching circuit 188 as shown by 192 in Fig. 67. Since the signals are delayed for every other track in the recording and reproduction operations for every track is equal to 1.5 H as shown by 193 in Fig. 67. The switching control signals 93 and 94 are controlled by the reproduced first index signal 88 such that the total delay time of the chrominance signal in every track is equal to each other. The separation and control functions of the index signal are same as those in the fifth embodiment. As for the brightness signal, the reproduced brightness signals which are delayed by 0.5 H, 0, 0.5 H, 0,... for every other track are produced at the output of the switch 78 as shown by 208 in Fig. 67. (The delay is 0.5 H when the signal 93 is HIGH and zero when the signal 93 is LOW). Since the signals are delayed for every other track in the recording operation, the total delay times in the recording and reproduction operations are all equal to 0.5 H as shown by 209 in Fig. 67.

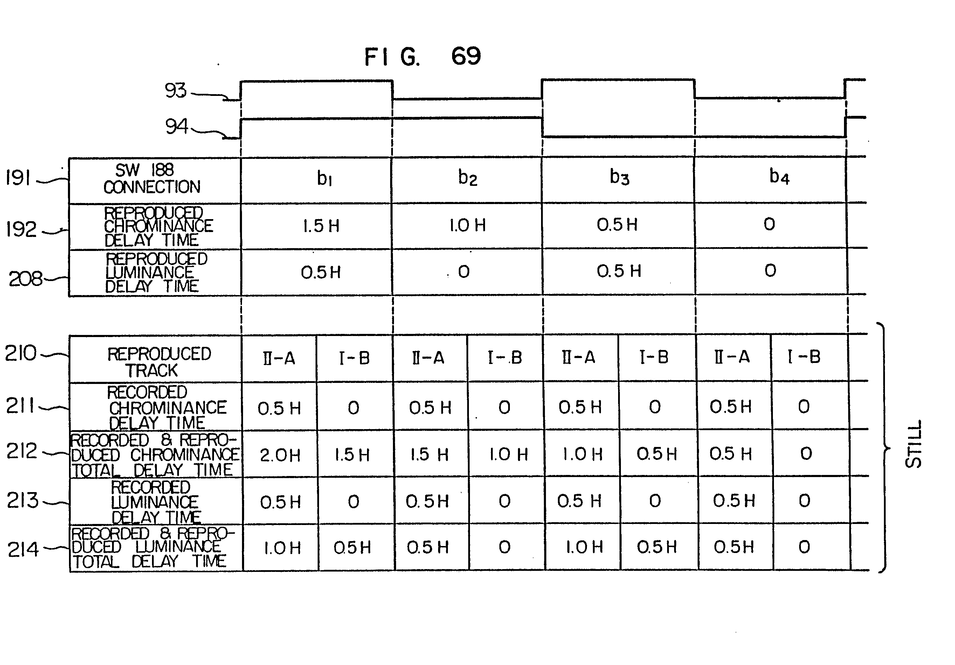

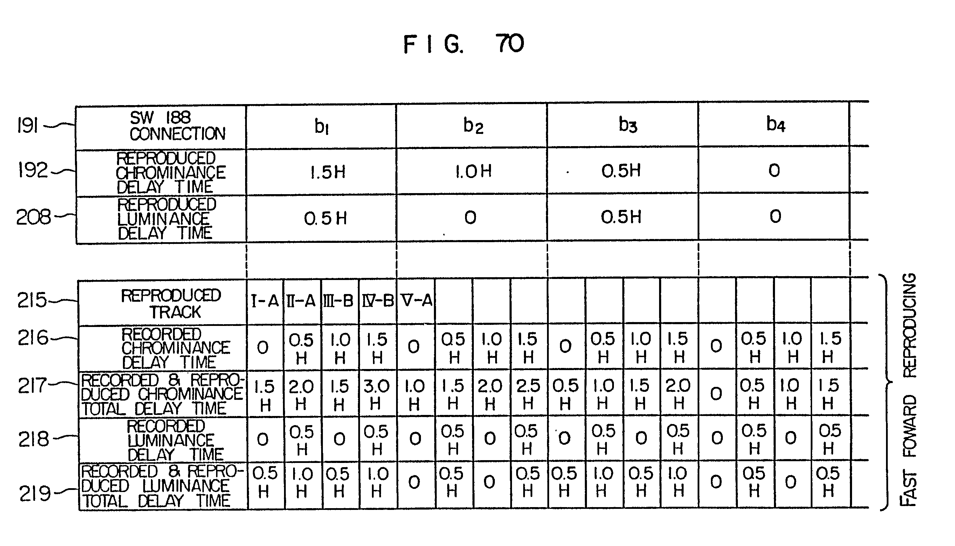

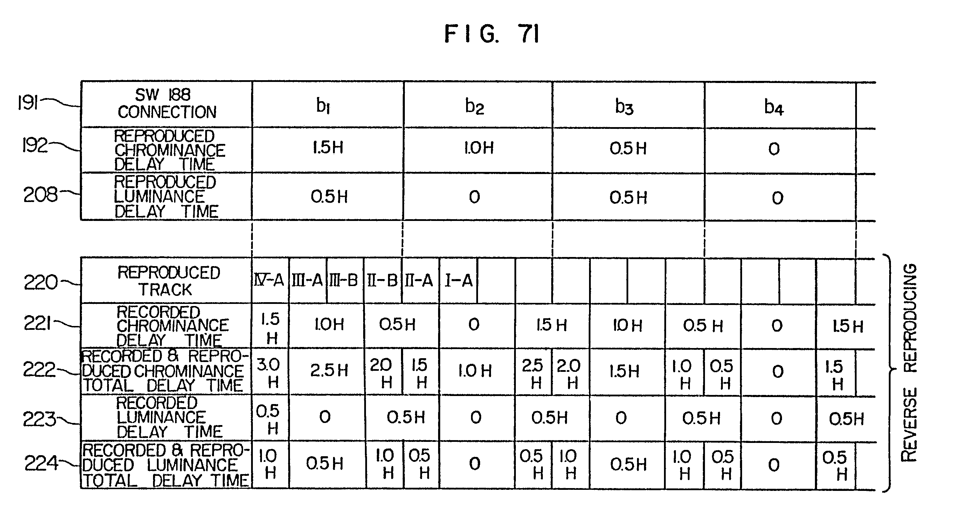

The special reproduction mode is now explained. In the special reproduction mode, like in the case of the fifth embodiment, the control by the reproduced first index signal is not effected but the head selection signal and the output signals of the flip-flops which are in synchronism with only the head selection signal are used as the switching control signals. Figs. 69, 70 and 71 show the delay times of the brightness signals and the chrominance signals of the respective tracks when the recorded pattern of the chrominance signal shown in Fig. 60 and the recorded pattern of the brightness signal shown in Fig. 68 are reproduced in the special reproduction mode in accordance with the reproduction loci shown in Figs. 7—9. The waveforms 93, 94, 191, 192 and 208 are the same as those shown in Fig. 67. The waveforms 210—214 in Fig. 69, the waveforms 215—219 in Fig. 70 and the waveforms 220—224 in Fig. 71 show the reproduced tracks, the recording delay times of the chrominance signal and the brightness signal and the total delay times of the both signals in the recording and reproduction operations in the still reproduction mode, the fast forward reproduction mode and the reverse reproduction mode, respectively. The function of the chrominance signal is exactly the same as that in the fifth embodiment and hence it is not explained here. The case 1) of the special reproduction mode corresponds to the switching from the track I-A to the track II-A in Fig. 8 and the switching from the track III-B to the track IV-B and the chrominance signal delay as shown by 217 in Fig. 70 appears. The brightness signal delay appears as shown by 219 in Fig. 70. Since the delay of the brightness signal is not switched during the reproduction and the brightness signals on every other tracks are arranged side by side, the continuity of the horizontal synchronizing signal is maintained. The case 2) corresponds to the switching from II-B to III-A in Fig. 7 and the switching from III-A to III-B in Fig. 9 and the chrominance signal delay as shown by 212 in Fig. 69 and 222 in Fig. 71 appears. The brightness signal delay appears as shown by 214 in Fig. 69 and 224 in Fig. 71. Thus, the continuity of the horizontal synchronizing signal is maintained by the same switching operation as that in the normal reproduction mode. The case 3) corresponds to the switching from II-A to III-B in Fig. 8 and the chrominance signal delay as shown by 217 in Fig. 70 appears and the brightness signal is delayed as shown by 219 in Fig. 70. Thus, the continuity of the horizontal synchronizing signal as well as the chrominance signal is maintained. The case 4) corresponds to the switching from II-A to I-B in Fig. 7 and the switching from II-B to II-A in Fig. 9 and the chrominance signal delay as·shown by 212 in Fig. 69 and 222 in Fig. 71 appears. The brightness signal is delayed as shown by 214 in Fig. 69 and 224 in Fig. 71. Thus, like in the case of the chrominance signal, the continuity of the horizontal synchronizing signal is maintained. The case 5) corresponds to the switching from IV-A to III-A in Fig. 9, the switching from II-A to I-A and the switching from III-B to II-B and the chrominance signal delay as shown by 222 in Fig. 71 appears. The brightness signal delays as shown by 224 in Fig. 71. Thus, like in the case 1), the continuity of the horizontal synchronizing signal is maintained.

Thus, the continuities of the chrominance signal and the horizontal synchronizing signal are maintained in any case of the special reproduction mode. In the sixth embodiment explained above, the brightness signals are delayed in the recording operation such that they are delayed by 0, 0.5 H, 0, 0.5 H,... for every other track. When they are delayed for every other track in accordance with Table 6 below, the brightness signals on the adjacent tracks are arranged side by side so that the adjacent disturbance of the brightness signal can be reduced.

# 0 024 869

TABLE 6

| Track | Recording | Reproduction |
|---|---|---|
| I-A | 0 | 0.5 H or longer than that by an integer multiple of H |
| I-B | 0.25 H | 0.25 H or longer than that by an integer multiple of H |
| II-A | 0.5 H | 0 or longer than that by an integer multiple of H |
| II-B | 0.75 H | 0.75 H or longer than that by an integer multiple of H |
| III-A | 0 | 0.5 H or longer than that by an integer multiple of H |
| III-B | 0.25 H | 0.25 H or longer than that by an integer multiple of H |
| IV-A | 0.5 H | 0 or longer than that by an integer multiple of H |
| IV-B | 0.75 H | 0.75 H or longer than that by an integer multiple of H |

In the fifth and sixth embodiments described above, there is a time difference between the total delay times of the brightness signal and the chrominance signal in the recording and reproduction operations in the special reproduction operations in the special reproduction mode, between the tracks and within the track and hence the quality of picture image is degraded by flicker. When the brightness signal is delayed in the recording and reproduction operations in the same manner as is done for the chrominance signal, the timing of the signals is matched and a high quality of picture image can be reproduced. The switching of the delays of the brightness signal and the chrominance signal may not be separated but the video signal before separation may be delayed in the recording operation and the combined reproduced signal of the reproduced brightness signal and the reproduced chrominance signal may be delayed in the reproduction operation. In the embodiment explained above, the total delay time of the chrominance signal in the recording and reproduction operations for each track is made equal in the normal reproduction mode by the first index signal. Alternatively, the signals may be delayed such that the time difference between the total delay times of the chrominance signal in the recording and reproduction operations is equal to 2 kH and the time difference between the total delay times of the brightness signal and the chrominance signal in the recording and reproduction operations is equal to kH. In this case, normal color image can be reproduced. In the fifth and sixth embodiments, the case when $a_H=0.75$ is explained. The present invention is also applicable to the patterns of any $a_H$ ($a_H \neq (2n+1)/2$) other than $a_H=0.75$. In this case, the recorded chrominance signals may be delayed such that the delay increases by $(2a_H+1)H$ for every other track or in the sequence which is 2 kH shorter than the above sequence and the reproduced chrominance signals may be delayed in the reverse sequence. This is the same as that explained above in connection with the second and fourth embodiments.

In the third embodiment where $a_H=1.0$ and one field of information is recorded on one track, $2a_H+1$ is equal to 3.0 and the recorded chrominance signals are delayed such that the delay increases by 3.0 H for every other track or in the time sequence which is 2 kH shorter than the above sequence, that is, they are delayed in the sequence of 0, 3 H−2 H=1 H (k=1), 6 H−6 H=0 (k=3), 9 H−8 H=1 H (k=4),.... In this manner, the chrominance signals on every other track are arranged side by side. In the reproduction operation, they may be delayed in the reverse sequence. The brightness signals in the fifth embodiment where $a_H \neq n/2$ are delayed in the same manner as explained in the first and second embodiments, and the brightness signals

26

# 0 024 869

in the sixth embodiment are delayed in the same manner as explained in the third and fourth embodiments.

In the embodiment where $a_H=0.75$ explained above, the discontinuity point of the horizontal synchronizing signal in the special reproduction mode is detected by the envelope detection which makes use of the falling of the envelope. Alternatively, the discontinuity point of the horizontal synchronizing signal may be directly detected by the change in the AFC error signal by an AFC circuit. In the embodiment explained above, the delay switching control signal for the brightness signal in the special reproduction mode is produced by detecting the discontinuity point of the horizontal synchronizing signal by the envelope detection. Alternatively, when the second index signal in the first embodiment is inserted in the periods in which the delay times of the recorded chrominance signal are 0, 1.25 H, 1.0 H and 0.25 H, and the second index signal in the second embodiment is inserted in the periods in which the delay times of the recorded chrominance signals are 0 and 1.0 H, the switching control signal can be produced by detecting the index signal. While the delay lines have been used as the delay elements in the illustrated embodiments, any other delay elements such as CCD may be used, and when a variable delay line (CCD) is used the construction of the switching circuit for switching the delay may be simplified.

As explained above, in the present invention, a higher density than with a conventional system is attained in recording and reproducing the PAL/SECAM signal, and no skew distortion occurs in the special reproduction mode and the sequence of the chrominance signals can be properly maintained. Thus, high quality of image and sound can be reproduced. When the brightness signals and the chrominance signals on at least every other track are arranged side by side in the recorded pattern, the discontinuity does not take place in the special reproduction mode. When the signals on the adjacent tracks are arranged side by side as illustrated in the embodiment, the adjacent disturbance signal is materially reduced and a high quality of image can be reproduced, This is particularly advantageous in recording and reproducing the SECAM system television signal.

In our co-pending European Patent Application No. 80302780.4 there is disclosed a video signal recording and reproducing apparatus for PAL or SECAM system colour television signals in which there is provided a detector for detecting discontinuity points of a reproduced chrominance signal or a reproduced horizontal synchronizing signal, a device for retarding a reproduced brightness signal by $[2(t_H+a_H)-m]$ lines and retarding the reproduced chrominance signal by $[2(t_H+a_H)-2l]$ lines with respect to the signal before the discontinuity point each time the discontinuity point is detected by the detector, and a device for advancing the reproduced brightness signal by $[2(t_H+a_H)-m]$ lines and advancing the reproduced chrominance signal by $[2(t_H+a_H)-2l]$ lines with respect to the signal before the discontinuity point each time the discontinuity point is detected by the detector.

## Claims

1. A video signal recording and reproducing apparatus wherein a PAL or SECAM system colour television signal (VTR) is recorded and reproduced sequentially on and from oblique tracks (e.g. I-A, II-A; I-B, II-B) on a recording medium by two heads (A, B) having an azimuth angle therebetween, said colour signal (VTR) comprising a carrier chrominance signal (R, B) and a brightness signal having separated therefrom a horizontal synchronising signal, the colour signal (VTR) being recorded in such a manner that horizontal synchronizing signals on adjacent tracks (I-A, I-B) on said recording medium are not arranged side by side when said brightness signals to be recorded are, unlike the chrominance signals, not delayed by a predetermined time difference but are recorded in a time sequence at which the brightness signals are applied, characterised in that in order to obtain continuity of the horizontal synchronising signals and the chrominance signals during a special reproduction mode, the carrier chrominance signals to be recorded along each successive track are delayed by respective delay periods chosen in a repeating rotational sequence from a predetermined delay period group so that the chrominance signals on at least every other track are arranged side by side, and the reproduced carrier chrominance signals derived from each successive track are delayed by respective delay periods chosen from said predetermined delay period group in the reverse repeating rotational sequence to that of the recording operation.

2. A video signal recording and reproducing apparatus according to Claim 1 wherein the carrier chrominance signals to be recorded are sequentially delayed at the predetermined time interval by the constant time difference or different than that by 2 kH so that the chrominance signals on the adjacent tracks on the recorded loci are arranged side by side, and the reproduced chrominance signals are sequentially delayed in the reverse sequence as that in the recording operation at the predetermined time interval by the constant time difference or different than that by 2 kH to produce an output chrominance signal.

3. A video signal recording and reproducing apparatus according to Claim 1 wherein the brightness signals in the input video signal are recorded without imparting a time difference at a predetermined time interval, and when it is reproduced at the same tape speed as that in the recording operation (normal reproduction mode) it is reproduced without imparting a time difference at the predetermined time sequence, and in a special reproduction mode such as fast forward, slow motion, still and reverse reproduction modes, discontinuity points in the reproduced horizontal synchronizing signals are detected to produce control signals, said control signals being used to sequentially switch the delay time of the

27

**0 024 869**

reproduced brightness signals so that the difference between the total delay times of the chrominance signal and the brightness signal in the recording and reproduction operations is the normal reproduction mode and the special reproduction mode is always mode zero or equal to an integer multiple of H; where $t_H + a_H \neq h/2$

$t_H$: the number of lines in each track

$a_H$: the amount of deviation between adjacent horizontal synchronizing signals in the original recorded pattern when the two heads are arranged at an angle of 180° to each other. ($a_H > 0$ when the rotation direction of the heads and the travelling direction of the tape are same, and $a_H < 0$ when they are opposite to each other.)

h: an integer.

4. A video signal recording and reproducing apparatus according to Claim 1 wherein the brightness signals in the input video signal are sequentially delayed at the predetermined time interval by the constant time difference or different than that by kH and recorded such that the horizontal synchronizing signals on at least every other track on the recorded loci are arranged side by side, and the reproduced brightness signals are sequentially delayed in the reverse sequence to that in the recording operation at the predetermined time interval by the constant time difference or different than that by kH to produce an output brightness signal so that a time difference between the total delay times of the chrominance signal and the brightness signal in the recording and reproduction operations in the normal reproduction mode and the special reproduction mode is always made zero or equal to an integer multiple of H; where $t_H + a_H \neq h/2$.

5. A video signal recording and reproducing apparatus according to Claim 1 wherein the brightness signals in the input video signal are sequentially delayed at the predetermined time interval by the constant time difference or different than that by kH and recorded such that the horizontal synchronizing signals on the adjacent tracks on the recorded loci are arranged side by side, and the reproduced brightness signals are sequentially delayed in the reverse sequence to that in the recording operation at the predetermined time interval by the constant time difference or different than that by kH to produce an output brightness signal so that a time difference between the total delay times of the chrominance signal and the brightness signals in the recording and reproduction operations in the normal reproduction mode and the special reproduction mode is always made zero or equal to an integer multiple of H; where $t_H + a_H \neq h$.

6. A video signal recording and reproducing apparatus according to Claim 1 wherein means for sequentially delaying the brightness signals to be recorded or reproduced at the predetermined time interval by the constant time difference or longer than that by 2 kH or means for sequentially delaying the chrominance signals to be recorded or reproduced at the predetermined time interval by the constant time difference or longer than that by 2 kH includes means (14), (15), (16) and (22), (23), (24) for delaying the brightness signal or the chrominance signals by the predetermined times (including zero time) and means (17), (25) responsive to a head selection signal or a signal related thereto to select the outputs of said delay means.

7. A video signal recording and reproducing apparatus according to Claim 1 wherein said means for sequentially delaying the brightness signals to be recorded or reproduced or the chrominance signals to be recorded or reproduced includes means (3), (9), (11) for applying the brightness signals or the chrominance signals to variable delay means (14), (15), (16) and (22), (23), (24) and means responsive to a head selection signal or a signal related thereto to control the delay time of the variable delay means.

8. A video signal recording and reproducing apparatus according to Claim 1 wherein pilot signals which are in synchronism with the repetition of the delays of the brightness signals or the chrominance signals are recorded, and in the normal reproduction mode the repetition timing of the delays of the reproduced brightness signals or the reproduced chrominance signals is controlled by said pilot signals so that the total delay time of the brightness signal or the chrominance signal in the recording and reproduction operation in the normal reproduction mode is constant in every period.

9. A video signal recording and reproducing apparatus according to Claim 8 wherein the reproduced brightness signals and the reproduced chrominance signals are delayed in accordance with the delays of the brightness signals and the chrominance signals in the recording operation so that a time difference between the total delay times of the brightness signal and the chrominance signal in the recording and reproduction operations in the normal reproduction mode is made zero.

10. A video signal recording and reproducing apparatus according to Claim 3 wherein said control signal produced by detecting the discontinuity points in the reproduced horizontal synchronizing signals in the special reproduction mode to select the delay time of the reproduced brightness signals is recorded in the recording operation together with pilot signals for indicating the delays of the chrominance signals, and in the special reproduction mode said control signal is produced by a first signal, or the first signal and one or both of a second signal and a third signal, said first signal being produced by said pilot signal and a signal for indicating the delays of the chrominance signals in the reproduction operation, said second signal being produced by detecting a change in an envelope of the reproduced signals, said third signal being produced by detecting the discontinuity points of the horizontal synchronizing signals in the reproduced brightness signals.

11. A video signal recording and reproducing apparatus according to Claim 1 wherein one field of signals are recorded on each track by the two heads arranged at the angle of 180° to each other, and the

28

# 0 024 869

chrominance signals to be recorded are sequentially delayed at every track by $[(a_H+1/2)-2k]$ lines; where $a_H \neq (2n+1)/2$

n: an integer.

12. A video signal recording and reproducing apparatus according to Claim 1 wherein one field of signal is recorded on each track by the two heads arranged at the angle of 180° to each other, and the chrominance signals to be recorded are sequentially delayed by $[(2a_H+1)-2k]$ lines at every second track; where $a_H \neq (2n+1)/2$.

13. A video signal recording and reproducing apparatus according to Claim 1 wherein one field of signal is recorded on each track by the two heads, one of said heads being offset from 180° line by an angle corresponding to $[(a_H+1/2)-2i]H$ (where i is an integer), and the chrominance signals to be recorded are delayed by $[(2a_H+1)-2k]$ lines at every second track; where $a_H \neq n/2$.

14. A video signal recording and reproducing apparatus according to Claim 3 wherein one field of signal is recorded on each track, and in the special reproduction mode the discontinuity points of the reproduced horizontal synchronizing signals are detected to produce the control signal, and the delay times of the reproduced brightness signals are sequentially switched such that in the fast forward reproduction mode the reproduced brightness signals before the discontinuity point are retarded by $(2a_H-k)$ lines each time said discontinuity point is detected and in the slow motion, still or reverse reproduction mode the reproduced brightness signals before the discontinuity point are advanced by $(2a_H-k)$ lines; where $a_H \neq n/2$..

15. A video signal recording and reproducing apparatus according to Claim 4 wherein one field of signal is recorded on each track and the brightness signals to be recorded are sequentially delayed by $[(2a_H+1)-k]$ lines at every second track; where $a_H \neq n/2$.

16. A video signal recording and reproducing apparatus according to Claim 5 wherein one field of signal is recorded on each track by the two heads arranged at the angle of 180° to each other, and the brightness signals to be recorded are sequentially delayed by $[(a_H+1/2)-k]$ lines at every track; where $a_H \neq (2n+1)/2$

17. A video signal recording and reproducing apparatus according to Claim 5 wherein one field of signal is recorded on each track by the two heads, one of said heads being offset from 180° line by an angle corresponding to $[(a_H+1/2)-2i]H$ (where i is an integer), and the brightness signals to be recorded are delayed by $(2a_H-k)$ lines at every second track; where $a_H \neq n/2$.

18. A video signal recording and reproducing apparatus according to Claim 11 wherein a time difference $a_H$ between the horizontal synchronizing signals on adjacent tracks is equal to n (where n is an integer) and the carrier chrominance signals to be recorded are delayed at every track by 0.5 H or longer than that by 2 kH.

19. A video signal recording and reproducing apparatus according to Claim 12 wherein a time difference $a_H$ between the horizontal synchronizing signals on adjacent tracks is equal to n (where n is an integer) and the carrier chrominance signals to be recorded are delayed at every track by 1.0 H or longer than that by 2 kH.

20. A video signal recording and reproducing apparatus according to Claim 16 wherein a time difference $a_H$ between the horizontal synchronizing signals on the adjacent tracks is equal to n (where n is an integer) and the brightness signals to be recorded are delayed at every track by 0.5 H or longer than that by 2 kH.

**Patentansprüche**

1. Apparat zur Aufzeichnung und Wiedergabe von Videosignalen, bei dem ein Farbfernsehsignal (VTR) des PAL- oder SECAM-Systems durch zwei einen Azimutwinkel zwischen sich einschließende Köpfe (A, B) sequentiell auf schrägen Spuren (z.B. I-A, II-A; I-B, II-B) auf einen Aufzeichnungsmedium aufgezeichnet und von diesen wiedergegeben wird, wobei das Farbsignal (VTR) ein Trägerchrominanzsignal (R, B) und ein Helligkeitssignal, von dem ein Horizontalsynchronsignal abgetrennt ist, aufweist, und das Farbsignal (VTR) derart aufgezeichnet wird, daß Horizontalsynchronsignale auf aneinander angrenzenden Spuren (I-A, I-B) auf dem Aufzeichnungsmedium nicht nebeneinander angeordnet sind, wenn die aufzuzeichnenden Helligkeitssignale, ungleich den Chrominanzsignalen, nicht um einen vorbestimmten Zeitunterschied verzögert, sondern in einer Zeitfolge aufgezeichnet werden, mit der die Helligkeitssignale zugeführt werden, dadurch gekennzeichnet, daß zur Erlangung von Stetigkeit der Horizontalsynchronsignale und der Chrominanzsignale während einer speziellen Wiedergabebetriebsart die längs jeder aufeinanderfolgenden Spur aufzuzeichnenden Trägerchrominanzsignale jeweils um Verzögerungszeiten verzögert werden, die in einer sich wiederholenden zyklischen Reihenfolge aus einer vorbestimmten Vorzögerungszeitgruppe derart gewählt sind, daß die Chrominanzsignale auf mindestens jeder zweiten Spur nebeneinander angeordnet sind, und die von jeder aufeinanderfolgenden Spur abgenommenen, wiedergegebenen Trägerchrominanzsignale jeweils um Verzögerungszeiten verzögert werden, die aus der vorbestimmten Verzögerungszeitgruppe in der zum Aufzeichnungsvorgang umgekehrten sich wiederholenden zyklischen Reihenfolge gewählt sind.

2. Apparat zur Aufzeichnung und Wiedergabe von Videosignalen nach Anspruch 1, bei dem die aufzuzeichnenden Trägerchrominanzsignale in dem vorbestimmten Zeitintervall um den konstanten Zeitunterschied oder einen davon um 2 kH verschiedenen sequentiell verzögert werden, so daß die

29

Chrominanzsignale auf den aneinander angrenzenden Spuren auf den aufgezeichneten Ortslinien nebeneinander angeordnet sind, und die wiedergegebenen Chrominanzsignale in der zu dem Aufzeichnungsvorgang umgekehrten Reihenfolge in dem vorbestimmten Zeitintervall um den konstanten Zeitunterschied oder einen davon um 2 kH verschiedenen zur Erzeugung eines Ausgangschrominanzsignals sequentiell verzögert werden.

3. Apparat zur Aufzeichnung und Wiedergabe von Videosignalen nach Anspruch 1, bei dem die Helligkeitssignale in dem Eingangsvideosignal ohne Erteilung eines Zeitunterschiedes in einem vorbestimmten Zeitintervall aufgezeichnet werden und im Falle dessen Wiedergabe mit derselben Bandgeschwindigkeit wie im Aufzeichnungsbetrieb (normale Wiedergabebetriebsart) ohne die Erteilung eines Zeitunterschiedes in der vorbestimmten Reihenfolge wiedergegeben wird, und in einer speziellen Wiedergabebetriebsart wie Schnellvorlauf-, Zeitlupe-, Stehbild- und Rückwärtswiedergabebetriebsarten Unstetigkeitspunkte in den wiedergegebenen Horizontalsynchronsignalen zur Erzeugung von Steuersignalen erfaßt werden, wobei die Steuersignale zur derartigen sequentiellen Umschaltung der Verzögerungszeit der wiedergegebenen Helligkeitssignale verwendet werden, daß der Unterschied zwischen den gesamten Verzögerungszeiten des Chrominanzsignals und des Helligkeitssignals bei dem Aufzeichnungs- und Wiedergabevorgang in der normalen Wiedergabebetriebsart und der speziellen Wiedergabebetriebsart stets zu Null oder gleich einem ganzzahligen Vielfachen von H gemacht wird, wobei $t_H + a_H \neq h/2$ $t_H$ die Anzahl von Zeilen in jeder Spur $a_H$ der Wert der Abweichung zwischen nebeneinander liegenden Horizontalsynchronsignalen in dem ursprünglichen Aufzeichnungsmuster, wenn die beiden Köpfe unter einem Winkel von 180° zueinander angeordnet sind ($a_H > 0$, wenn die Drehrichtung der Köpfe und die Transportrichtung des Bandes übereinstimmen und $a_H < 0$, wenn diese zueinander entgegengesetzt sind) h eine ganze Zahl ist.

4. Apparat zur Aufzeichnung und Wiedergabe von Videosignalen nach Anspruch 1, bei dem die Helligkeitssiganle in den Eingangsvideosignal in dem vorbestimmten Zeitintervall um den konstanten Zeitunterschied oder einen davon um kH verschiedenen sequentiell verzögert und derart aufgezeichnet werden, daß die Horizontalsynchronsignale auf mindestens jeder zweiten Spur auf den aufgezeichneten Ortslinien nebeneinander angeordnet sind, und die wiedergeben Helligkeitssignale in der zum Aufzeichnungsvorgang umgekehrten Reihenfolge in dem vorbestimmten Zeitintervall um den konstanten Zeitunterschied oder einen davon um kH verschiedenen sequentiell verzögert werden, um ein Ausgangshelligkeitssignal derart zu erzeugen, daß ein Zeitunterschied zwischen den gesamten Verzögerungszeiten des Chrominanzsignals und des Helligkeitssignals in dem Aufzeichnungs- und Wiedergabevorgang in der normalen Wiedergabebetriebsart und der speziellen Wiedergabebetriebsart stets gleich Null oder gleich einem ganzzahligen Vielfachen von H gemacht wird, wobei $t_H + a_H \neq h/2$.

5. Apparat zur Aufzeichnung und Wiedergabe von Videosignalen nach Anspruch 1, bei dem die Helligkeitssignale in dem Eingangsvideosignal in dem vorbestimmten Zeitintervall um den konstanten Zeitunterschied oder einen davon um kH verschiedenen sequentiell verzögert und derart aufgezeichnet werden, daß die Horizontalsynchronsignale auf benachbarten Spuren auf den aufgezeichneten Ortslinien nebeneinander angeordnet sind, und die wiedergegebenen Helligkeitssignale in der zu dem Aufzeichnungsvorgang umgekehrten Reihenfolge in dem vorbestimmten Zeitintervall um den konstanten Zeitunterschied oder einen davon um kH verschiedenen sequentiell verzögert werden, um ein Ausgangshelligkeitssignal derart zu erzeugen, daß ein Zeitunterschied zwischen den gesamten Verzögerungszeiten des Chrominanzsignals und der Helligkeitssignale in dem Aufzeichnungs- und Wiedergabevorgang in der normalen Wiedergabebetriebsart und der speziellen Wiedergabebetriebsart stets gleich Null oder gleich einem ganzzahligen Vielfachen von H gemacht wird, wobei $t_H + a_H \neq h$.

6. Apparat zur Aufzeichnung und Wiedergabe von Videosignalen nach Anspruch 1, bei dem eine Einrichtung zur sequentiellen Verzögerung der aufzuzeichnenden oder wiederzugebenden Helligkeitssignale in dem vorbestimmten Zeitintervall um den konstanten Zeitunterschied oder einen um 2 kH längeren oder eine Einrichtung zur sequentiellen Verzögerung der aufzuzeichnenden oder wiederzugebenden Chrominanzsignale in dem vorbestimmten Zeitintervall um den konstanten Zeitunterschied oder einen um 2 kH längeren Einrichtungen (14, 15, 16) und (22, 23, 24) zur Verzögerung des Helligkeitssignals oder des Chrominanzsignals um die vorbestimmten Zeiten (einschließlich Zeit Null) und auf ein Kopfauswahlsignal oder ein damit zusammenhängendes Signal ansprechende Einrichtungen (17, 25) zur Auswahl der Ausgangssignale der Verzögerungseinrichtungen aufweist.

7. Apparat zur Aufzeichnung und Wiedergabe von Videosignalen nach Anspruch 1, bei dem die Einrichtung zur sequentiellen Verzögerung der aufzuzeichnenden oder wiederzugebenden Helligkeitssignale oder der aufzuzeichnenden oder wiederzugebenden Chrominanzsignale Einrichtungen (3, 9, 11) zur Anlegung der Helligkeitssignale oder der Chrominanzsignale an variable Verzögerungseinrichtungen (14, 15, 16) und (22, 23, 24) und eine auf ein Kopfauswahlsignal oder ein damit zusammenhängendes Signal ansprechende Einrichtung zur Steuerung der Verzögerungszeit der variablen Verzögerungseinrichtungen aufweist.

8. Apparat zur Aufzeichnung und Wiedergabe von Videosignalen nach Anspruch 1, bei dem mit der Wiederholung der Verzögerungen der Helligkeitssignale oder der Chrominanzsignale in Gleichlauf befindliche Pilotsignale aufgezeichnet werden, und in der normalen Wiedergabebetriebsart die Wiederholungszeitfolge der Verzögerungen der wiedergegebenen Helligkeitssignale oder der wiedergegebenen Chrominanzsignale durch die Pilotsignale derart gesteuert ist, daß die gesamte

**0 024 869**

Verzögerungszeit des Helligkeitssignals oder des Chrominanzsignals in dem Aufzeichnungs- und Wiedergabevorgang in der normalen Wiedergabebetriebsart in jeder Periode konstant ist.

9. Apparat zur Aufzeichnung und Wiedergabe von Videosignalen nach Anspruch 8, bei dem die wiedergegebenen Helligkeitssignale und die wiedergegebenen Chrominanzsignale in Übereinstimmung mit den Verzögerungen der Helligkeitssignale und der Chrominanzsignale in dem Aufzeichnungsbetrieb derart verzögert werden, daß ein Zeitunterschied zwischen den gesamten Verzögerungszeiten des Helligkeitssignals und des Chrominanzsignals in dem Aufzeichnungs- und Wiedergabevorgang in der normalen Wiedergabebetriebsart gleich Null gemacht wird.

10. Apparat zur Aufzeichnung und Wiedergabe von Videosignalen nach Anspruch 3, bei dem das durch Erfassung der Unstetigkeitspunkte in den wiedergegebenen Horizontalsynchronsignalen in der speziellen Wiedergabebetriebsart erzeugte Steuersignal zur Auswahl der Verzögerungszeit der wiedergegebenen Helligkeitssignale in dem Aufzeichnungsvorgang zusammen mit Pilotsignalen zur Anzeige der Verzögerungen der Chrominanzsignale aufgezeichnet wird, und in der speziellen Wiedergabebetriebsart das Steuersignal durch ein erstes Signal oder das erste Signal und eines oder beide aus einem zweiten Signal und einem dritten Signal erzeugt wird, wobei das erste Signal durch das Pilotsignal und ein Signal zur Anzeige der Verzögerungen des Chrominanzsignals in der Wiedergabebetriebsart erzeugt wird, das zweite Signal durch Erfassung einer Änderung in einer Hüllkurve des wiedergegebenen Signals erzeugt wird und das dritte Signal durch Erfassung der Unstetigkeitspunkte der Horizontalsynchronsignale in den wiedergebenen Helligkeitssignalen erzeugt wird.

11. Apparat zur Aufzeichnung und Wiedergabe von Videosignalen nach Anspruch 1, bei dem auf jeder Spur die Signale eines Teilbildes durch die zwei unter dem gegenseitigen Winkel von 180° zueinander angeordneten Köpfe aufgezeichnet werden, und die aufzuzeichnenden Chrominanzsignale in jeder Spur sequentiell um $[(\alpha_H+1/2)-2k]$ Zeilen verzögert werden, wobei $\alpha_H \neq (2n+1)/2$ und n eine ganze Zahl ist.

12. Apparat zur Aufzeichnung und Wiedergabe von Videosignalen nach Anspruch 1, bei dem auf jeder Spur die Signale eines Teilbildes durch die zwei unter dem gegenseitigen Winkel von 180° zueinander angeordneten Köpfe aufgezeichnet werden, und die aufzuzeichnenden Chrominanzsignale in jeder zweiten Spur sequentiell um $[(2\alpha_H+1)-2k]$ Zeilen verzögert werden, wobei $\alpha_H \neq (2n+1)/2$.

13. Apparat zur Aufzeichnung und Wiedergabe von Videosignalen nach Anspruch 1, bei dem auf jeder Spur die Signale eines Teilbildes durch die zwei Köpfe aufgezeichnet werden, deren einer von der 180° Linie um einen $[(\alpha_H+1/2)-2i]$ H (wobei i eine ganze Zahl ist) entsprechenden Winkel versetzt ist, und die aufzuzeichnenden Chrominanzsignale in jeder zweiten Spur um $[(2\alpha_H+1)-2k]$ Zeilen verzögert werden, wobei $\alpha_H \neq n/2$.

14. Apparat zur Aufzeichnung und Wiedergabe von Videosignalen nach Anspruch 3, bei dem auf jeder Spur die Signale eines Teilbildes aufgezeichnet werden, und in der speziellen Wiedergabebetriebsart die Unstetigkeitspunkte der wiedergegebenen Horizontalsynchronsignale zur Erzeugung des Steuersignals erfaßt werden, und die Verzögerungszeiten der wiedergegebenen Helligkeitssignale sequentiell derart umgeschaltet werden, daß in der Schnellvorlaufwiedergabebetriebsart die wiedergegebenen Helligkeitssignale vor dem Unstetigkeitspunkt bei jeder Erfassung des Unstetigkeitspunktes um $(2\alpha_H-k)$ Zeilen verzögert werden und in der Zeitlupe-, Stehbild- oder Rückwärtswiedergabebetriebsart die wiedergegebenen Helligkeitssignale vor dem Unstetigkeitspunkt um $(2\alpha_H-k)$ Zeilen vorgerückt werden, wobei $\alpha_H \neq n/2$.

15. Apparat zur Aufzeichnung und Wiedergabe von Videosignalen nach Anspruch 4, bei dem auf jeder Spur die Signale eines Teilbildes aufgezeichnet werden und die aufzuzeichnenden Helligkeitssignale in jeder zweiten Spur sequentiell um $[(2\alpha_H+1)-k]$ Zeilen verzögert werden, wobei $\alpha_H \neq n/2$.

16. Apparat zur Aufzeichnung und Wiedergabe von Videosignalen nach Anspruch 5, bei dem auf jeder Spur die Signale eines Teilbildes durch die zwei unter dem gegenseitigen Winkel von 180° zueinander angeordneten Köpfe aufgezeichnet werden, und die aufzuzeichnenden Helligkeitssignale in jeder Spur sequentiell um $[(\alpha_H+1/2)-k]$ Zeilen verzögert werden, wobei $\alpha_H \neq (2n+1)/2$.

17. Apparat zur Aufzeichnung und Wiedergabe von Videosignalen nach Anspruch 5, bei dem in jeder Spur die Signale eines Teilbildes durch die beiden Köpfe aufgezeichnet werden, deren einer gegen die 180° Linie um einen $[(\alpha_H+1/2)-2i]$ H (wobei i eine ganze Zahl ist) entsprechenden Winkel versetzt ist, und die aufzuzeichnenden Helligkeitssignale in jeder zweiten Spur um $(2\alpha_H-k)$ Zeilen verzögert werden, wobei $\alpha_H \neq n/2$.

18. Apparat zur Aufzeichnung und Wiedergabe von Videosignalen nach Anspruch 11, bei dem ein Zeitunterschied $\alpha_H$ zwischen den Horizontalsynchronsignalen auf nebeneinander liegenden Spuren gleich n (wobei n eine ganze Zahl ist) ist und die aufzuzeichnenden Trägerchrominanzsignale in jeder Spur um 0,5 H oder einen um 2 kH längeren Wert verzögert werden.

19. Apparat zur Aufzeichnung und Wiedergabe von Videosignalen nach Anspruch 12, bei dem ein Zeitunterschied $\alpha_H$ zwischen den Horizontalsynchronsignalen auf nebeneinander liegenden Spuren gleich n (wobei n eine ganze Zahl ist) ist und die aufzuzeichnenden Chrominanzsignale in jeder Spur um 1,0 H oder einen um 2 kH längeren Wert verzögert werden.

20. Apparat zur Aufzeichnung und Wiedergabe von Videosignalen nach Anspruch 16, bei dem ein Zeitunterschied $\alpha_H$ zwischen den Horizontalsynchronsignalen auf nebeneinander liegenden Spuren gleich n (wobei n eine ganze Zahl ist) ist und die aufzuzeichnenden Helligkeitssignale in jeder Spur um 0,5 H oder einen um 2 kH längeren Wert verzögert werden.

31

**0 024 869**

**Revendications**

1. Appareil d'enregistrement et de reproduction de signal vidéo, dans lequel un signal de télévision en couleur (VTR) du système PAL ou SECAM est enregistré et reproduit séquentiellement sur et à partir de pistes obliques (par exemple I-A, II-A; I-B, II-B) sur un support d'enregistrement par deux têtes (A, B) formant un angle azimutal entre elles, ce signal de couleur (VTR) comprenant un signal de chrominance (R, B) et un signal de luminance accompagné séparément d'un signal de synchronisation horizontale, le signal de couleur (VTR) étant enregistré de telle manière que les signaux de synchronisation horizontale sur des pistes voisines (I-A, I-B) sur le support d'enregistrement ne soient pas disposés côte à côte lorsque les signaux de luminance à enregistrer ne sont pas, contrairement aux signaux de chrominance, retardés d'une différence de temps prédéterminée, mais sont enregistrés en une séquence temporelle à laquelle les signaux de luminance sont appliqués, caractérisé en ce qu'afin d'obtenir la continuité des signaux de synchronisation horizontale et des signaux de chrominance pendant un mode de reproduction spécial, les signaux de chrominance à enregistrer le long de chaque piste successive sont retardés de périodes de retardement respectives choisies, en une séquence rotationnelle répétitive, dans un groupe de périodes de retardement prédéterminées, de telle manière que les signaux de chrominance sur une piste sur deux au moins soient disposés côte à côte, et les signaux de chrominance reproduits, lus sur chaque piste successive, sont retardés de périodes de retardement respectives choisies dans le groupe de périodes de retardement prédéterminées, dans la séquence rotationnelle répétitive inverse de celle de l'opération d'enregistrement.

2. Appareil d'enregistrement et de reproduction de signal vidéo selon la revendication 1, dans lequel les signaux de chrominance à enregistrer sont retardés séquentiellement, à l'intervalle de temps prédéterminé, de la différence de temps constante ou différente de celle-ci de 2 kH, de telle manière que les signaux de chrominance sur les pistes voisines sur les lieux enregistrés soient disposés côte à côte, et les signaux de chrominance reproduits sont retardés séquentiellement, dans l'ordre inverse de celui de l'opération d'enregistrement, à l'intervalle de temps prédéterminé, de la différence de temps constante ou différente de celle-ci de 2 kH pour produire un signal de chrominance de sortie.

3. Appareil d'enregistrement et de reproduction de signal vidéo selon la revendication 1, dans lequel les signaux de luminance contenus dans le signal vidéo d'entrée sont enregistrés sans introduire une différence de temps à un intervalle de temps prédéterminé, et lorsqu'ils sont reproduits à la même vitesse de la bande que dans l'opération d'enregistrement (mode de reproduction normal), ils sont reproduits sans introduire une différence de temps à la séquence de temps prédéterminée, tandis que dans un mode de reproduction spécial tel que l'avance rapide, le ralenti, l'image immobile ou la reproduction en marche arrière, les points de discontinuité dans les signaux de synchronisation horizontale reproduits sont détectés pour produire des signaux de commande, ces signaux de commande étant utilisés pour commuter séquentiellement le temps de retardement des signaux de luminance reproduits, de telle manière que la différence entre les temps de retardement totaux du signal de chrominance et du signal de luminance dans les opérations d'enregistrement et de reproduction dans le mode de reproduction normal et dans le mode de reproduction spécial soit toujours nulle ou égale à un multiple entier de H, avec $t_H + \alpha_H \neq h/2$, $t_H$ étant le nombre de lignes dans chaque piste, $\alpha_H$ étant la quantité de déviation entre les signaux de synchronisation horizontale voisins dans le prodil enregistré originel lorsque les deux têtes sont espacées angulairement de 180° l'une par rapport à l'autre ($\alpha_H > 0$ lorsque le sens de rotation des têtes et le sens d'avance de la bande sont les mêmes et $\alpha_H < 0$ lorsqu'ils sont opposés l'un à l'autre) et $h$ étant un nombre entier.

4. Appareil d'enregistrement et de reproduction de signal vidéo selon la revendication 1, dans lequel les signaux de luminance contenus dans le signal vidéo d'entrée sont retardés séquentiellement, à l'intervalle de temps prédéterminé, de la différence de temps constante ou différente de celle-ci de kH et sont enregistrés de telle manière que les signaux de synchronisation horizontale sur une piste sur deux au moins sur les lieux enregistrés soient disposés côte à côte, et les signaux de luminance reproduits sont retardés séquentiellement, dans l'ordre inverse de celui de l'opération d'enregistrement, à l'intervalle de temps prédéterminé, de la différence de temps constante ou différente de celle-ci de kH, pour produire un signal de luminance de sortie, de telle manière qu'une différence de temps entre les temps de retardement totaux du signal de chrominance et du signal de luminance dans les opérations d'enregistrement et de reproduction dans le mode de reproduction normal et le mode de reproduction spécial, soit toujours nulle ou égale à un multiple entier de H, avec $t_H + \alpha_H \neq h/2$.

5. Appareil d'enregistrement et de reproduction de signal vidéo selon la revendication 1, dans lequel les signaux de luminance contenus dans le signal vidéo d'entrée sont retardés séquentiellement, à l'intervalle de temps prédéterminé, de la différence de temps constante ou différente de celle-ci de kH et enregistrés de telle manière que les signaux de synchronisation horizontale sur les pistes voisines sur les lieux enregistrés soient disposés côte à côte, et les signaux de luminance reproduits sont retardés séquentiellement, dans l'ordre inverse de celui de l'opération d'enregistrement, à l'intervalle de temps prédéterminé, de la différence de temps constante ou différente de celle-ci de kH pour produire un signal de luminance de sortie, de telle manière qu'une différence de temps entre les temps de retardement totaux du signal de chrominance et des signaux de luminance dans les opérations d'enregistrement et de

32

# 0 024 869

reproduction dans le mode de reproduction normal et le mode de reproduction spécial soit toujours nulle ou égale à un multiple entier de H, avec $t_H + \alpha_H \neq h$.

6. Appareil d'enregistrement et de reproduction de signal vidéo selon la revendication 1, dans lequel des moyens pour retarder séquentiellement les signaux de luminance à enregistrer ou à reproduire, à l'intervalle de temps prédéterminé, de la différence de temps constante ou plus longue que celle-ci de 2 kH, ou des moyens pour retarder séquentiellement les signaux de chrominance à enregistrer ou à reproduire, à l'intervalle de temps prédéterminé, de la différence de temps constante ou plus longue que celle-ci de 2 kH comprennent des moyens (14), (15), (16) et (22), (23), (24) pour retarder le signal de luminance ou les signaux de chrominance des temps prédéterminés (y compris le temps zéro) et des moyens (17), (25) qui répondent à un signal de sélection de tête ou à un signal apparenté en sélectionnant les sorties desdits moyens à retard.

7. Appareil d'enregistrement et de reproduction de signal vidéo selon la revendication 1, dans lequel les moyens pour retarder séquentiellement les signaux de luminance à enregistrer ou à reproduire ou les signaux de chrominance à enregistrer ou à reproduire comprennent des moyens (3), (9), (11) pour appliquer les signaux de luminance ou les signaux de chrominance à des moyens à retard variable (14), (15), (16) et (22), (23), (24), et des moyens qui répondent à un signal de sélection de tête ou à un signal apparenté en commandant le temps de retardement des moyens à retard variable.

8. Appareil d'enregistrement et de reproduction de signal vidéo selon la revendication 1, dans lequel des signaux pilotés, qui sont en synchronisme avec la répétition des retards des signaux de luminance ou des signaux de chrominance, sont entregistrés et, dans le mode de reproduction normal, la cadence de répétition des retards des signaux de luminance reproduits ou des signaux de chrominance reproduits est commandée par ces signaux pilotes, de telle manière que le temps de retardement total du signal de luminance ou du signal de chrominance dans l'opération d'enregistrement et de reproduction dans le mode de reproduction normal soit rendu constant dans chaque période.

9. Appareil d'enregistrement et de reproduction de signal vidéo selon la revendication 8, dans lequel les signaux de luminance reproduits et les signaux de chrominance reproduits sont retardés en fonction des retards des signaux de luminance et des signaux de chrominance dans l'opération d'enregistrement, de telle manière qu'une différence de temps entre les temps de retardement totaux du signal de luminance et du signal de chrominance, dans les opérations d'enregistrement et de reproduction dans le mode de reproduction normal, soit rendue nulle.

10. Appareil d'enregistrement et de reproduction de signal vidéo selon la revendication 3, dans lequel le signal de commande produit par la détection des points de discontinuité dans le signaux de synchronisation horizontale reproduits, dans le mode de reproduction spécial, pour sélectionner le temps de retardement des signaux de luminance reproduite, est enregistré, dans l'opération d'enregistrement, avec des signaux pilotes destinés à indiquer les retards des signaux de chrominance et, dans le mode de reproduction spécial, ce signal de commande est produit par un premier signal ou par le premier signal et par l'un ou l'un et l'autre d'un deuxième signal et d'un troisième signal, ce premier signal étant produit par le signal pilote et par un signal destiné à indiquer les retards des signaux de chrominance dans l'opération de reproduction, le deuxième signal étant produit par la détection d'un changement dans une enveloppe des signaux reproduits, le troisième signal étant produit par la détection des points de discontinuité des signaux de synchronisation horizontale dans les signaux de luminance reproduits.

11. Appareil d'enregistrement et de reproduction de signal vidéo selon la revendication 1, dans lequel une trame de signáux est enregistrée sur chaque piste par les deux têtes espacées angulairement de 180° l'une par rapport à l'autre, et les signaux de chrominance à enregistrer sont retardés séquentiellement, sur chaque piste, de $[(\alpha_H + 1/2) - 2k]$ lignes, avec $\alpha_H \neq (2n+1)/2$ et $n$ = nombre entier.

12. Appareil d'enregistrement et de reproduction de signal vidéo selon la revendication 1, dans lequel une trame de signal est enregistrée sur chaque piste par les deux têtes espacées angulairement de 180° l'une par rapport à l'autre, et les signaux de chrominance à enregistrer sont retardés séquentiellement de $[(2\alpha_H + 1) - 2k]$ lignes une piste sur deux, avec $\alpha_H \neq (2n+1)/2$.

13. Appareil d'enregistrement et de reproduction de signál vidéo selon la revendication 1, dans lequel une trame de signal est enregistrée sur chaque piste par les deux têtes, l'une de ces têtes étant décalée de la ligne 180° d'un angle correspondant à $[(\alpha_H + 1/2) - 2i]$ H ($i$ étant un nombre entier), et les signaux de chrominance à enregistrer sont retardés de $[(2\alpha_H + 1) - 2k]$ lignes une piste sur deux, avec $\alpha_H \neq n/2$.

14. Appareil d'enregistrement et de reproduction de signal vidéo selon la revendication 3, dans lequel une trame de signal est enregistrée sur chaque piste et, dans le mode de reproduction spécial, les points de discontinuité des signaux de synchronisation horizontale reproduits sont détectés pour produire les signaux de commande, et les temps de retardement des signaux de luminance reproduits sont commutés séquentiellement de telle manière que dans le mode de reproduction en avance rapide, les signaux de luminance reproduits, avant le point de discontinuité, soient retardés de $(2\alpha_H - k)$ lignes chaque fois que ce point de discontinuité est détecté et, dans le mode de reproduction au ralenti, en image immobile ou en marche arrière, les signaux de luminance reproduits, avant le point de discontinuité, soient avancés de $(2\alpha_H - k)$ lignes, avec $\alpha_H \neq n/2$.

15. Appareil d'enregistrement et de reproduction de signal vidéo selon la revendication 4, dans lequel une trame de signal est enregistrée sur chaque piste et les signaux de luminance à enregistrer sont retardés séquentiellement de $[(2\alpha_H + 1) - k]$ lignes une piste sur deux, avec $\alpha_H \neq n/2$.

33

**0 024 869**

16. Appareil d'enregistrement et de reproduction de signal vidéo selon la revendication 5, dans lequel une trame de signal est enregistrée sur chaque piste par les deux têtes espacées angulairement de 180° l'une par rapport à l'autre, et les signaux de luminance à enregistrer sont retardés séquentiellement de $[(\alpha_H+1/2)-k]$ lignes sur chaque piste, avec $\alpha_H \neq (2n+1)/2$.

17. Appareil d'enregistrement et de reproduction de signal vidéo selon la revendication 5, dans lequel une trame de signal est enregistrée sur chaque piste par les deux têtes, l'une de ces têtes étant décalée de la ligne 180° d'un angle correspondant à $[(\alpha_H+1/2)-2i]$ H (i étant un nombre entier), et les signaux de luminance à enregistrer sont retardés de $(2\alpha_H-k)$ lignes une piste sur deux, avec $\alpha_H \neq n/2$.

18. Appareil d'enregistrement et de reproduction de signal vidéo, dans lequel une différence de temps $\alpha_H$ entre les signaux de synchronisation horizontale sur des pistes voisines est égale à n (n étant un nombre entier) et les signaux de chrominance à enregistrer sont retardés sur chaque piste de 0,5 H ou d'une durée plus grande que celle-ci de 2 kH.

19. Appareil d'enregistrement et de reproduction de signal vidéo selon la revendication 12, dans lequel une différence de temps $\alpha_H$ entre les signaux de synchronisation horizontale sur des pistes voisines est égale à n (n étant un nombre entier) et les signaux de chrominance à enregistrer sont retardés sur chaque piste de 1,0 H ou d'une durée plus grande que celle-ci de 2 kH.

20. Appareil d'enregistrement et de reproduction de signal vidéo selon la revendication 16, dans lequel une différence de temps $\alpha_H$ entre les signaux de synchronisation horizontale sur les pistes voisines est égale à n (n étant un nombre entier) et les signaux de luminance à enregistrer sont retardés sur chaque piste de 0,5 H ou d'une durée plus grande que celle-ci de 2 kH.

34

FIG. 1

TAPE RUNNING

HEAD ROTATING

$\alpha_H = 1.5$

FIG. 2 (STILL)

TAPE RUNNING ON RECORDING

HEAD ROTATING

0 024 869

# FIG. 3 (FAST FORWARD REPRODUCING)

# FIG. 4 (REVERSE REPRODUCING)

I-A    I-B    II-A    II-B    III-A    III-B    IV-A    IV-B          ← TAPE RUNNING

HEAD ROTATING

0 024 869

Ⓐ    Ⓑ    Ⓒ

FIG. 5

FIG. 6

TAPE RUNNING

I-A  I-B  II-A  II-B  III-A  III-B  IV-A  IV-B  V-A

HEAD ROTATING

Tp

α_H = 0.75

FIG. 7 (STILL)

FIG. 8 (FAST FORWARD REPRODUCING)

TAPE RUNNING

I-A   I-B   II-A   II-B   III-A   III-B   IV-A   IV-B   V-A

FIG. 9 (REVERSE REPRODUCING)

TAPE RUNNING

HEAD ROTATING

FIG. 10 (STILL)

FIG. 11 (FAST·FORWARD REPRODUCING)

FIG. 12 (REVERSE REPRODUCING)

# FIG. 13

TAPE RUNNING

I-A  I-B  II-A  II-B  III-A  III-B  IV-A  IV-B

HEAD ROTATING

Tp

$\alpha_H = 1.0$

0 024 869

F I G. 14 (STLL)

TAPE RUNNING
— ON RECORDING

HEAD ROTATING

13

# FIG. 15 (FAST FORWARD REPRODUCING)

_____ TAPE RUNNING

I-A  I-B  II-A  II-B  III-A  III-B  IV-A  IV-B

HEAD ROTATING

A HEAD REPRODUCTION     B HEAD REPRODUCTION

0 024 869

FIG. 16 (REVERSE REPRODUCING)

# FIG. 17

RECORDING BLOCK

REPRODUCING BLOCK

## FIG. 18

| | 20 | 21 | | | | | | | | RECORDING |
|---|---|---|---|---|---|---|---|---|---|---|

| 30 | SW 17 CONNECTION | $a_1$ | $a_2$ | $a_3$ | $a_4$ | $a_1$ | $a_2$ | $a_3$ | $a_4$ |
|---|---|---|---|---|---|---|---|---|---|
| 31 | RECORDED CHROMINANCE DELAY TIME | 1.5H | 1.0H | 0.5H | 0 | 1.5H | 1.0H | 0.5H | 0 |

| 28 | 29(1) |
|---|---|

| 32 | SW 25 CONNECTION | $b_1$ | $b_2$ | $b_3$ | $b_4$ | $b_1$ | $b_2$ | $b_3$ | $b_4$ |
|---|---|---|---|---|---|---|---|---|---|
| 33 | REPRODUCED CHROMINANCE DELAY TIME | 0.5H | 1.0H | 1.5H | 0 | 0.5H | 1.0H | 1.5H | 0 |
| 34 | RECORDED & REPRODUCED CHROMINANCE TOTAL DELAY TIME | 2.0H | 2.0H | 2.0H | 0 | 2.0H | 2.0H | 2.0H | 0 |

RECORDING / REPRODUCING (1)

| 29(2) |
|---|

| 35 | SW 25 CONNECTION | $b_3$ | $b_4$ | $b_1$ | $b_2$ | $b_3$ | $b_4$ | $b_1$ | $b_2$ |
|---|---|---|---|---|---|---|---|---|---|
| 36 | REPRODUCED CHROMINANCE DELAY TIME | 1.5H | 0 | 0.5H | 1.0H | 1.5H | 0 | 0.5H | 1.0H |
| 37 | RECORDED & REPRODUCED CHROMINANCE TOTAL DELAY TIME | 3.0H | 1.0H | 1.0H | 1.0H | 3.0H | 1.0H | 1.0H | 1.0H |

REPRODUCING(2)

# F I G. 19

TAPE RUNNING

I-A　I-B　II-A　II-B　III-A　III-B　IV-A　IV-B

HEAD ROTATING

CHROMINANCE⟹ DELAY TIME

0　1.5H　1.0H　0.5H　0　1.5H　1.0H　0.5H

0 024 869

# F I G. 20

28 —
29(I) —

| 32 — SW 25 CONNECTION | b₁ | b₂ | b₃ | b₄ | |
|---|---|---|---|---|---|
| 33 — REPRODUCED CHROMINANCE DELAY TIME | 0.5H | 1.0H | 1.5H | 0 | |
| 38 — REPRODUCED TRACK | I-B | II-A | I-B | II-A | STILL |
| 39 — RECORDED CHROMINANCE DELAY TIME | 1.5H | 1.0H | 1.5H | 1.0H | STILL |
| 40 — RECORDED & REPRODUCED CHROMINANCE TOTAL DELAY TIME | 2.0H | 2.0H | 3.0H | 1.0H | STILL |

| | | | | | | | | | FAST FORWARD REPRODUCING |
|---|---|---|---|---|---|---|---|---|---|
| 41 — REPRODUCED TRACK | | | I-A | II-A | III-B | IV-B | | | |
| 42 — RECORDED CHROMINANCE DELAY TIME | | | 0 | 1.0H | 1.5H | 0.5H | | | |
| 43 — RECORDED & REPRODUCED CHROMINANCE TOTAL DELAY TIME | | | 1.0H | 2.0H | 3.0H | 2.0H | | | |

| | | | | | | | | REVERSE REPRODUCING |
|---|---|---|---|---|---|---|---|---|
| 44 — REPRODUCED TRACK | | IV-A | III-A | III-B | II-B | II-A | I-A | |
| 45 — RECORDED CHROMINANCE DELAY TIME | | 1.0H | 0 | 1.5H | 0.5H | 1.0H | 0 | |
| 46 — RECORDED & REPRODUCED CHROMINANCE TOTAL DELAY TIME | | 2.0H | 1.0H | 3.0H | 2.0H | 1.0H | 0 | |

0 0 2 4 8 6 9

F I G. 21

20

F I G. 22

RECORDING

REPRODUCING

51
20
21
52
53
28
29

F I G. 23

# 0 024 869

F I G. 24 (Recording block)

23

**0 024 869**

F I G. 25 (REPRODUCING BLOCK)

24

F I G. 26

**0 024 869**

## FIG. 27

| 109~ | SW 61 CONNECTION | a₁ | a₂ | a₃ | a₄ | a₅ | a₆ | a₇ | a₈ | a₁ | a₂ |
|------|------------------|-----|------|------|------|------|------|-----|------|-----|------|
| 110~ | RECORDED CHROMINANCE DELAY TIME | O | 1.25 H | O.5H | 1.75 H | 1.0H | 0.25 H | 1.5H | 0.75 H | O | 1.25 H |

| 111~ | SW 86 CONNECTION | b₁ | b₂ | b₃ | b₄ | b₅ | b₆ | b₇ | b₈ | b₁ | b₂ |
|------|------------------|------|------|------|-----|------|------|------|------|------|------|
| 112~ | REPRODUCED CHROMINANCE DELAY TIME | 1.75 H | 0.5H | 1.25 H | O | 0.75 H | 1.5H | 0.25 H | 1.0H | 1.75 H | 0.5H |
| 113~ | RECORDED & REPRODUCED CHROMINANCE TOTAL DELAY TIME | 1.75 H | 1.75 H | 1.75 H | 1.75 H | 1.75 H | 1.75 H | 1.75 H | 1.75 H | 1.75 H | 1.75 H |
| 114~ | REPRODUCED LUMINANCE DELAY TIME | 0.75 H | | | | | | | | | |

NORMAL REPRODUCING

26

# FIG. 28

TAPE RUNNING

CHROMINANCE
DELAY TIME

0   1.25H  0.5H  1.75H  1.0H  0.25H  1.5H  0.75H   0

# FIG. 29

| SW 86 CONNECTION | b1 | b2 | b3 | b4 | b5 | b6 | b7 | b8 |
|---|---|---|---|---|---|---|---|---|
| REPRODUCED CHROMINANCE DELAY TIME | 1.75 H | 0.5 H | 1.25 H | 0 | 0.75 H | 1.5 H | 0.25 H | 1.0 H |

| REPRODUCED TRACK | II-A | I-B | II-A | I-B | II-A | I-B | II-A | I-B |
|---|---|---|---|---|---|---|---|---|
| RECORDED CHROMINANCE DELAY TIME | 0.5 H | 1.25 H | 0.5 H | 1.25 H | 0.5 H | 1.25 H | 0.5 H | 1.25 H |
| RECORDED & REPRODUCED CHROMINANCE TOTAL DELAY TIME | 2.25 H | 1.75 H | 1.75 H | 1.25 H | 1.25 H | 2.75 H | 0.75 H | 2.25 H |
| REPRODUCED LUMINANCE DELAY TIME | 0.25 H | 0.75 H | | 0.25 H | | 0.75 H | | 0.25 H |

STILL

FIG. 30

| SW 86 CONNECTION | $b_1$ | $b_2$ | $b_3$ | $b_4$ | $b_5$ | $b_6$ | $b_7$ | $b_8$ |
|---|---|---|---|---|---|---|---|---|
| REPRODUCED CHROMINANCE DELAY TIME | 1.75H | 0.5H | 1.25H | 0 | 0.75H | 1.5H | 0.25H | 1.0H |

| REPRODUCED TRACK | I-A | II-A | III-B | IV-B | V-A | | | | | | | | | | | |
|---|---|---|---|---|---|---|---|---|---|---|---|---|---|---|---|---|
| RECORDED CHROMINANCE DELAY TIME | 0 | 0.5H | 0.25H | 0.75H | 0 | 0.5H | 0.25H | 0.75H | 0 | 0.5H | 0.25H | 0.75H | 0 | 0.5H | 0.25H | 0.75H |
| RECORDED & REPRODUCED CHROMINANCE TOTAL DELAY TIME | 1.75H | 2.25H | 0.75H | 1.25H | 1.25H | 1.75H | 0.25H | 0.75H | 0.75H | 1.25H | 1.75H | 2.25H | 0.25H | 0.75H | 1.25H | 1.75H |
| REPRODUCED LUMINANCE DELAY TIME | 0.75H | 0.25H | 0.75H | 0.25H | 0.75H | 0.25H | 0.75H | 0.25H | 0.75H | 0.25H | 0.75H | 0.25H | 0.75H | 0.25H | 0.75H | 0.75H |

FAST FORWARD PRODUCING

FIG. 31

| 111 | SW 86 CONNECTION | b₁ | b₂ | b₃ | b₄ | b₅ | b₆ | b₇ | b₈ |
|---|---|---|---|---|---|---|---|---|---|
| 112 | REPRODUCED CHROMINANCE DELAY TIME | 1.75H | 0.5H | 1.25H | 0 | 0.75H | 1.5H | 0.25H | 1.0H |

REVERSE REPRODUCING

| 124 | REPRODUCED TRACK | IV-A | III-A | III-B | II-B | II-A | I-A | I-B | | | | | | | | |
|---|---|---|---|---|---|---|---|---|---|---|---|---|---|---|---|---|
| 125 | RECORDED CHROMINANCE DELAY TIME | 1.5H | 1.0H | 0.25H | 1.75H | 0.5H | 0 | 1.25H | 0.75H | 1.5H | 1.0H | 0.25H | 1.75H | 0.5H | 0 | 1.25H | 0.75H |
| 126 | RECORDED & REPRODUCED CHROMINANCE TOTAL DELAY TIME | 3.25H | 2.75H | 0.75H | 2.25H | 1.75H | 1.25H | 1.25H | 0.75H | 2.25H | 1.75H | 1.75H | 3.25H | 0.75H | 0.25H | 2.25H | 1.75H |
| 127 | REPRODUCED LUMINANCE DELAY TIME | 0.25H | 0.75H | 0.25H | 0.75H | 0.25H | 0.75H | 0.25H | 0.75H | 0.25H | 0.75H | 0.25H | 0.75H | | | | |

Signals: 92, 93, 94, 115-3, 104-3, 106-3, 96-3, 108-3

0 024 869

FIG. 32

HEAD DRUM

B HEAD

θ

HEAD ROTATING

VIDEO TAPE

180°

A HEAD

TAPE RUNNING

FIG. 34  RECORDING BLOCK

31

# F I G. 33

0 024 869

32

**0 024 869**

FIG. 35 (REPRODUCING BLOCK)

FIG. 36

# FIG. 37

**RECORDING**

| SW 131 CONNECTION | $a_1$ | $a_2$ | $a_3$ | $a_4$ | $a_1$ |
|---|---|---|---|---|---|
| RECORDED CHROMINANCE DELAY TIME | 0 | 0.5H | 1.0H | 1.5H | 0 |

**NORMAL REPRODUCING**

| SW 136 CONNECTION | $b_1$ | $b_2$ | $b_3$ | $b_4$ | $b_1$ |
|---|---|---|---|---|---|
| REPRODUCED CHROMINANCE DELAY TIME | 1.5H | 1.0H | 0.5H | 0 | 1.5H |
| RECORDED & REPRODUCED CHROMINANCE TOTAL DELAY TIME | 1.5H | 1.5H | 1.5H | 1.5H | 1.5H |
| REPRODUCED LUMINANCE DELAY TIME | 0.5H | | | | |

F I G. 38

FIG. 39

| 139 ~ SW 136 CONNECTION | $b_1$ | $b_2$ | $b_3$ | $b_4$ |
|---|---|---|---|---|
| 140 ~ REPRODUCED CHROMINANCE DELAY TIME | 1.5H | 1.0H | 0.5H | 0 |

| 143 ~ REPRODUCED TRACK | II-A | I-B | II-A | I-B | II-A | I-B | II-A | I-B |
|---|---|---|---|---|---|---|---|---|
| 144 ~ RECORDED CHROMINANCE DELAY TIME | 0.5H | 0 | 0.5H | 0 | 0.5H | 0 | 0.5H | 0 |
| 145 ~ RECORDED & REPRODUCED CHROMINANCE TOTAL DELAY TIME | 2.0H | 1.5H | 1.5H | 1.0H | 1.0H | 0.5H | 0.5H | 0 |
| 146 ~ REPRODUCED LUMINANCE DELAY TIME | 0 | 0.5H | | 0 | | 0.5H | | 0 |

STILL

# F I G. 40

93

94

| 139 SW 136 CONNECTION | b₁ | b₂ | b₃ | b₄ |
|---|---|---|---|---|
| 140 REPRODUCED CHROMINANCE DELAY TIME | 1.5H | 1.0H | 0.5H | 0 |

115-2

104-2

106-2

96-2

108-2

| 147 REPRODUCED TRACK | I-A | II-A | III-B | IV-B | V-A | | | | | | | | | | | |
|---|---|---|---|---|---|---|---|---|---|---|---|---|---|---|---|---|
| 148 RECORDED CHROMINANCE DELAY TIME | 0 | 0.5H | 1.0H | 1.5H | 0 | 0.5H | 1.0H | 1.5H | 0 | 0.5H | 1.0H | 1.5H | 0 | 0.5H | 1.0H | 1.5H |
| 149 RECODED & REPRODUCED CHROMINANCE TOTAL DELAY TIME | 1.5H | 2.0H | 2.5H | 3.0H | 1.0H | 1.5H | 2.0H | 2.5H | 0.5H | 1.0H | 1.5H | 2.0H | 0 | 0.5H | 1.0H | 1.5H |
| 150 REPRODUCED LUMINANCE DELAY TIME | 0.5H | 0 | 0.5H | 0 | 0.5H | 0 | 0.5H | 0 | 0.5H | 0 | 0.5H | 0 | 0.5H | | | |

FAST FOWARD REPRODUCING

0 024 869

FIG. 41

| SW 136 CONNECTION | b₁ | b₂ | b₃ | b₄ |
|---|---|---|---|---|
| REPRODUCED CHROMINANCE DELAY TIME | 1.5H | 1.0H | 0.5H | 0 |

| REPRODUCED TRACK | IV-A | III-A | III-B | II-B | II-A | I-A | I-B | | | | | |
|---|---|---|---|---|---|---|---|---|---|---|---|---|
| RECORDED CHROMINANCE DELAY TIME | 1.5H | 1.0H | 0.5H | 0.5H | 0 | 1.5H | 1.5H | 1.0H | 0.5H | 0.5H | 0 | 1.5H |
| RECORDED & REPRODUCED CHROMINANCE TOTAL DELAY TIME | 3.0H | 2.5H | 2.0H | 1.5H | 1.0H | 2.5H | 2.0H | 1.5H | 1.0H | 0.5H | 0 | 1.5H |
| REPRODUCED LUMINANCE DELAY TIME | 0 | 0.5H | 0 | 0.5H | 0 | 0.5H | 0 | 0.5H | 0 | 0.5H | 0 | 0.5H |

REVERSE REPRODUCING

0 024 869

# F I G. 42 (RECORDING BLOCK)

**F I G. 43** (Reproducing block)

F I G. 44

# FIG. 45

**RECORDING**

| | SW 61 CONNECTION | a₁ | a₂ | a₃ | a₄ | a₅ | a₆ | a₇ | a₈ | a₁ | a₂ |
|---|---|---|---|---|---|---|---|---|---|---|---|
| 109 | SW 61 CONNECTION | $a_1$ | $a_2$ | $a_3$ | $a_4$ | $a_5$ | $a_6$ | $a_7$ | $a_8$ | $a_1$ | $a_2$ |
| 110 | RECORDED CHROMINANCE DELAY TIME | 0 | 1.25 H | 0.5 H | 1.75 H | 1.0 H | 0.25 H | 1.5 H | 0.75 H | 0 | 1.25 H |
| 159 | RECORDED LUMINANCE DELAY TIME | 0 | | 0.5H | | 0 | | 0.5H | | 0 | |

**NORMAL REPRODUCING**

| | SW 86 CONNECTION | $b_1$ | $b_2$ | $b_3$ | $b_4$ | $b_5$ | $b_6$ | $b_7$ | $b_8$ | $b_1$ | $b_2$ |
|---|---|---|---|---|---|---|---|---|---|---|---|
| 111 | SW 86 CONNECTION | $b_1$ | $b_2$ | $b_3$ | $b_4$ | $b_5$ | $b_6$ | $b_7$ | $b_8$ | $b_1$ | $b_2$ |
| 112 | REPRODUCED CHROMINANCE DELAY TIME | 1.75 H | 0.5 H | 1.25 H | 0 | 0.75 H | 1.5 H | 0.25 H | 1.0 H | 1.75 H | 0.5 H |
| 113 | RECORDED & REPRODUCED CHROMINANCE TOTAL DELAY TIME | 1.75 H | 1.75 H | 1.75 H | 1.75 H | 1.75 H | 1.75 H | 1.75 H | 1.75 H | 1.75 H | 1.75 H |
| 160 | REPRODUCE LUMINANCE DELAY TIME | 1.75 H | | 1.25 H | | 1.75 H | | 1.25 H | | 1.75 H | |
| 161 | RECORDED & REPRODUCED LUMINANCE TOTAL DELAY TIME | 1.75 H | | 1.75 H | | 1.75 H | | 1.75 H | | 1.75 H | |

F I G. 46

TAPE RUNNING

# FIG. 47

| 111 | SW 86 CONNECTION | b₁ | b₂ | b₃ | b₄ | b₅ | b₆ | b₇ | b₈ |
|---|---|---|---|---|---|---|---|---|---|
| 112 | REPRODUCED CHROMINANCE DELAY TIME | 1.75H | 0.5H | 1.25H | 0 | 0.75H | 1.5H | 0.25H | 1.0H |
| 160 | REPRODUCED LUMINANCE DELAY TIME | 1.75H | | 1.25H | | 1.75H | | 1.25H | |

| 116 | REPRODUCED TRACK | II-A | I-B | II-A | I-B | II-A | I-B | II-A | I-B |
|---|---|---|---|---|---|---|---|---|---|
| 117 | RECORDED CHROMINANCE DELAY TIME | 0.5H | 1.25H | 0.5H | 1.25H | 0.5H | 1.25H | 0.5H | 1.25H |
| 118 | RECORDED & REPRODUCED CHROMINANCE TOTAL DELAY TIME | 2.25H | 1.75H | 1.75H | 1.25H | 1.25H | 2.75H | 0.75H | 2.25H |
| 162 | RECORDED LUMINANCE DELAY TIME | 0.5H | 0 | 0.5H | 0 | 0.5H | 0 | 0.5H | 0 |
| 163 | RECORDED & REPRODUCED CHROMINANCE TOTAL DELAY TIME | 2.25H | 1.75H | 1.75H | 1.25H | 2.25H | 1.75H | 1.75H | 1.25H |

STILL

0 024 869

**FAST FOWARD REPRODUCING**

| SW 86 CONNECTION | $b_1$ | | $b_2$ | | $b_3$ | | $b_4$ | | $b_5$ | | $b_6$ | | $b_7$ | | $b_8$ | |
|---|---|---|---|---|---|---|---|---|---|---|---|---|---|---|---|---|
| REPRODUCED TRACK | I-A | II-A | III-B | IV-B | V-A | | | | | | | | | | | |
| RECORDED CHROMINANCE DELAY TIME | 0 | 0.5 H | 0.25 H | 0.75 H | 0 | 0.5 H | 0.25 H | 0.75 H | 0 | 0.5 H | 0.25 H | 0.75 H | 0 | 0.5 H | 0.25 H | 0.75 H |
| RECORDED & REPRODUCED CHROMINANCE TOTAL DELAY TIME | 1.75 H | 2.25 H | 0.75 H | 1.25 H | 1.25 H | 1.75 H | 0.25 H | 0.75 H | 0.75 H | 1.25 H | 1.75 H | 2.25 H | 0.25 H | 0.75 H | 1.25 H | 1.75 H |
| RECORDED LUMINANCE DELAY TIME | 0 | 0.5 H | 0 | 0.5 H | 0 | 0.5 H | 0 | 0.5 H | 0 | 0.5 H | 0 | 0.5 H | 0 | 0.5 H | 0 | 0.5 H |
| RECORDED & REPRODUCED LUMINANCE TOTAL DELAY TIME | 1.75 H | 2.25 H | 1.75 H | 2.25 H | 1.25 H | 1.75 H | 1.25 H | 1.75 H | 1.75 H | 2.25 H | 1.75 H | 2.25 H | 1.25 H | 1.75 H | 1.25 H | 1.75 H |

**REVERSE REPRODUCING**

| SW 86 CONNECTION | $b_1$ | | $b_2$ | | $b_3$ | | $b_4$ | | $b_5$ | | $b_6$ | | $b_7$ | | $b_8$ | |
|---|---|---|---|---|---|---|---|---|---|---|---|---|---|---|---|---|
| REPRODUCED TRACK | IV-A | III-A | III-B | II-B | II-A | I-A | | | | | | | | | | |
| RECORDED CHROMINANCE DELAY TIME | 1.5 H | 1.0 H | 0.25 H | 1.75 H | 0.5 H | 0 | 1.25 H | 0.75 H | 1.5 H | 1.0 H | 0.25 H | 1.75 H | 0.5 H | 0 | 1.25 H | 0.75 H |
| RECORDED & REPRODUCED CHROMINANCE TOTAL DELAY TIME | 3.25 H | 2.75 H | 0.75 H | 2.25 H | 1.75 H | 1.25 H | 1.25 H | 0.75 H | 2.25 H | 1.75 H | 1.75 H | 3.25 H | 0.75 H | 0.25 H | 2.25 H | 1.75 H |
| RECORDED LUMINANCE DELAY TIME | 0.5 H | 0 | 0 | 0.5 H | 0.5 H | 0 | 0 | 0.5 H | 0.5 H | 0 | 0 | 0.5 H | 0.5 H | 0 | 0 | 0.5 H |
| RECORDED & REPRODUCED LUMINANCE TOTAL DELAY TIME | 2.25 H | 1.75 H | 1.75 H | 2.25 H | 1.75 H | 1.25 H | 1.25 H | 1.75 H | 2.25 H | 1.75 H | 1.75 H | 2.25 H | 1.75 H | 1.25 H | 1.25 H | 1.75 H |

# FIG. 49

RECORDING BLOCK

FIG. 50    REPRODUCING BLOCK

F I G. 5I

RECORDING

REPRODUCING

REPRODUCING

I FIELD

71
67
68
69
73
88
93
94

# F I G. 52

RECORDING

| SW 131 CONNECTION | $a_1$ | $a_2$ | $a_3$ | $a_4$ | $a_1$ |
|---|---|---|---|---|---|
| RECORDED CHROMINANCE DELAY TIME | O | 0.5H | 1.0H | 1.5H | O |
| RECORDED LUMINANCE DELAY TIME | O | 0.5H | O | 0.5H | O |

NORMAL REPRODUCING

| SW 136 CONNECTION | $b_1$ | $b_2$ | $b_3$ | $b_4$ | $b_1$ |
|---|---|---|---|---|---|
| REPRODUCED CHROMINANCE DELAY TIME | 1.5H | 1.0H | 0.5H | O | 1.5H |
| RECORDED & REPRODUCED CHROMINANCE TOTAL DELAY TIME | 1.5H | 1.5H | 1.5H | 1.5H | 1.5H |
| REPRODUCED LUMINANCE DELAY TIME | 1.5H | 1.0H | 1.5H | 1.0H | 1.5H |
| RECORDED & REPRODUCED CHROMINANCE TOTAL DELAY TIME | 1.5H | 1.5H | 1.5H | 1.5H | 1.5H |

FIG. 53

# F I G. 54

93

94

| SW 136 CONNECTION | b₁ | | b₂ | | b₃ | | b₄ | |
|---|---|---|---|---|---|---|---|---|
| REPRODUCED CHROMINANCE DELAY TIME | 1.5 H | | 1.0 H | | 0.5 H | | 0 | |
| REPRODUCED LUMINANCE DELAY TIME | 1.5 H | | 1.0 H | | 1.5 H | | 1.0 H | |

| REPRODUCED TRACK | II-A | I-B | II-A | I-B | II-A | I-B | II-A | I-B |
|---|---|---|---|---|---|---|---|---|
| RECORDED-CHROMINANCE DELAY TIME | 0.5 H | 0 | 0.5 H | 0 | 0.5 H | 0 | 0.5 H | 0 |
| RECORDED & REPRODUCED CHROMINANCE TOTAL DELAY TIME | 2.0 H | 1.5 H | 1.5 H | 1.0 H | 1.0 H | 0.5 H | 0.5 H | 0 |
| RECORDED LUMINANCE DELAY TIME | 0.5 H | 0 | 0.5 H | 0 | 0.5 H | 0 | 0.5 H | 0 |
| RECORDED & REPRODUCED LUMINANCE TOTAL DELAY TIME | 2.0 H | 1.5 H | 1.5 H | 1.0 H | 2.0 H | 1.5 H | 1.5 H | 1.0 H |

STILL

0 024 869

# FIG. 55

**FAST FORWARD REPRODUCING**

| | | $b_1$ | | | | $b_2$ | | | | $b_3$ | | | | $b_4$ | | | |
|---|---|---|---|---|---|---|---|---|---|---|---|---|---|---|---|---|---|
| 139 | SW 136 CONNECTION | | | | | | | | | | | | | | | | |
| 147 | REPRODUCED TRACK | I-A | II-A | III-B | IV-B | V-A | | | | | | | | | | | |
| 148 | RECORDED CHROMINANCE DELAY TIME | 0 | 0.5 H | 1.0 H | 1.5 H | 0 | 0.5 H | 1.0 H | 1.5 H | 0 | 0.5 H | 1.0 H | 1.5 H | 0 | 0.5 H | 1.0 H | 1.5 H |
| 149 | RECORDED & REPRODUCED CHROMINANCE TOTAL DELAY TIME | 1.5 H | 2.0 H | 2.5 H | 3.0 H | 1.0 H | 1.5 H | 2.0 H | 2.5 H | 0.5 H | 1.0 H | 1.5 H | 2.0 H | 0 | 0.5 H | 1.0 H | 1.5 H |
| 175 | RECORDED LUMINANCE DELAY TIME | 0 | 0.5 H | 0 | 0.5 H | 0 | 0.5 H | 0 | 0.5 H | 0 | 0.5 H | 0 | 0.5 H | 0 | 0.5 H | 0 | 0.5 H |
| 176 | RECORDED & REPRODUCED LUMINANCE TOTAL DELAY TIME | 1.5 H | 2.0 H | 1.5 H | 2.0 H | 1.0 H | 1.5 H | 1.0 H | 1.5 H | 1.5 H | 2.0 H | 1.5 H | 2.0 H | 1.0 H | 1.5 H | 1.0 H | 1.5 H |

**REVERSE REPRODUCING**

| | | $b_1$ | | | | $b_2$ | | | | $b_3$ | | | | $b_4$ | | | |
|---|---|---|---|---|---|---|---|---|---|---|---|---|---|---|---|---|---|
| 151 | REPRODUCED TRACK | IV-A | III-A | III-B | II-B | II-A | I-A | | | | | | | | | | |
| 152 | RECORDED CHROMINANCE DELAY TIME | 1.5 H | 1.0 H | | 0.5 H | | 0 | | 1.5 H | | 1.0 H | | 0.5 H | | 0 | | 1.5 H |
| 153 | RECORDED & REPRODUCED CHROMINANCE TOTAL DELAY TIME | 3.0 H | 2.5 H | | 2.0 H | 1.5 H | 1.0 H | | 2.5 H | 2.0 H | 1.5 H | | 1.0 H | 0.5 H | 0 | | 1.5 H |
| 177 | RECORDED LUMINANCE DELAY TIME | 0.5 H | 0 | | 0.5 H | | 0 | | 0.5 H | | 0 | | 0.5 H | | 0 | | 0.5 H |
| 178 | RECORDED & REPRODUCED LUMINANCE TOTAL DELAY TIME | 2.0 H | 1.5 H | | 2.0 H | 1.5 H | 1.0 H | | 1.5 H | 2.0 H | 1.5 H | | 2.0 H | 1.5 H | 1.0 H | | 1.5 H |

## FIG. 56 (RECORDING BLOCK)

# 0 024 869

## F I G. 57 (REPRODUCING BLOCK)

FIG. 58

# F I G. 59

| | | | | | |
|---|---|---|---|---|---|
| | 68 ⌐ pulse waveform | | | | |
| | 69 ⌐ pulse waveform | | | | |
| 189 | SW 182 CONNECTION | $a_1$ | $a_2$ | $a_3$ | $a_4$ | $a_1$ |
| 190 | RECORDED CHROMINANCE DELAY TIME | O | 0.5H | 1.0H | 1.5H | O |

RECORDING

| | | | | | |
|---|---|---|---|---|---|
| | 93 ⌐ pulse waveform | | | | |
| | 94 ⌐ pulse waveform | | | | |
| 191 | SW 188 CONNECTION | $b_1$ | $b_2$ | $b_3$ | $b_4$ | $b_1$ |
| 192 | REPRODUCED CHROMINANCE DELAY TIME | 2.0H | 1.5H | 1.0H | 0.5H | 2.0H |
| 193 | RECORDED & REPRODUCED CHROMINANCE DELAY TIME | 2.0H | 2.0H | 2.0H | 2.0H | 2.0H |

NORMAL REPRODUCING

## F I G. 60

# FIG. 61

| | SW 188 CONNECTION | $b_1$ | $b_2$ | $b_3$ | $b_4$ |
|---|---|---|---|---|---|
| 191 | | | | | |
| 192 | REPRODUCED CHROMINANCE DELAY TIME | 2.0H | 1.5H | 1.0H | 0.5H |

| | REPRODUCED TRACK | II-A | I-B | II-A | I-B | II-A | I-B | II-A | I-B |
|---|---|---|---|---|---|---|---|---|---|
| 194 | | | | | | | | | |
| 195 | RECORDED CHROMINANCE DELAY TIME | 0.5H | 0 | 0.5H | 0 | 0.5H | 0 | 0.5H | 0 |
| 196 | RECORDED & REPRODUCED CHROMINANCE TOTAL DELAY TIME | 2.5H | 2.0H | 2.0H | 1.5H | 1.5H | 1.0H | 1.0H | 0.5H |
| 197 | REPRODUCED LUMINANCE DELAY TIME | 0.5H | 0 | 0 | 0.5H | 0.5H | 0 | 0.5H | 0.5H |

STILL

0 024 869

## FIG. 62

| 191 | SW 188 CONNECTION | b₁ | b₂ | b₃ | b₄ |
|---|---|---|---|---|---|
| 192 | REPRODUCED CHROMINANCE DELAY TIME | 2.0 H | 1.5 H | 1.0 H | 0.5 H |

115-2
104-2
106-2
96-2
108-2

| 198 | REPRODUCED TRACK | I-A | II-A | III-B | IV-B | V-A | | | | | | | | | | | |
|---|---|---|---|---|---|---|---|---|---|---|---|---|---|---|---|---|---|
| 199 | RECORDED CHROMINANCE DELAY TIME | 0 | 0.5H | 1.0H | 1.5H | 0 | 0.5H | 1.0H | 1.5H | 0 | 0.5H | 1.0H | 1.5H | 0 | 0.5H | 1.0H | 1.5H |
| 200 | RECORDED & REPRODUCED CHROMINANCE TOTAL DELAY TIME | 2.0H | 2.5H | 3.0H | 3.5H | 1.5H | 2.0H | 2.5H | 3.0H | 1.0H | 1.5H | 2.0H | 2.5H | 0.5H | 1.0H | 1.5H | 2.0H |
| 201 | REPRODUCED LUMINANCE DELAY TIME | 0 | 0.5H | 0 | 0.5H | 0.5H | 0 | 0.5H | 0 | 0 | 0.5H | 0 | 0.5H | 0.5H | 0 | 0.5H | 0 |

FAST FOWARD REPRODUCING

## F I G. 63

| SW 188 CONNECTION | b₁ | b₂ | b₃ | b₄ |
|---|---|---|---|---|
| REPRODUCED CHROMINANCE DELAY TIME | 2.0 H | 1.5 H | 1.0 H | 0.5 H |

115-3
104-3
106-3
96-3
108-3

| REPRODUCED TRACK | IV-A | III-A | III-B | II-B | II-A | I-A | | | | | | |
|---|---|---|---|---|---|---|---|---|---|---|---|---|
| RECORDED CHROMINANCE DELAY TIME | 1.5 H | 1.0 H | 0.5 H | | 0 | | 1.5 H | 1.0 H | 0.5 H | | 0 | 1.5 H |
| RECORDED & REPRODUCED CHROMINANCE TOTAL DELAY TIME | 3.5 H | 3.0 H | 2.5 H | 2.0 H | 1.5 H | 3.0 H | 2.5 H | 2.0 H | 1.5 H | 1.0 H | 0.5 H | 2.0 H |
| REPRODUCED LUMINANCE DELAY TIME | 0.5 H | 0 | 0.5 H | 0 | 0.5 H | 0 | 0.5 H | 0 | 0.5 H | 0 | 0.5 H | 0 |

REVERSE REPRODUCING

# F I G.   64

(RECORDING BLOCK)

FIG. 65 (REPRODUCING BLOCK)

FIG. 66

## F I G. 67

**RECORDING**

Signals: 68, 69

| SW 182 CONNECTION | $a_1$ | $a_2$ | $a_3$ | $a_4$ | $a_1$ |
|---|---|---|---|---|---|
| RECORDED CHROMINANCE DELAY TIME | 0 | 0.5 H | 1.0 H | 1.5 H | 0 |
| RECORDED LUMINANCE DERAY TIME | 0 | 0.5 H | 0 | 0.5 H | 0 |

(189, 190, 207)

**NOMAL REPRODUCING**

Signals: 93, 94

| SW 188 CONNECTION | $b_1$ | $b_2$ | $b_3$ | $b_4$ | $b_1$ |
|---|---|---|---|---|---|
| REPRODUCED CHROMINANCE DELAY TIME | 1.5 H | 1.0 H | 0.5 H | 0 | 1.5 H |
| RECORDED & REPRODUCED CHROMINANCE TOTAL DELAY TIME | 1.5 H | 1.5 H | 1.5 H | 1.5 H | 1.5 H |
| REPRODUCED LUMINANCE DELAY TIME | 0.5 H | 0 | 0.5 H | 0 | 0.5 H |
| RECORDED & REPRODUCED LUMINANCE TOTAL DELAY TIME | 0.5 H | 0.5 H | 0.5 H | 0.5 H | 0.5 H |

(191, 192, 193, 208, 209)

0 024 869

FIG. 68

# FI G. 69

| 93 | 94 | | | |
|---|---|---|---|---|

| | SW 188 CONNECTION | $b_1$ | $b_2$ | $b_3$ | $b_4$ |
|---|---|---|---|---|---|
| 191 | | | | | |
| 192 | REPRODUCED CHROMINANCE DELAY TIME | 1.5 H | 1.0 H | 0.5 H | 0 |
| 208 | REPRODUCED LUMINANCE DELAY TIME | 0.5 H | 0 | 0.5 H | 0 |

| | | $b_1$ | | $b_2$ | | $b_3$ | | $b_4$ | |
|---|---|---|---|---|---|---|---|---|---|
| 210 | REPRODUCED TRACK | II-A | I-B | II-A | I-B | II-A | I-B | II-A | I-B |
| 211 | RECORDED CHROMINANCE DELAY TIME | 0.5 H | 0 | 0.5 H | 0 | 0.5 H | 0 | 0.5 H | 0 |
| 212 | RECORDED & REPRODUCED CHROMINANCE TOTAL DELAY TIME | 2.0 H | 1.5 H | 1.5 H | 1.0 H | 1.0 H | 0.5 H | 0.5 H | 0 |
| 213 | RECORDED LUMINANCE DELAY TIME | 0.5 H | 0 | 0.5 H | 0 | 0.5 H | 0 | 0.5 H | 0 |
| 214 | RECORDED & REPRODUCED LUMINANCE TOTAL DELAY TIME | 1.0 H | 0.5 H | 0.5 H | 0 | 1.0 H | 0.5 H | 0.5 H | 0 |

STILL

# F I G. 70

| SW 188 CONNECTION | b₁ | | | | b₂ | | | | b₃ | | | | b₄ | | | |
|---|---|---|---|---|---|---|---|---|---|---|---|---|---|---|---|---|
| REPRODUCED CHROMINANCE DELAY TIME | 1.5H | | | | 1.0H | | | | 0.5H | | | | 0 | | | |
| REPRODUCED LUMINANCE DELAY TIME | 0.5H | | | | 0 | | | | 0.5H | | | | 0 | | | |

| | | | | | | | | | | | | | | | | |
|---|---|---|---|---|---|---|---|---|---|---|---|---|---|---|---|---|
| REPRODUCED TRACK | I-A | II-A | III-B | IV-B | V-A | | | | | | | | | | | |
| RECORDED CHROMINANCE DELAY TIME | 0 | 0.5H | 1.0H | 1.5H | 0 | 0.5H | 1.0H | 1.5H | 0 | 0.5H | 1.0H | 1.5H | 0 | 0.5H | 1.0H | 1.5H |
| RECORDED & REPRODUCED CHROMINANCE TOTAL DELAY TIME | 1.5H | 2.0H | 1.5H | 3.0H | 1.0H | 1.5H | 2.0H | 2.5H | 0.5H | 1.0H | 1.5H | 2.0H | 0 | 0.5H | 1.0H | 1.5H |
| RECORDED LUMINANCE DELAY TIME | 0 | 0.5H | 0 | 0.5H | 0 | 0.5H | 0 | 0.5H | 0 | 0.5H | 0 | 0.5H | 0 | 0.5H | 0 | 0.5H |
| RECORDED & REPRODUCED LUMINANCE TOTAL DELAY TIME | 0.5H | 1.0H | 0.5H | 1.0H | 0 | 0.5H | 0 | 0.5H | 0.5H | 1.0H | 0.5H | 1.0H | 0 | 0.5H | 0 | 0.5H |

FAST FOWARD REPRODUCING

0 024 869

# FIG. 71

| SW 188 CONNECTION | b₁ | b₂ | b₃ | b₄ |
|---|---|---|---|---|
| REPRODUCED CHROMINANCE DELAY TIME | 1.5H | 1.0H | 0.5H | 0 |
| REPRODUCED LUMINANCE DELAY TIME | 0.5H | 0 | 0.5H | 0 |

| REPRODUCED TRACK | IV-A | III-A | III-B | II-B | II-A | I-A | | | | | | |
|---|---|---|---|---|---|---|---|---|---|---|---|---|
| RECORDED CHROMINANCE DELAY TIME | 1.5H | 1.0H | 0.5H | | 0 | | 1.5H | 1.0H | 0.5H | | 0 | 1.5H |
| RECORDED & REPRODUCED CHROMINANCE TOTAL DELAY TIME | 3.0H | 2.5H | 2.0H | 1.5H | 1.0H | | 2.5H | 2.0H | 1.5H | 1.0H | 0.5H | 0 | 1.5H |
| RECORDED LUMINANCE DELAY TIME | 0.5H | 0 | 0.5H | | 0 | | 0.5H | 0 | 0.5H | | 0 | 0.5H |
| RECORDED & REPRODUCED LUMINANCE TOTAL DELAY TIME | 1.0H | 0.5H | 1.0H | 0.5H | 0 | | 0.5H | 1.0H | 0.5H | 1.0H | 0.5H | 0 | 0.5H |

REVERSE REPRODUCING

69